# EUROPEAN PATENT SPECIFICATION

(11) **EP 2 273 446 B1**
(45) Date of publication and mention of the grant of the patent: **07.06.2023**
(21) Application number: 10182858.0
(22) Date of filing: 28.06.2006
(51) Int. Cl.: G06Q 30/00, G06Q 30/06, G06Q 30/02, G07F 7/02, A47F 10/04, G09F 27/00, A47F 10/02, B62B 3/14, B62B 5/00, G07G 1/00

(54) **MEDIA ENABLED ADVERTISING SHOPPING CART SYSTEM**
EINKAUFSWAGENSYSTEM FÜR MEDIA AKTIVIERTE ANZEIGEN
SYSTÈME DE CHARIOT AVEC AFFICHAGE ACTIVÉ PAR MÉDIA

(30) Priority: 28.06.2005 US 694575 P; 27.07.2005 US 702831 P; 05.08.2005 US 705776 P; 01.09.2005 US 713320 P; 01.12.2005 US 291737; 01.12.2005 US 291353; 01.12.2005 US 291451; 06.03.2006 US 779635 P
(43) Date of publication of application: 12.01.2011
(62) Divisional of application: 06774452.4
(73) Proprietor: Media Cart Holdings, Inc., Plano, TX 75074 (US)
(72) Inventor: Carpenter, Steve, Plano, TX 75074 (US); Brice, David George, Plano, TX 75074 (US); Gibbons, James E. Jr, Frisco, TX 75034 (US); Gross, Ed, Austin, TX 78730 (US); Anderson, Sean, Austin, TX 78749 (US)
(74) Representative: Schmitt-Nilson Schraud Waibel Wohlfrom Patentanwälte Partnerschaft mbB

(56) References cited:
- DE-A1- 19 944 153
- DE-A1- 19 956 615
- US-A1- 2004 103 034

## Description

The present disclosure is directed to a media enhanced shopping cart system, and more particularly, but not by way of limitation, to a system and method for providing information such as advertising to a consumer as a shopping cart is navigated within a store. Known media enhanced shopping cart systems are shown in US 2004/103034 A1, DE 199 56 615 A1 and DE 199 44 153 A1.

In today's media market, measuring efficacy of advertising is difficult. Advertisers are spending billions of dollars on television, radio, and print with little return on investment, and they have little assurance that consumers will actually see advertisements, much less make purchasing decisions impacted by them. Thus, advertisers and stores are constantly searching for new and related advertising venues, and in particular those positioned at, or in close proximity to, the point of purchase location. To wit, the traditional shopping cart is an underutilized advertising medium. The shopping cart is the one venue that continually moves with the consumer as they navigate the store. Thus, the shopping cart provides an advertising venue with opportunity to improve the shopping experience of the consumer.

The present disclosure is aimed to address needs of advertisers, retailers, and consumers. Advertisers wish to 1) display ads at the most effective location and time, at the consumer's point of purchase, 2) specifically measure the effectiveness of advertising campaigns, and 3) improve return on advertisement investment dollars. Retailers wish to 1) increase sales, 2) share in advertising revenue, 3) reduce labor costs, 4) create a consumer friendly environment with less advertisement clutter, 5) enhance their store image and 6) make improvements that are compatible with existing solutions. Consumers wish to 1) have a pleasant and efficient shopping experience, and 2) save money on items that they need or want.

The invention relates to a media enhanced shopping cart system according to the appended claims. Particularly, the media enhanced shopping cart system comprises a shopping cart comprising a frame, a basket, a handle, a base tray, a plurality of wheels, a read component for performing a proximity scan of the shopping cart, a locationing component for determining a location and an orientation of the shopping cart within a store based on the scan. According to one embodiment, it further comprises a display component for displaying at least one advertisement for a product based on the location of the shopping cart within the store, wherein the locationing component is further operable to determine a location of the product within the store relative to the shopping cart based on the scan, and wherein the display component is further operable to display an indication of the location of the advertised product relative to the location of the shopping cart.

In addition, a method comprises performing a proximity scan from a shopping cart, determining a location of the cart within a store based on the scan; displaying at least one product advertisement based on the location of the cart, correlating a location of an advertised product with the location of the cart, and displaying an indication of the location of the advertised product with respect to the location of the shopping cart.

In addition there is provided a media enhanced shopping cart system, comprising: a shopping cart comprising a frame, a basket, a handle, a base tray, a plurality of wheels; a read component for performing a proximity scan of the shopping cart; a locationing component for determining a location of the shopping cart within a store based on the scan; and a display component for displaying at least one advertisement for a product based on the location of the shopping cart within the store; wherein the locationing component is further operable to determine a location of the product within the store relative to the shopping cart based on the scan; and wherein the display component is further operable to display an indication of the location of the advertised product relative to the location of the shopping cart.

In an embodiment, the indication of the location of the advertised product is positioned adjacent the advertisement by the display component.

In an embodiment, the location of the shopping cart and the location of the advertised product are displayed relative to one another on the display component.

In an embodiment, the display component comprises a plurality of advertisements and one of the plurality of advertisements is more prominently displayed than the other advertisements based on the location of the shopping cart within a store.

In an embodiment, the display component comprises a plurality of advertisements and one of the advertisements is more prominently displayed than the other advertisements based on the location of the shopping cart relative to the product being advertised.

In an embodiment, the advertisement that is more prominently displayed changes as the cart moves throughout the store.

In an embodiment, the read component comprises at least one basket RFID reader and one or more RFID antennas.

In an embodiment, the read component scans a plurality of RFID tags attached to one or more objects in a store.

In an embodiment, objects to which the RFID tags are attached comprise at least one of a shelf, a fixture, a kiosk, a pillar, a freezer, a wall, a bin, a counter and a product display in the store.

In an embodiment, the objects to which the RFID tags are attached comprise at least one SKU in the store.

In an embodiment, the Stock Keeping Unit scanned by the read component enables store planogram design and management on an automated basis.

In an embodiment, the objects to which the RFID tags are attached comprise at least one product in the store.

In an embodiment, the product scanned by the read component enables store inventory management on an automated basis.

In an embodiment, the media enhanced shopping cart further comprises an inventory component attached to the shopping cart for determining an inventory contained by the shopping cart, wherein the inventory component is further operable to determine whether the advertised product is within the shopping cart.

In an embodiment, the inventory component is at least one of a RFID basket scanner and a bar code scanner.

In addition, there is provided a method, comprising: performing a proximity scan from a shopping cart; determining a location of the cart within a store based on the scan; displaying at least one product advertisement based on the location of the cart; correlating a location of an advertised product with the location of the cart; and displaying an indication of the location of the advertised product with respect to the location of the shopping cart.

In an embodiment, the indication of the location of the advertised product is displayed adjacent the advertisement on the display.

In an embodiment, the indication of the location of the shopping cart and the location of the advertised product are displayed relative to one another on the display.

In an embodiment, a plurality of advertisements are displayed and one of the plurality of advertisements is more prominently displayed than the other advertisements based on the location of the shopping cart within a store.

In an embodiment, a plurality of advertisements are displayed and one of the advertisements is more prominently displayed than the other advertisements based on the location of the shopping cart relative to the product being advertised.

In an embodiment, the advertisement that is more prominently displayed changes as the cart moves throughout the store.

In an embodiment, the method further comprises inventorying the shopping cart to determine whether the advertised product is within the shopping cart.

In addition, there is provided a media enhanced shopping cart system, comprising: a shopping cart comprising a frame, a basket, a handle, a base tray, and a plurality of wheels, an inventory component for determining an inventory contained by the shopping cart; an identification component for associating a unique identity of the shopping cart; a correlation component of a embedded computing device for correlating the inventory contained by the shopping cart with the unique identity of the shopping cart; and a communication component for conveying to a retailer system the correlation between the inventory and the unique identity of the shopping cart.

In an embodiment, the retailer system comprises a point of sale system, a consumer loyalty system, or a security system.

In an embodiment, the identification component comprises an RFID tag conveying the unique identity of the shopping cart when read.

In an embodiment, the identification component comprises a bar code conveying the unique identity of the shopping cart when scanned.

In an embodiment, the identification component comprises a label visibly conveying the unique identity of the shopping cart.

In an embodiment, the media enhanced shopping cart further comprises a display component for displaying advertising to a consumer, wherein the correlation component anonymously correlates advertising shown during a particular use of the shopping cart to the inventory contained by the shopping cart.

In an embodiment, the media enhanced shopping cart system further comprises a display component for displaying advertising to a consumer, wherein the correlation component correlates advertising shown to a particular consumer to the inventory contained by the shopping cart; wherein the inventory comprises at least one of products scanned by the inventory component and products verified as present in the cart by the inventory component.

In an embodiment, the correlation of the particular consumer to the inventory contained by the shopping cart is via a consumer identifier; wherein the consumer identifier comprises at least one of a loyalty card, a pin code and a telephone number.

In an embodiment, the loyalty program comprises a program sponsored by a merchant and enrolled in by a customer wherein the customer obtains benefits for patronage of the merchant.

In an embodiment, the correlation of the particular consumer to the inventory contained by the shopping cart is used to generate a shopping list for the consumer that is accessible via the shopping cart during a future store visit.

In an embodiment, the media enhanced shopping cart system further comprises a retailer system for receiving the inventory contained by the shopping cart and for processing payment thereof.

In an embodiment, the inventory component comprises at least one of a bar code scanner and an RFID reader comprising one or more RFID antennas.

In addition, there is provided a method, comprising: associating a unique identity with a shopping cart; determining an inventory of a shopping cart by an inventory component affixed to the shopping cart; correlating with a embedded computing device the inventory to the unique identity of the shopping cart; and conveying at least one of the unique identity of the shopping cart, the inventory of the shopping cart, and the correlation of the inventory to the unique identity to a retailer system.

In an embodiment, conveying to a point of sale system the unique identity further comprises conveying the unique identity via a RFID tag.

In an embodiment, conveying to a point of sale system the unique identity further comprises conveying the unique identity via a bar code.

In an embodiment, conveying to a point of sale system the unique identity further comprises conveying the unique identity via a label.

In an embodiment, the method further comprises displaying advertising to a consumer and anonymously correlating the advertising shown during a particular use of the shopping cart to the inventory contained by the shopping cart.

In an embodiment, the method further comprises displaying advertising to a consumer and correlating advertising shown to a particular consumer to the inventory contained by the shopping cart; wherein the inventory comprises at least one of products scanned by the inventory component and products verified as present in the cart by the inventory component.

In an embodiment, the method further comprises scanning a loyalty card, wherein the correlation of the particular consumer to the inventory contained by the shopping cart is via a consumer identifier; wherein the consumer identifier comprises at least one of a loyalty card, a pin code and a telephone number.

In an embodiment, the method further comprises generating a shopping list for the consumer that is accessible via the media enhanced shopping cart during a future store visit, wherein the correlation of the particular consumer to the inventory contained by the shopping cart is used to generate a shopping list for the consumer that is accessible via the shopping cart during a future store visit; wherein the inventory comprises at least one of products scanned by the inventory component and products verified as present in the cart by the inventory component.

In addition, there is provided a method, comprising: associating a unique identity with a shopping cart; determining an inventory contained by a shopping cart by an inventory component affixed to the shopping cart; correlating with a embedded computing device the inventory to the unique identity of the shopping cart; conveying the unique identity of the shopping cart to a retailer system; and conveying the inventory of the shopping cart to the retailer system.

In an embodiment, conveying the unique identity to a retailer system further comprises conveying the unique identity via a RFID tag to an RFID reader, scanning a bar code or manually entering the unique identification number.

In an embodiment, the retailer system comprises a point of sale system, a consumer loyalty system, or a security system.

In an embodiment, determining an inventory comprises scanning a bar-coded product with a bar code scanner or reading a RFID tagged product with an RFID reader upon placement of the product in the shopping cart and storing the identity of the product to convey to the retailer system.

In an embodiment, the method further comprises conveying the correlation of the unique identity to the inventory to the retailer system.

In addition, there is provided a media enhanced shopping cart system, comprising: a shopping cart comprising a frame, a basket, a handle, a base tray, and a plurality of wheels; a embedded computing device comprising a central processing unit, a memory and a network transceiver configured for wireless communication, the embedded computing device being attached to the shopping cart; an inventory component for determining an inventory contained by the shopping cart; a shopping list component for listing one or more products of a consumer shopping list for purchase by a consumer; and a correlation component for correlating data from the inventory component with the shopping list component.

In an embodiment, the media enhanced shopping cart system further comprises: a display component for displaying at least one of the inventory contained by the shopping cart determined by the inventory component and the one or more products for purchase listed by the shopping list component.

In an embodiment, the display component displays that a given product present in the shopping cart is checked off the shopping list based on the correlation of the inventory component with the shopping list component.

In an embodiment, the inventory component comprises at least one basket RFID reader comprising one or more inward RFID antennas for determining when a RFID tagged product is added to the cart or removed from the shopping cart.

In an embodiment, the shopping cart is comprised substantially of plastic such that RFID interference is reduced.

In an embodiment, the shopping cart ***is*** a metal cart retrofitted with the basket RFID reader comprising the RFID antennas

In an embodiment, the shopping list is generated based one or more products selected by the consumer; wherein the one or more products are selected by the consumer by at least one of scanning a bar code on a product, placing a product in the shopping cart, and downloaded by the consumer in a list.

In an embodiment, the one or more products selected by the consumer is associated with the consumer via a consumer identifier; the consumer identifier comprising at least one of a loyalty card, a pin code and a telephone number.

In an embodiment, the loyalty card is read by the inventory component by at least one of scanning a bar code, reading an RFID tag and manual entry.

In an embodiment, the media enhanced shopping cart system further comprises: an advertising component for displaying one or more advertisements in the display component; wherein the correlation component is operable to correlate data from the advertising component with the inventory component, the shopping list component, or both to determine what advertisement is displayed.

In an embodiment, the media enhanced shopping cart system further comprises: an RFID reader for reading an RFID tag attached to an object in a store, wherein the computing device is operable to correlate data from the RFID reader with the shopping list to display an advertisement for a product on the shopping list when the shopping cart is proximate the product; wherein the object comprises at least one of a shelf, a kiosk, a pillar, a fixture, a wall, a counter, a bin, a point of sale system, a SKU and a product.

In an embodiment, the inventory component comprises a bar code scanner for determining when a bar coded product is added to the cart or removed from the shopping cart.

In addition, there is provided a method, comprising: determining an inventory contained by a shopping cart by an inventory component affixed to the shopping cart; displaying on a video display affixed to the shopping cart a shopping list, the shopping list comprising one or more products for purchase; correlating the inventory contained by the shopping cart with the shopping list by a embedded computing device affixed to the cart to determine which products on the list are present in the shopping cart; and conveying the inventory and the shopping list to a retailer system.

In an embodiment, the the inventory component comprises at least one of an RFID basket scanner and a bar code scanner.

In an embodiment, the method further comprises checking a product off the shopping list upon placement of the product in the shopping cart.

In an embodiment, the method further comprises generating the shopping list based one or more products selected by the consumer.

In an embodiment, the method further comprises associating the products selected by the consumer via a consumer identifier, wherein the consumer identifier comprises at least one of a loyalty card, a pin code, and a telephone number.

In an embodiment, the method further comprises inputting the consumer identifier by the inventory component or manual entry.

In an embodiment, the method further comprises: correlating by the computing module one or more advertisements with at least one of the shopping list and the inventory contained by the shopping cart; and displaying one or more advertisements based on the correlation between the one or more advertisements with the shopping list, the inventory contained by the shopping cart, or both.

In an embodiment, the method further comprises: reading by an RFID reader affixed to the shopping cart an RFID tag attached to a shelf, SKU, or product in a store; and correlating by the embedded computing device data from the RFID reader with the shopping list to display an advertisement for a product on the shopping list when the shopping cart is located proximate to the product.

In an embodiment, the method further comprises locating a product on the shopping list based on data from the RFID reader and displaying the product location on the display.

In addition, there is provided a modular recharge corral system for recharging a battery while storing a shopping cart, comprising: one or more corral sections each comprising a floor portion and one or more charge rails extending upward from the floor section, wherein each corral section has a front end, back end, sides, or combinations thereof that are configured to cooperatively mate with a corresponding back end, front end, or side of an adjacent stall to form a cart corral having a plurality of end to end and/or side by side mated sections.

In an embodiment, the corral sections each comprise electrical couples that upon mating with an adjacent section provides electrical coupling between the mated sections.

In an embodiment, the charge rails are positioned to engage a battery charging contact plate positioned on or proximate one or more wheels on the shopping cart.

In an embodiment, the battery charging contact plate is mounted inboard on a rear wheel of the shopping cart.

In an embodiment, the battery charging contact plate is covered by a movable contact plate cover, wherein the contact plate cover is configured to move to an open position to allow the battery charging contact plate to contact the charge rail while the shopping cart is positioned in the corral.

In an embodiment, the contact plate cover is configured to move to a closed position upon removal of the shopping cart from the corral, thereby covering and protecting the battery charging contact plate.

In an embodiment, the charge rails further comprise a groove or slot for receiving the battery charging contact plate when the shopping cart is positioned in the corral.

In an embodiment, the corral further comprises a power supply interface for coupling the charge rail to a power supply.

In an embodiment, the corral sections further comprises one or more guide walls, guides rails, or both.

In an embodiment, a component of charge rail, the battery charging contact plate, or both are spring-loaded to facilitate electrical contact between the two.

In addition, there is provided a method of charging a plurality of media enhanced shopping carts, comprising: providing a conductive charge plate on a cart that is electrically coupled to a battery affixed to the cart, the battery operable to power one or more media enhancements of the cart; providing a primary modular charging unit comprising at least one first conductive charge rail electrically coupled to a power supply and a first floor segment comprising one or more guide grooves for positioning the cart in the modular charging unit; positioning the cart in the guide grooves of the first floor segment such that the conductive charge plate of the cart is in contact with the first conductive charge rail of the primary modular charging unit; forming an electrical connection between the conductive charge plate of the at least one cart and the first conductive charge rail; and conducting current from the power supply through the conductive charge rail of the primary module charging unit and the conductive charge plate of the at least one cart to charge the battery of the cart.

In an embodiment, the method further comprises: providing a secondary modular charging unit comprising at least one second conductive charge rail electrically coupled to the power supply via the first conductive charge rail of the primary modular charging unit, and a second floor segment comprising one or more guide grooves for positioning the cart in the secondary modular charging unit; the conductive charge rail of the secondary modular charging unit operably coupled to the conductive charge rail of the primary modular charging unit and the second floor segment coupled to the first floor segment; positioning a plurality of shopping carts such that the conductive charge plate of each of the plurality of shopping carts is in contact with at least one of the first conductive charge rail of the primary modular charging unit and the second conductive charge rail of the secondary modular charging unit; forming an electrical connection between the conductive charge plate of each of the plurality of shopping carts and at least one of the first conductive charge rail of the primary module charging unit and the second conductive charge rail of the secondary module charging unit; and conducting current from the power supply through the first conductive charge rail of the primary module charging unit, the second conductive charge rail of the secondary module charging unit, and the conductive charge plates of the plurality of shopping carts to recharge the battery of each of the plurality of shopping carts.

In an embodiment, the method further comprises: mating the primary modular charging unit to the secondary modular charging unit by operably coupling the first conductive charge rail to the second conductive charge rail; and mating the first floor segment to the second floor segment.

In addition, there is provided a media enhanced shopping cart having a nose mounted display component, comprising: a shopping cart comprising a frame, a handle, a base tray, a plurality of wheels, and a basket comprising a bottom, two side walls, a nose comprising a front wall, and a rear comprising a rear wall; a embedded computing device comprising a central processing unit, a memory, and a network transceiver configured for wireless communication; the embedded computing device attached to the shopping cart; a display component comprising a base, a housing, and a screen comprising a viewable area; wherein the display component is mounted to the nose of the cart such that the viewable area is substantially in a field of vision of a consumer pushing the cart; and wherein the embedded computing device controls media for display in the display component.

In an embodiment, the media enhanced shopping cart is a basket mountable video display and shopping cart.

In an embodiment, the display component is mounted to at least one of an upper edge of a side wall and an upper edge of the front wall of the basket.

In an embodiment, the media for display comprises at least one of an advertisement, a shopping list, a store floor plan, a customer service interface, and a cart inventory.

In an embodiment, the field of vision of the consumer is defined by 1) a lower boundary defined by a first line of sight from the eyes of the consumer to the upper edge of the side and front walls of the basket and 2) an upper boundary defined by a second line of sight from the eyes of the consumer to an upper periphery of the consumer's vision.

In an embodiment, the viewable area is entirely within the field of vision.

In an embodiment, greater than fifty percent (50%) of the viewable area is within the field of vision.

In an embodiment, the display component is hinged to fold into an interior of the basket defined by the side walls, the front wall, the rear wall and the bottom; and wherein the screen is protected by the housing when the display component is folded.

In an embodiment, the display component retracts into the housing; and wherein the screen is protected by the housing when the display component is retracted.

In an embodiment, the screen swivels three hundred sixty degrees (360°) relative to the base.

In an embodiment, the display component further comprises a heating element; wherein the display component is heated such that the screen is readily operable in a cold environment.

In an embodiment, the basket mountable video display and shopping cart further comprises one or more motion sensors operably coupled to the embedded computing device such that the embedded computing device deactivates the display component when the motion sensors detect that the cart is in not in motion for a predetermined period of time.

In an embodiment, the embedded computing device reactivates the display component when the motion sensors detect that the cart is in motion.

In an embodiment, the display component is mounted to the cart with an attachment device, the attachment device comprising at least one of one or more clamps, one or more fasteners, one or more screws, one or more bolts, glue, one or more clasps, and one or more adhesives.

In addition, there is provided a method of displaying advertising, comprising: providing a plurality of advertisements to a embedded computing device affixed to a shopping cart; mounting a display component to a nose of the shopping cart;and displaying one or more of the advertisements on the display component mounted to the nose of the shopping cart such that a screen of the display component is at least partially in a field of vision of a consumer while the consumer pushes the cart.

In an embodiment, the display component is mounted to the cart such that the screen of the display component is substantially in the field of vision of the consumer.

In an embodiment, the display component is mounted to the cart such that the screen of the display component is at substantially in the field of vision of the consumer when the consumer's height is equal to or greater than five feet.

In an embodiment, mounting the display component on the shopping cart comprises mounting the display component to at least one of an upper edge of a side wall and an upper edge of the front wall of the basket.

In an embodiment, mounting the display component on the shopping cart comprises mounting the display component to a nose of the basket.

In an embodiment, the method further comprises: hibernating the display component when the cart is not in motion for a predetermined period of time; and reactivating the display component from a hibernating mode when the cart resumes motion.

In an embodiment, providing a plurality of advertisements to the embedded computing device comprises storing the plurality of advertisements to a memory of the embedded computing device or streaming the plurality of advertisements to the embedded computing device via wireless network communication.

In addition, there is provided a media enhanced shopping cart, comprising: (a) a shopping cart comprising a frame, a basket, a handle, a base tray, a plurality of wheels, and a basket comprising a bottom, two side walls, a nose comprising a front wall, and a rear comprising a rear wall; (b) an embedded computing device comprising a central processing unit, a memory, a network transceiver configured for wireless communication wherein the embedded computing device is affixed to the shopping cart, (c) one or more conductive charging plates electrically coupled to a rechargeable battery for powering components on the cart; (d) an inventory component for determining an inventory contained by the cart; (e) a locationing component for determining a location of the cart within a store based on a proximity scan; (f) an identification component for associating a unique identity of the cart; (g) a display component attached to the nose of the cart, the display component comprising a base, a housing, and a screen comprising a viewable area; wherein the display component is operably coupled to the embedded computing device; wherein the display component is hinged such that the display component folds into an interior of the basket for the housing to shield the screen from damage; wherein the display component displays a list of cart contents determined by the inventory component; wherein the display component displays one or more advertisements based on the location of the cart determined by the locationing component; (h) a navigation device operably coupled to the embedded computing device for navigating among one or more options displayed on the display components; and (i) a rechargeable battery operatively coupled to the embedded computing device, the display component, and the navigation device.

In an embodiment, the embedded computing device is affixed underneath the basket.

In an embodiment, the embedded computing device is integrated with the display component.

In an embodiment, the inventory component comprises at least one inward RFID reader comprising one or more inward RFID antennas for determining when a RFID tagged product is added to the cart or removed from the cart; wherein the inward RFID reader is operably coupled to the embedded computing device for determining the inventory contained by the cart.

In an embodiment, the inward RFID reader is integrated into the embedded computing device and the RFID antennas are located in the base of the display component.

In an embodiment, the inventory component comprises a bar code scanner operably coupled to the embedded computing device for inputting items for purchase device for determining the inventory contained by the cart.

In an embodiment, the bar code scanner is affixed to the handle.

In an embodiment, the bar code scanner is grouped with one or more other components in a pod near the center of the handle.

In an embodiment, the bar code scanner is integrated into the handle.

In an embodiment, the locationing component comprises at least one outward RFID reader comprising one or more outward RFID antennas for determining a location of the cart relative to one or more RFID tags affixed to an object in a store; wherein the outward RFID reader is operably coupled to the embedded computing device.

In an embodiment, the outward RFID reader is integrated with the embedded computing device and the RFID antennas are affixed on either side of a housing of the embedded computing device.

In an embodiment, the outward RFID reader is integrated with the embedded computing device and the RFID antennas are affixed on either side of the display component.

In an embodiment, the identification component comprises at least one of a RFID tag conveying a unique identity of the shopping cart, a bar code conveying the unique identity of the shopping cart when scanned, or a label visibly conveying the unique identity of the shopping cart; wherein the identification component is affixed to the nose of the cart.

In an embodiment, the media enhanced shopping cart further comprises one or more motion sensors for deactivating the display component when the one or more motion sensors detect that the cart is in not in motion for a predetermined period of time.

In an embodiment, the embedded computing device reactivates the display component when the one or more motion sensors detect that the cart is in motion.

In an embodiment, the navigation device comprises a voice activated interface comprising a microphone array in the handle and a means for activating the voice activated interface.

In an embodiment, the means for activating the voice activated interface is a dedicated push to talk button.

In an embodiment, the navigation device is grouped with one or more other components in a pod near the center of the handle.

In an embodiment, the navigation device comprises a five-way navigation selection means comprising a first selection means for navigating upwards, a second selection means for navigating downwards, a third selection means for navigating in a left direction, a fourth selection means for navigating in a right direction, and a fifth selection means for an enter, select, or cancel command.

In an embodiment, the navigation device comprises a set of tactile buttons, a touchpad, or a joystick on the handle.

In an embodiment, the navigation device is grouped with one or more other components in a pod on the handle.

In an embodiment, the one or more advertisements are periodically downloaded and stored to the memory of the embedded computing device.

In an embodiment, the one or more advertisements are streamed wirelessly to the embedded computing device via the network transceiver from an in-store network.

In addition, there is provided a media enhanced shopping cart, comprising: (a) a shopping cart comprising a frame, a basket, a handle, a base tray, a plurality of wheels, and a basket comprising a bottom, two side walls, a nose comprising a front wall, and a rear comprising a rear wall; (b) an embedded computing device comprising a central processing unit, a memory, a network transceiver configured for wireless communication wherein the embedded computing device is affixed to the shopping cart; (c) a locationing component for determining a location of the cart within a store based on a proximity scan; wherein the locationing component comprises at least one outward RFID reader comprising one or more outward RFID antennas for determining a location of the cart relative to one or more RFID tags affixed to an object in a store; wherein the outward RFID reader is operably coupled to the embedded computing device; and (d) a display component, the display component comprising a base, a housing, and a screen comprising a viewable area; wherein the display component is operably coupled to the embedded computing device; wherein the display component displays one or more advertisements based on the location of the cart determined by the locationing component; wherein the embedded computing module further comprises a store intelligence component that supplements the locationing component's determination of the location of the cart to render the determined location more accurate.

In an embodiment, at least one of the one or more outward RFID antennas comprises a bowtie antenna having a narrow aperature for reading RFID tags.

In an embodiment, a field of view for the bowtie antenna is concentrated to an area approximately thirty (30°) to forty (40°) degrees wide and approximately ninety (90°) degrees high relative to the antenna.

In an embodiment, at least one of the one or more outward RFID antennas comprises a slot antenna having a narrow aperature for reading RFID tags.

In an embodiment, a field of view for the slot antenna is concentrated to an area approximately thirty (30°) to forty (40°) degrees wide and approximately ninety (90°) degrees high relative to the antenna.

In an embodiment, the cart further comprises a magnetic reed switch apparatus in communication with the store intelligence component to determine when the cart moves through a turn to supplement the locationing component's determination of the location of the cart.

In an embodiment, the magnetic reed switch apparatus is located on at least two of the wheels of the cart.

In an embodiment, the magnetic reed switch apparatus generates a heartbeat signal for each wheel of the at least two wheels, and determines when the cart moves through a turn by comparing the two heartbeat signals for a difference.

In an embodiment, the cart further comprises an automatic gain control module implemented as software in the embedded computing module and in communication with the store intelligence component.

In an embodiment, the embedded computing device accesses a database of RFID tags of known locations, and wherein the automatic gain control module increases the transmit power for the one or more outward RFID antennas when at least one of the RFID tags of known locations that should be read by the RFID antennas when the cart is in a given location are not readily detected.

In an embodiment, the embedded computing device accesses a database of RFID tags of known locations, and wherein the automatic gain control module attenuates the transmit power for the one or more outward RFID antennas when at least one of the RFID tags of known locations is read by the RFID antennas when the cart is in a given location where the read RFID tag is not anticipated to be within reading distance of the RFID antennas.

In an embodiment, the automatic gain control module increases sensitivity of the one or more outward RFID antennas to read all tags within a predetermined distance of the cart.

In an embodiment, the automatic gain control module decreases sensitivity of the one or more outward RFID antennas to eliminate reading tags outside a predetermined distance of the cart.

In an embodiment, the automatic gain control module decreases sensitivity of the one or more outward RFID antennas when the cart is in close proximity with a second cart or another RFID antenna.

In addition, there is provided a method for increasing accuracy of locating a media enhanced shopping cart comprising: determining a location of a cart based on a proximity scan of one or more RFID tags using one or more RFID antennas and an RFID reader; accessing a database of known locations of RFID tags to determine which tags of the RFID tags read in the proximity scan are anticipated as being included or excluded from the proximity scan; adjusting power of the RFID antennas to change sensitivity of the proximity scan such that RFID tags anticipated as being included in the proximity scan are read and RFID tags anticipated as excluded from the proximity scan are not read; and providing feedback on the location of the cart in subsequent scans based on the adjusted power of the RFID antennas.

In an embodiment, the method further comprises increasing the transmit power for the one or more RFID antennas when at least one of the RFID tags of known locations that is anticipated as being included in the proximity scan by the RFID antennas when the cart is in a given location is not readily detected.

In an embodiment, the method further comprises attenuating the transmit power for the one or more RFID antennas when at least one of the RFID tags of known locations that is anticipated as being excluded from the proximity scan by the RFID antennas when the cart is in a given location is being readily detected.

In an embodiment, the method further comprises increasing sensitivity of the one or more RFID antennas to read all RFID tags located within a predetermined distance of the cart .

In an embodiment, the method further comprises decreasing sensitivity of the one or more RFID antennas to eliminate reading tags outside a predetermined distance of the cart .

In an embodiment, the method further comprises decreasing sensitivity of the one or more RFID antennas when the cart is in close proximity with a second cart or another RFID antenna.

In addition, there is provided a media enhanced shopping cart system comprising: (a) a shopping cart comprising a frame, a basket, a handle, a base tray, a plurality of wheels, and a basket comprising a bottom, two side walls, a nose comprising a front wall, and a rear comprising a rear wall; (b) a embedded computing device comprising a central processing unit, a memory, a network transceiver configured for wireless communication wherein the embedded computing device is affixed to the shopping cart; (c) an inventory component for determining an inventory contained by the cart comprising a scanner; (d) a locationing component for determining a location of the cart within a store based on a proximity scan comprising at least one RFID antenna and at least one RFID reader; (e) a display component comprising a base, a housing, and a screen comprising a viewable area; and (f) a motion detection component for hibernating and re-activating at least one of (b), (c), (d) and (e) based on whether the cart is in motion in order to conserve power.

In an embodiment, the motion detection component comprises a magnetic reed switch apparatus, wherein a magnet portion of the magnetic reed switch apparatus is coupled to one of the wheels and the reed switch portion of the magnetic reed switch apparatus is coupled to the frame such that rotation of the wheel indicating motion of the cart opens and closes the reed switch portion.

In an embodiment, the motion detection component comprises a mercury switch that opens or closes when motion of the cart disrupts the mercury.

In an embodiment, the motion detection component comprises logic utilizing read data from the RFID reader based on RFID tags passed by the cart.

In an embodiment, the motion detection component is operable to hibernate the embedded computing device when the motion detection component detects that the cart has not been in motion for at least a predetermined period of time, and wherein the motion detection component is operable to re-activate the embedded computing device when the motion detection component detects that the cart is in motion.

In an embodiment, the motion detection component is operable to hibernate the inventory component scanner when the motion detection component detects that the cart is in motion, and wherein the motion detection component is operable to re-activate the inventory component scanner when the cart has come to a stop.

In an embodiment, the motion detection component is operable to hibernate the locationing component RFID reader when the motion detection component detects that the cart has not been in motion for at least a predetermined period of time, and wherein the motion detection component is operable to re-activate the locationing component RFID reader when the motion detection component detects that the cart is in motion.

In an embodiment, the motion detection component is operable to hibernate the display component when the motion detection component detects that the cart has not been in motion for at least a predetermined period of time, and wherein the motion detection component is operable to re-activate the display component when the motion detection component detects that the cart is in motion.

In addition, there is provided a method of power management in a media enhanced shopping cart, the method comprising: detecting motion of the media enhanced shopping cart; and selectively hibernating or re-activating one or more electronic components of the media enhanced shopping cart based on whether the cart is in motion.

In an embodiment, detecting motion of the media enhanced shopping cart comprises providing a wheel of the cart with a magnet, providing the frame of the cart with a magnetic reed switch, and indicating that the cart is in motion when the magnet opens or closes the magnetic reed switch.

In an embodiment, selectively hibernating or re-activating one or more electronic components based on whether the cart is in motion comprises hibernating an embedded computing device of the cart when the cart has not been in motion for at least a predetermined period of time, and re-activating the embedded computing device when the cart is in motion.

In an embodiment, selectively hibernating or re-activating one or more electronic components based on whether the cart is in motion comprises hibernating a inventory component scanner of the cart when the cart is in motion, and re-activating the inventory component scanner when the cart has come to a stop.

In an embodiment, selectively hibernating or re-activating one or more electronic components based on whether the cart is in motion comprises hibernating a locationing component RFID reader of the cart when the cart has not been in motion for at least a predetermined period of time, and re-activating the locationing component RFID reader when the cart is in motion.

In an embodiment, selectively hibernating or re-activating one or more electronic components based on whether the cart is in motion comprises hibernating a display component of the cart when the cart has not been in motion for at least a predetermined period of time, and re-activating the display component when the cart is in motion.

In addition, there is provided a method of deterring theft and tampering of a media enhanced shopping cart, the method comprising: securing one or more electronic components of the media enhanced shopping cart to the media enhanced shopping cart using a customized connection or mounting scheme such that removal of the electronic component(s) without a customized tool for the customized connection or mounting scheme results in irreversible damage to the electronic component.

In an embodiment, the secured electronic component comprises a logic board of an embedded computing module having critical circuit traces located in close proximity to one or more holes used for mounting, and the a customized connection or mounting scheme comprises a customized screw placed and removed only by the customized tool, wherein removal of the logic board without the customized tool results in irreversible damage to the critical circuit traces located in close proximity to the holes used for mounting.

In an embodiment, the method further comprises mounting a retaining component with the a customized connection or mounting scheme, wherein the secured electronic component comprises a flex circuit coupling an LCD display and an LCD controller board and the retaining component comprises a retaining bar that secures the flex circuit in place, wherein removal of the retaining component without the customized tool results in irreversible damage to the flex circuit.

In addition, there is provided a method of deterring theft and tampering of a media enhanced shopping cart, the method comprising: securing one or more electronic components of the media enhanced shopping cart to the media enhanced shopping cart in an selected order such that removal of the electronic component(s) in an order other than the selected order results in irreversible damage to the electronic component.

In an embodiment, the method further comprises mounting a retaining component in the selected order, wherein the secured electronic component comprises a flex circuit coupling an LCD display and an LCD controller board and the retaining component comprises a retaining bar that secures the flex circuit in place, wherein removal of the retaining component in an order other than the selected order results in irreversible damage to the flex circuit.

In addition, there is provided a system comprising: a store computer system comprising at least a central processing unit, a data server storing store data, and a shelf management module; wherein store data comprises store inventory, store pricing for the store inventory, a base store map including the locations of one or more anchor RFID tags and store fixtures, and the locations of one or more products of the store inventory; wherein the shelf management module is operable to convey the store data to a media enhanced shopping cart for cart-enabled changes to at least one of store inventory, the base store map, and store pricing; the media enhanced shopping cart comprising: a shopping cart comprising a frame, a basket, a handle, a base tray, a plurality of wheels, and a basket; a embedded computing device comprising a central processing unit, a memory, a network transceiver configured for wireless communication with the store computer system, wherein the embedded computing device is affixed to the shopping cart; wherein the embedded computing device receives store data from the shelf management module; a locationing component for determining a location of the cart within a store relative to the one or more anchor RFID tags; wherein the locationing component is operable to determine the location of the cart relative to a specific point of store data; a display component attached to the cart, the display component comprising a base, a housing, and a screen comprising a viewable area; wherein the display component is operable to display the location of the cart relative to the specific point of store data; and thereby guiding a user of the cart to a location associated with the specific point of store data for implementation of a cart-enabled change to at least one of store inventory, the base store map, and store pricing.

In an embodiment, the media enhanced shopping cart further comprises a confirmation component for scanning at least one of an RFID tag and a bar code label to confirm the user of the cart has arrived at the location associated with the specific point of store data for implementing the cart-enabled change.

In an embodiment, the media enhanced shopping cart further comprises a printer coupled to the embedded computing module that is operable to print a label associated with the specific point of store data; wherein affixing the label in the location of the specific point of store data at least partially implements the cart-enabled change.

In an embodiment, the embedded computing module conveys a signal to the store system indicating completion when a cart-enabled change is complete.

In an embodiment, a cart-enabled change is at least one of a store inventory update, a price change to store pricing, a change in location of at least one anchor RFID tag in the base store map, and a change in locations of at least one or more products of the store inventory.

In an embodiment, the locationing component scans the anchor RFID tags and product RFID tags, and the embedded computing module conveys the scan to the store system to update store data.

In addition, there is provided a method for shelf management and inventory comprising: mapping a store based on a plurality of anchor RFID tags placed in known locations; when arranging a product for sale in the store, associating the product with at least one anchor RFID tag such that the product is associated with a known location; wherein the product is associated with at least one of 1) a product RFID tag and 2) a SKU RFID tag; locating the product in the store by a scan for at least one of 1) confirming that the product is still located in the same known location with which the product is associated or 2) updating the known location with which the product is associated when the product is moved.

In addition, there is provided a method for cart-enabled product shelving and re-shelving comprising: scanning a product; determining a location of the cart; determining a location associated with the product relative to the location of the cart; and displaying at least the location of the product relative to the location of the cart to enable shelving of the product in the location associated with the product.

In an embodiment, the method further comprises guiding the cart to the location displayed and confirming that the location displayed is the location associated with the product by scanning at least one of 1) a product already shelved at the location displayed and 2) a identifier at the location displayed, wherein the identifier is one of a label and an RFID tag.

In addition, there is provided a method for cart-enabled implementation of a price change comprising: designating a new price for a product; locating an associated location for the product with a media enhanced shopping cart; confirming the associated location with the product with a media enhanced shopping cart; and dynamically implementing the new price for the product.

In an embodiment, designating the new price comprises entering the new price in a store system subject to confirmation that the new price has been implemented physically in the store.

In an embodiment, locating the associated location for the product with the media enhanced shopping cart comprises scanning the product, accessing the store system to ascertain the associated location; locating the cart in the store, and locating the associated location relative to the cart.

In an embodiment, the method further comprises displaying the associated location for the product in a display of the media enhanced shopping cart.

In an embodiment, confirming the associated location with the product comprises scanning a product identifier at the displayed location and comparing the scanned product identifier with the product; wherein the product identifier is one of a SKU label, a bar code, and an RFID tag.

In an embodiment, confirming the associated location with the product comprises comparing the product identifier at the associated location with the product; wherein the product identifier is a SKU label.

In an embodiment, dynamically implementing the new price for the product comprises printing a new label having the new price; placing the new label at the associated location; and conveying to a confirmation to the store system that the new price has been implemented physically in the store with the new label.

In an embodiment, the method further comprises charging the new price at a point of sale when the new price has been dynamically implemented.

In addition, there is provided a method of building a electronic representation of a store configuration comprising: creating an electronic representation of a physical store configuration including location, orientation and dimensions of fixtures within the store; within the electronic representation of the physical store configuration, positioning a plurality of virtual locations; within the electronic representation of the physical store configuration, associating each of the virtual locations with one or more RFID tags; scanning the physical store configuration for RFID tags to generate an inventory of reads of the RFID tags and virtual locations; and analyzing the scan to determine the location of a cart within the physical store configuration.

In an embodiment, the electronic representation of the store configuration comprises at least one of 1) a series of database entries and 2) an XML document.

In an embodiment, the RFID tags are one of active RFID tags and passive RFID tags.

In an embodiment, scanning is performed by an RFID reader and an RFID antenna affixed to a media enhanced shopping cart.

In an embodiment, scanning is performed at a regular interval.

In an embodiment, analyzing the scan further comprises applying at least one locating intelligence logic rule to the inventory of reads obtained in the scan of the physical store configuration.

In an embodiment, applying at least one locating intelligence logic rule comprises prioritizing, among the RFID proximity scan data, recent reads above old recent reads, wherein a threshold age of a read is used to determine whether a given read is recent or old.

In an embodiment, applying at least one locating intelligence logic rule comprises prioritizing reads from a high-read volume time period above reads from a low-read volume time period, wherein whether a given read occurs in a high-read volume time period or a low-read volume time period depends on whether the number of reads during the time period exceeds a threshold number of reads.

In an embodiment, applying at least one locating intelligence logic rule comprises prioritizing reads that are proximate to one another above reads that are not proximate to one another, wherein whether two reads are proximate to one another is determined based on whether the distance between the two reads is less than a threshold distance.

In an embodiment, applying at least one locating intelligence logic rule comprises eliminating spurious reads from the inventory based on knowledge of the physical store configuration.

In an embodiment, applying at least one locating intelligence logic rule comprises eliminating transient reads from the inventory based on knowledge of the physical store configuration.

In an embodiment, applying at least one locating intelligence logic rule comprises accounting for antenna characteristics and eliminating reads that, according to antenna characteristics, do not fall within an anticipated read zone of the scan.

In an embodiment, analyzing the scan to determine the location of a cart within the physical store configuration further comprises calculating an average coordinate position of the cart within the physical store configuration.

In an embodiment, the method further comprises providing feedback to the determined location of the cart by comparing the calculated average coordinate position of the cart to the nearest virtual location.

In addition, there is provided a computer readable storage medium for storing an executable set of software instructions which, when executed by a computer system, are capable of controlling the operation of the computer, said software instructions being operable to locate a media enhanced shopping cart within a store, said software instructions including: creating an electronic representation of a physical store configuration including location, orientation and dimensions of fixtures within the store; within the electronic representation of the physical store configuration, positioning a plurality of virtual locations; within the electronic representation of the physical store configuration, associating each of the virtual locations with one or more RFID tags; scanning the physical store configuration for RFID tags to generate an inventory of reads of the RFID tags and virtual locations; and analyzing the scan to determine the location of a cart within the physical store configuration.

In an embodiment, the software instruction analyzing the scan further comprises applying at least one locating intelligence logic rule to the inventory of reads obtained in the scan of the physical store configuration.

In an embodiment, the software instruction applying at least one locating intelligence logic rule comprises prioritizing, among the RFID proximity scan data, recent reads above old recent reads, wherein a threshold age of a read is used to determine whether a given read is recent or old.

In an embodiment, the software instruction applying at least one locating intelligence logic rule comprises prioritizing reads from a high-read volume time period above reads from a low-read volume time period, wherein whether a given read occurs in a high-read volume time period or a low-read volume time period depends on whether the number of reads during the time period exceeds a threshold number of reads.

In an embodiment, the software instruction applying at least one locating intelligence logic rule comprises prioritizing reads that are proximate to one another above reads that are not proximate to one another, wherein whether two reads are proximate to one another is determined based on whether the distance between the two reads is less than a threshold distance.

In an embodiment, the software instruction applying at least one locating intelligence logic rule comprises eliminating spurious reads from the inventory based on knowledge of the physical store configuration.

In an embodiment, the software instruction applying at least one locating intelligence logic rule comprises eliminating transient reads from the inventory based on knowledge of the physical store configuration.

In an embodiment, the software instruction applying at least one locating intelligence logic rule comprises accounting for antenna characteristics and eliminating reads that, according to antenna characteristics, do not fall within an anticipated read zone of the scan.

In an embodiment, the software instruction analyzing the scan to determine the location of a cart within the physical store configuration further comprises calculating an average coordinate position of the cart within the physical store configuration.

In an embodiment, the software instructions further comprise providing feedback to the determined location of the cart by comparing the calculated average coordinate position of the cart to the nearest virtual location.

These and other features and advantages will be more clearly understood from the following detailed description taken in conjunction with the accompanying drawings and claims.

### BRIEF DESCRIPTION OF THE DRAWINGS

For a more complete understanding of the present disclosure and the advantages thereof, reference is now made to the following brief description, taken in connection with the accompanying drawings and detailed description, wherein like reference numerals represent like parts.
Figure 1 is a side view of a media enabled shopping cart according to an embodiment of the present disclosure.
Figure 2 shows a view from the nose of a media enabled shopping cart according to an embodiment of the present disclosure.
Figure 3A illustrates a rear view of a media enabled shopping cart according to an embodiment of the present disclosure.
Figure 3B is a close up, rear view of a rear caster wheel for a media enabled shopping cart.
Figure 4 is a block diagram of a modular device of a media enabled shopping cart according to an embodiment of the present disclosure.
Figure 5 shows an exemplary display according to an embodiment of the present disclosure.
Figure 6 illustrates a front view of a media enabled shopping cart recharging in a recharge corral according to an embodiment of the present disclosure.
Figure 7 is an exploded cutaway view of a media enabled shopping cart engaged in a recharge corral according to an embodiment of the present disclosure.
Figure 8A shows a side view of a charge rail system for recharging the battery of one or more carts according to an embodiment of the present disclosure.
Figure 8B illustrates a side view of two charge rail segments forming a single recharge stall according to an embodiment of the present disclosure.
Figure 8C illustrates a front view of a media enabled shopping cart recharging in a recharge corral according to an alternative embodiment of the present disclosure.
Figures 8D and 8E show a perspective view of a contact plate cover in a closed and open position, respectively.
Figure 9 is an exemplary view, defining a field of vision of a consumer using a media enabled shopping cart according to an embodiment of the present disclosure.
Figure 10 shows a detailed view of a video display of a media enabled shopping cart according to an embodiment of the present disclosure.
Figure 11 illustrates the nose of the media enabled shopping cart with a folding video display according to an embodiment of the present disclosure.
Figure 12 is an exemplary view of a plurality of carts nested together for storage according to an embodiment of the present disclosure.
Figure 13 shows a detailed view of the video display according to an embodiment of the present disclosure.
Figure 14 illustrates an exploded view of the video display components according to an embodiment of the present disclosure.
Figure 15 is an overhead view of the media enabled shopping cart when reading one or more RFID tags affixed to objects for locating the cart in the store according to an embodiment of the present disclosure.
Figure 16 shows an exemplary view of an advertising display on the video display according to an embodiment of the present disclosure.
Figure 17 illustrates the overall system of the media enabled shopping cart in a store network system according to an embodiment of the present disclosure.
Figure 18 is an illustrative view of the media enabled shopping cart in a store network system according to an embodiment of the present disclosure.
Figure 19 shows a user interface including a voice activated interface, a five-way navigation device, and a bar code scanner grouped in a pod according to an embodiment of the present disclosure.
Figure 20A is a front view of a bowtie shaped aperture for an RFID antenna.
Figure 20B is a front view of a slot shaped aperture for an RFID antenna.
Figure 20C is a top view of a radiation pattern emanated from the aperture of Figs. 20A or 20B.
Figure 20D is a side view of a radiation pattern emanated from the aperature of Figs. 20A or 20B.
Figures 21A-F illustrate various graphical user interfaces (GUIs) to be presented via a video display to a customer user of the media enabled shopping cart.
Figure 22 illustrates a graphical user interfaces (GUI) to be presented via a video display to an employee user of the media enabled shopping cart.

It should be understood at the outset that although an exemplary implementation of one embodiment of the present disclosure is illustrated below, the present system may be implemented using any number of techniques, whether currently known or in existence. The present disclosure should in no way be limited to the exemplary implementations, drawings, and techniques illustrated below, including the exemplary design and implementation illustrated and described herein.

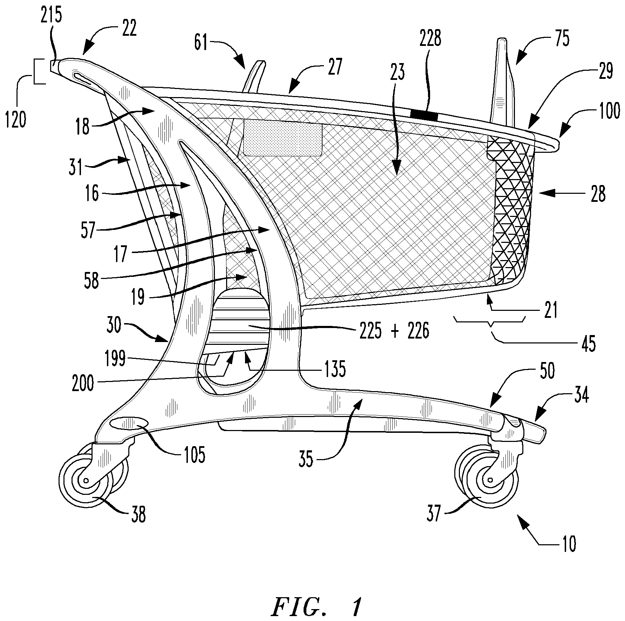

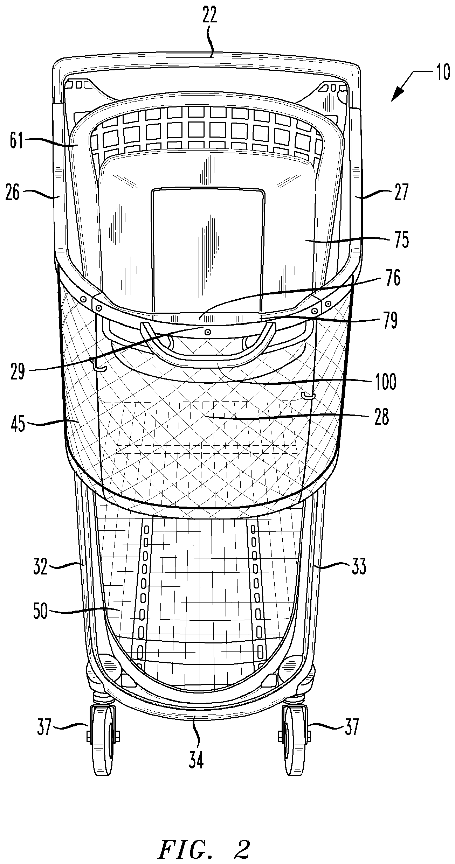

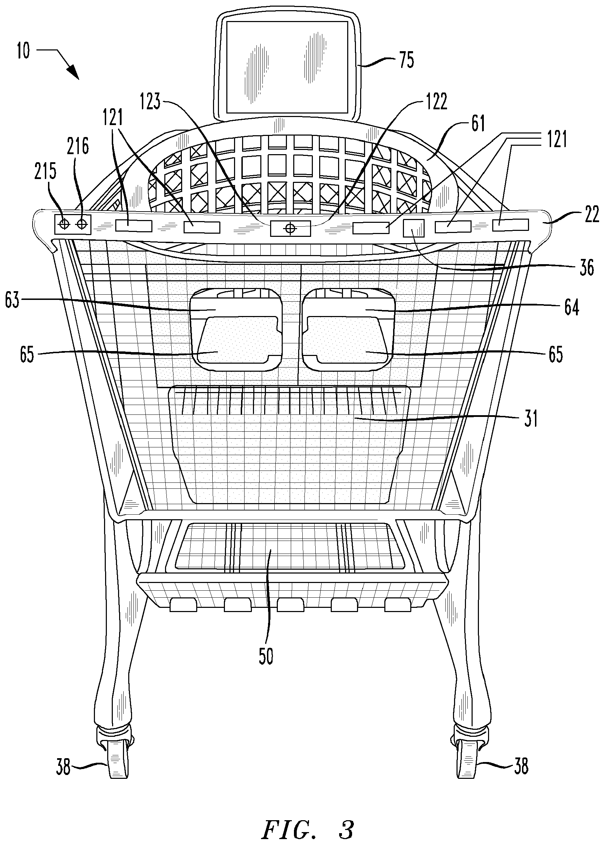

Figure 1 is a side view, Fig. 2 is a front view, and Fig. 3A is a rear view of a shopping cart 10 having a basket 20 attached to a frame 30. The frame 30 further comprises a base 35 having base side members 32, 33 and front base member 34 extending between the base side members 32, 33 at the front or nose 45 of the cart. The frame 30 further comprises side members 16, 17 extending upward from the base 35 on each side of the shopping cart 10. At the rear 25 of the cart, a handle 22 extends between the side members 16, 17 at the upper end 18 of the side members. The basket 20 may, but need not necessarily, have channels or grooves 57, 58 configured for receipt of the side members 16, 17. Side members 16, 17 are shown as separate members having an opening 19 there between, but in alternative embodiments a single or solid member may be used in place of separate members 16, 17. In an embodiment, the frame, including base 35, side members 16, 17, and handle 22, is formed as a single, unified member, for example by molding the entire frame from plastic.

In an embodiment, substantially the entire cart 10 is made of plastic, also referred to herein as a plastic cart, and in particular the basket 20 consists essentially of plastic, along with the frame 30 and base tray 50. Various carts in the related art have a plastic basket supported by a metal frame, however, a plastic cart 10 of the present disclosure substantially comprises plastic in that the basket 20, frame 30 and base tray 50 are all made of plastic, and minor components, such as screws or other connectors, the wheels 37 and 38, and the like may be made of plastic or a metal. In an embodiment, the plastic used in the cart 10 comprises a high-density polyethylene ("HDPE"). The plastic is flame retardant and, in an embodiment, includes MICROBAN^{™}, a product to inhibit the growth of bacteria, which aids in keeping the cart 10 cleaner. The substantially all plastic composition of the cart 10 additionally reduces or eliminates RFID interference as will be discussed in more detail herein.

In an embodiment, substantially the entire cart 10 is made of metal or a combination of plastic and metal, and in particular the basket 20 consists essentially of metal or a combination of plastic and metal, along with the frame 30 and base tray 50. In an embodiment, the cart 10 may have a plastic basket supported by a metal frame, and minor components, such as screws or other connectors, the wheels 37 and 38, and the like may be made of plastic or a metal. Such a cart is in usage, however may be retrofitted with the media enhancements, as will be discussed in more detail below.

A lower or base tray 50 is attached to the base 35 and may be supported by a front cross member 56 and a rear cross member 53 extending between the base side members 32, 33. Front wheels 37 are attached to the front of the base 35, for example at or near the intersection of the base side members 32, 33 and the front base member 34. Rear wheels 38 are attached to the rear of the base 35, for example at or near the rearward end of base side members 32, 33. The front wheels, the rear wheels, or both may be casters comprised of metal and/or plastic.

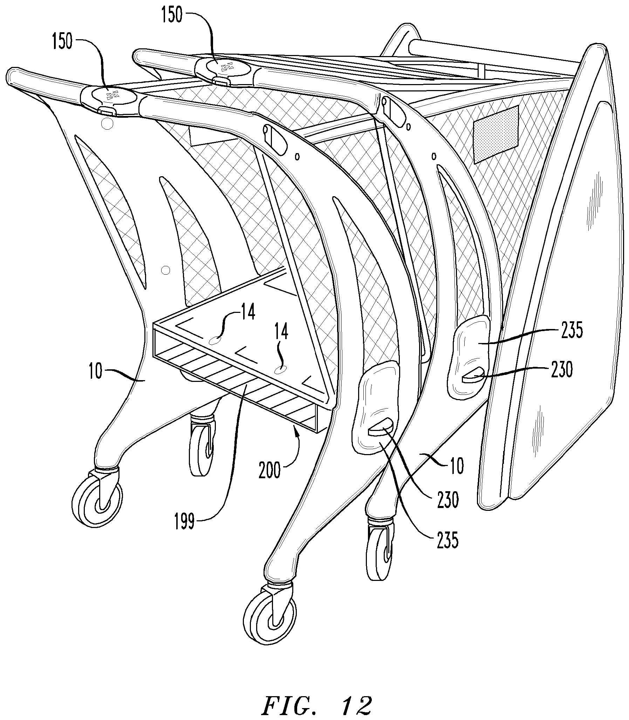

The basket 20 further comprises a bottom 21; side walls 23, 24; side upper edges 26, 27; a front wall 28; a front edge 29; and a rear wall 31. The bottom 21 and walls 23 and 24, front side wall 28, and rear side wall 31 define an interior 54 of the basket 20, and the edges 26 and 27 and front edge 29 define an upper boundary for the interior 54 of the basket 20. The exterior of the basket 20 refers to areas beyond the interior of the basket as previously defined. In an embodiment, a plane containing the upper edges 26 and 27 and front edge 29 defines the upper boundary for the interior 54 of the basket 20. The rear side wall 31 may be hinged via hinges 51, 52 such that the lower edge 55 of rear side wall 31 may swing upward into the interior 54 of the basket to receive the front side wall 28 of another cart, thereby allowing the carts to be nested for storage as shown in Fig. 12.

The basket 20 may further comprise a child seat 60 having a seat back 61 and a seat bottom 62. The rear side wall 31 may have openings 63, 64 to accommodate a child's legs when seated in seat 60. The seat bottom 62 may include a hinged panel 65 that may be flipped up to close openings 63, 64 when the seat 60 is not occupied. The seat back 61 may be hinged at or near the interior bottom of rear side wall 31 such that when unneeded the seat 60 may fold about flush with the rear side wall 31 to increase storage area in the interior 54 of the basket 20.

In an embodiment, the cart 10 further comprises a bumper handle 100. The bumper handle 100 may comprise a plastic coated with neoprene, rubber or a similar coating product, or may comprise an uncoated plastic similar to that of which the basket 20 and/or frame 30 is comprised. The bumper handle 100 may comprise an integrated portion of the basket 20, or alternatively, may be coupled to the basket 20 or frame 30. In an embodiment, the bumper handle 100 is coupled to an upper edge 26 or 27, or front edge 29 of the basket 20. Various means for attaching the bumper handle 100 may be used in the present disclosure and include but are not limited to clamping, fastening, screwing, gluing, clasping, welding, adhering, and the like. Various attachment devices may be used in the present disclosure and include but are not limited to clamps, fasteners, screws, bolts, glues, clasps, adhesives, and the like. In another embodiment, the bumper handle 100 may comprise an integrated portion of the 28 front side wall 28 of the basket 20 or may comprise an integrated portion of the front edge 29 of the front side wall 28 of the basket 20.

In an embodiment, the bumper handle 100 may provide the consumer 85 an option for pulling the cart 10 from a nested position with one or more other carts, without pulling the cart 10 from a nested position by way of pulling on the video display 75. The bumper handle 100 may also be used by the consumer to pull the cart 10 at various times while shopping. In an embodiment, the bumper handle 100 may cushion the cart 10 and the video display 75 when a consumer 85 or other individual places the cart 10 into a nested position with one or more other carts. The bumper handle 100 may also act as a bumper to cushion impact of the cart 10 with other objects such as walls, shelves, product displays, vehicles, etc.

The cart 10 may be enhanced with several additional features, though there is a market for the substantially all plastic cart without media enabling capabilities. The cart 10 may comprise a traditional cart retrofitted with the enhancements described below. A cart 10 having a video display 75 is described by copending U.S. Provisional Application filed July 27, 2005, entitled "Basket Mounted Display for Shopping Cart". Added media enhancing capabilities may include displaying visual images such as advertising to the consumer 85 based upon the location of the cart 10 within the store, navigating menu options on the video display 75 using either the voice activated interface 120 or a five-position navigation device 123, scanning products for purchase according to bar codes or RFID tags, enhanced check out at a point of sale, media enhanced shopping cart shopping lists, a product "find" function, and data mining of information pertaining to advertisements displayed to the consumer 85 and which products were actually purchased, and the like, as will be discussed in greater detail herein.

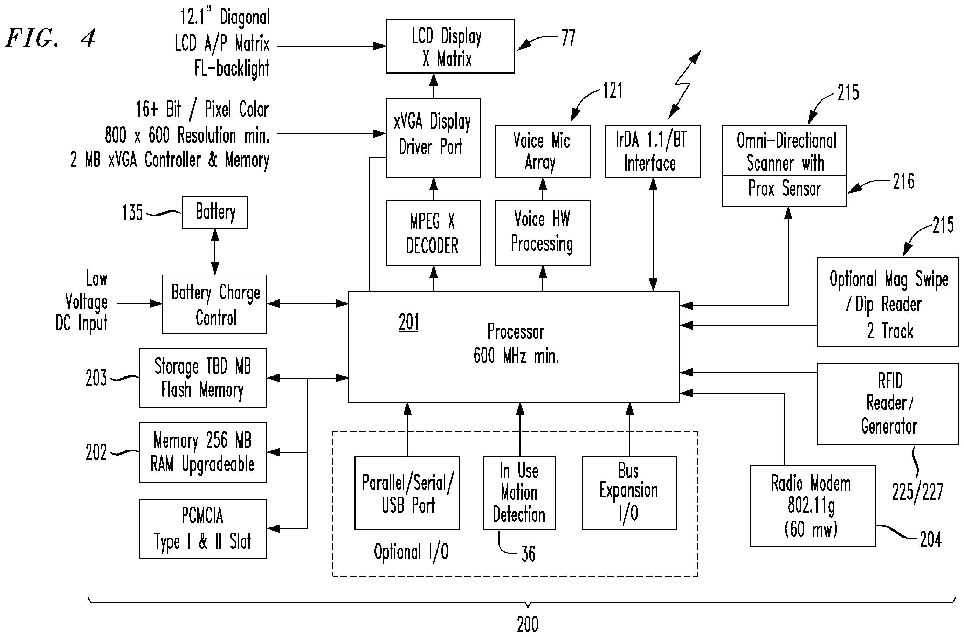

In various embodiments, the shopping cart system may further comprise an embedded computer module ("ECM") 200 comprising a central processing unit ("CPU") 201, a local memory 202, a non-volatile memory 203, and a network transceiver 204 as shown in the block diagram of Fig. 4. In an embodiment, the ECM 200 may comprise a chipset further comprising, for example, a microprocessor and a graphics accelerator. In an embodiment, the chipset may comprise an Intel pxa270/2700g xScale chipset or an equivalent or improvement thereof. In an embodiment, the non-volatile memory 203 comprises flash memory, as is well known in the art. In an embodiment, the network transceiver 204 comprises a Wireless Local Area Network ("WLAN") transceiver operable to enable the ECM 200 to communicate with various network components as will be described in greater detail herein. In an embodiment, the network transceiver or a component thereof such as the antenna may be located on the ECM 200, for example near a front wall of the ECM facing the nose of the cart. In referring to various wireless communications herein, including but not limited to the network transceiver 204, any suitable wireless communications protocol may be used including but not limited to IEEE 802.11 "wi-fi" standards such as 802.11a/b/g, IEEE 802.15 "Bluetooth," IEEE 802.16 "WiMAX," HomeRF, or combinations thereof. In an embodiment, the network transceiver 204 may be located in video display 75, for example in the screen housing 92, 93, and may be operably coupled to the ECM 200. The ECM 200 may further comprise a housing 199 comprising a protective, hermetically sealed plastic or other appropriate protective computer packaging. The ECM 200 may be attached to the frame 30 (for example, via connectors 14 as shown in Fig. 12), the bottom of basket 20, the base tray 50, or combinations thereof by various attachment means and devices as described herein. In an embodiment, the housing 199 may be integrally molded as part of a plastic cart 10, for example integrally molded to the bottom of basket 20, as part of the frame 30, as part of the base tray 50, or combinations thereof. In alternative embodiments, the ECM or components thereof may be attached to or integrated with the video display 75, for example as part of the screen 77 or the base 76.

In an embodiment, in local memory 202 or non-volatile memory 203, the ECM 200 stores various programs and data, such as an operating system, voice recognition software, database software and populated database files, files pertaining to advertising, and an operating system. In an embodiment, the operating system software may be the same as, equivalent to, or an improvement over the Microsoft WinCE.net (5.0) Operating System utilizing the .NET Compact Framework and SQL Server embedded edition for WinCE along with standard Win com objects, drivers, and networking tool sets. In an alternative embodiment, the operating system may be Windows XP, Windows XP Embedded, or an equivalent thereof. It should be understood that specific computing equipment and software are disclosed herein as non-limiting examples, and that equivalent or improved components may be substituted as such become available. In an embodiment, the ECM 200 may incorporate the following types of programming: an embedded database engine, a business object layer, a graphic user interface presentation layer (GUI), one or more media display engines, automatic speech recognition engine, a bar code device driver, and an RFID reader driver.

In an embodiment, the ECM 200 may enter a hibernation or sleep mode when the cart 10 is nested with one or more other cart 10, when the cart 10 is stored, or when the cart 10 is not in motion for a predetermined period of time. In an embodiment, the hibernation or sleep mode may involve powering the ECM 200 down entirely, or partially. In an embodiment, the cart 10 may further comprise one or more motion sensors 36 operable to detect when the cart 10 is in motion. The motion sensor(s) 36 may be located anywhere on the cart 10. The motion sensor(s) 36 may be located in or on the handle 22 (for example in pod 150) as shown in Fig. 3A, the base 35, or the base tray 50. Alternatively, the motion sensor(s) 36 may be coupled to wheels 37, 38 and detect motion of the cart from turning of one or more wheels. Alternatively, the motion sensor(s) 36 may be integrated with a scanner 215, wherein the motion sensor may serve as a proximity sensor 216 for the scanner and/or a proximity sensor 216 for the scanner may serve as a motion sensor for activating components of the cart. Alternatively, the motion sensors(s) may be located in the ECM 200, for example a mercury switch or equivalent that detects movement of the cart. The motion sensor(s) activate the ECM 200, bringing it out of hibernation, when the cart 10 is selected by a consumer 85 from a nested position with one or more other carts, from a cart corral 110, or when a consumer 85 begins to move an abandoned cart 10 that has not moved for a predetermined length of time. Each of the components operably coupled to or comprising components of the ECM 200, as described below, may also be re-activated or hibernated along with the ECM 200 when the motion sensor(s) 36 detects that the cart 10 is in motion.

In an embodiment, the motion sensor(s) 36 may comprise mercury switches placed on the cart 10, such as in a location on a wheel 38 or caster, or on the basket 20 of the cart 10, such that when the cart 10 is in motion, the mercury in the switch tilts with the motion of the cart 10 to connect and disconnect the control of the ECM 200 or the various other components.

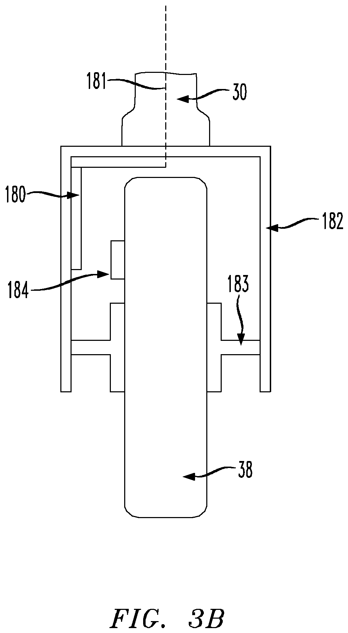

In still another embodiment, the motion sensor(s) 36 may comprise one or more magnetic reed switches in addition to or in lieu of mercury switches. In such an embodiment as shown in Fig. 3B, a magnetic reed switch 180 is located in the frame or caster 182 above each wheel 38, and an associated magnet 184 is located on the wheel 38 hub, allowing sensing of tire rotation about axle 183 for motion detection. As is well understood in the art, by placing a magnet on a rotating wheel, a "heartbeat" reflecting the rotational speed of the wheel may be determined, with one "beat" each time the magnet rotates past the reed switch, opening or closing it. By placing a pair of these switch and magnet groupings, one at each wheel, the ECM 200 may receive a signal from the magnetic reed switch via cable or wire 181 running through frame 30 and determine the rotation speed of each wheel when in motion. By comparing rotational speed of adjacent wheels (for example, the two back wheels having a fixed, known position relative to each other), the ECM 200 may additionally determine when the cart turns as well as the speed and direction of turns, providing additional data for use in accurate determination of the location of the cart within the store. Further discussion of the use of magnetic reed switches in locating the cart 10 within the store is included below.

The shopping cart system further comprises a correlation component comprising software, hardware or a combination of hardware and software operable to take various data gathered by components of the cart, and correlate one or more of the different types of data. The correlation component may, in an embodiment comprise hardware affixed to the cart with software incorporated therein, or may, in an embodiment, comprise hardware affixed to the cart with software stored in and/or executed from the ECM 200. In an embodiment, the correlation component may be integrated within the ECM 200.

For example, the correlation component is operable to correlate data from the inventory component (discussed in greater detail below) regarding the inventory contained by the shopping cart, with the unique identity of the shopping cart. In such an exemplary embodiment, the correlation component is operably coupled to the inventory component and the ECM 200, such that as the inventory of the cart 10 is updated, the correlation component correlates the current inventory with the unique identity of the cart 10 and stores the correlation (preferably in the ECM 200), such that, at the Point of Sale 300, the ECM 200 may wirelessly communicate the correlation of the inventory and the unique identity of the cart 10. The correlation component may be further operably coupled to the locationing component, such that the correlation component may correlate the inventory, the unique identity, and the location of the cart, over the course of a shopping trip, store the correlation, and wirelessly communicate the correlation to the Point of Sale 300.

For example, the correlation component is operable to correlate data from the inventory component (discussed in greater detail below) regarding the inventory contained by the shopping cart, with data relating to the shopping list component (discussed below). In such an exemplary embodiment, the correlation component is operably coupled to the inventory component, the shopping list component, the ECM 200, and the video display 75, such that as the inventory of the cart 10 is updated, the consumer shopping list may be updated, as well as the shopping list displayed in the video display 75. The correlation may be stored in the ECM 200, or stored elsewhere in the network, associated with a specific consumer, and used to generate shopping lists in the future.

For example, the correlation component is operable to correlate data from the inventory component (discussed in greater detail below) regarding the inventory contained by the shopping cart, with data relating to which advertisements are displayed to a consumer by the cart. In such an exemplary embodiment, the correlation component is operably coupled to the locationing component, the video display 75 and the ECM 200, such that the correlation component receives the inventory from the inventory component, correlates it with advertisements that are stored or streamed to the ECM 200, and stores the correlation. The correlation may then be used in selecting which advertisement chosen from a plurality of advertisements are displayed based on the location of the cart. For example, if the inventory is known to include items for hosting a party, the correlation of the inventory with the advertisements and the location of the cart may be used to display one or more advertisements for additional items used for hosting a party.

The shopping cart system further comprises a shopping list component for listing one or more products of a consumer shopping list for purchase by the consumer. The shopping list component is operably coupled to the video display 75 of the cart 10 such that the shopping list may be displayed, either prominently, or as a less prominent display, with, for example, a menu of options or advertisements. In an embodiment, the shopping list component may comprise hardware, software, or a combination of hardware and software operable to carry out the function of maintaining, updating, and/or displaying a consumer shopping list. In an embodiment, the hardware and software are co-housed and affixed to the cart 10, while in another embodiment, the hardware may comprise a unit affixed to the cart 10 (as will be discussed below) and the software may be stored and/or executed from a separate unit, such as the ECM 200, the in-store server, POS computer 326 at the Point of Sale 300 or other networked system component, in conjunction with the hardware affixed to the cart.

In an embodiment, the shopping list component comprises the ECM 200 in conjunction with software operating thereon, populated with a consumer shopping list. In an embodiment, the consumer shopping list comprises historical data associated with the consumer by way of the consumer's loyalty card, pin code, telephone number or other consumer identifier associated with the consumer. The historical data relates to products that the consumer has purchased in the past or products that the consumer has listed in a consumer shopping list previously. Consumer identifiers comprise a data reference that is unique to the consumer or their household. For example, a consumer loyalty card may be associated with an identification number that is unique to the consumer or their household. Stores often offer consumer loyalty cards to consumers, which consumers use in order to enjoy coupons, discounts and other advantages provided by the store to its loyal consumers. The loyalty card may additionally be linked with store services, such as a pharmacy, in-store deli, automotive service station, and the like, to track and record the consumer's needs relating to that service. A consumer may additionally identify themselves to the store using a pin code assigned by the store or their telephone number in order to receive discounts, coupons, and track usage of the store's services. The store may use the identifiers to track shopping of consumers for inventorying purposes as well as targeting advertisements and discounts to consumers based on what they actually buy.

In an embodiment, the consumer shopping list for future shopping trips is generated by the inventory in the cart 10 during a present shopping trip. In such an exemplary embodiment, the shopping list component is operably coupled to the inventory component and the ECM 200 (or other networked component) to store the inventory of the cart 10 during a shopping trip, and store the purchases made based on the inventory at the Point of Sale 300. In such an embodiment, the stored inventory may be associated with a particular consumer by way of their consumer loyalty card, pin code, telephone number or other consumer identifier. The stored inventory may then be used by the shopping list component to generate a consumer shopping list.

In an embodiment, the consumer shopping list may be downloaded from a store website and associated with the consumer's identity, such that when the loyalty card is scanned or other identifier is entered, the consumer shopping list becomes available in the cart 10 to the consumer. In such an embodiment, when the consumer identifier is entered or scanned, the list downloaded from the store website may be streamed or wireless communicated from the in-store server via the access points to the ECM 200, and displayed. Alternatively, in an embodiment a shopping list stored in a PDA, handheld computer, mobile telephone or other electronic device may be downloaded to the ECM 200 through wireless, infrared, Bluetooth, and like known techniques, the details of which are not material herein, and the shopping list component will display the downloaded list, and enable the functions described herein. Alternatively, in an embodiment a shopping list may be emailed to the store system for transfer to a cart 10.

In still another embodiment, the consumer shopping list is generated based one or more products selected by the consumer; wherein the one or more products are selected by the consumer by scanning a bar code on a product, placing a RFID tagged product in the shopping cart 10, and downloaded by the consumer in a list. In such an embodiment, the ECM 200 is operably coupled to the inventory component to store the identity of products purchased by the consumer before to generate a list. In such an embodiment, the ECM 200 is operable to store the identity of products previously placed in the cart 10 by the consumer to generate a list.

In an embodiment, the shopping list component is operably coupled to the correlation component in conjunction with the ECM 200 (as discussed above) for correlating the inventory contained by the shopping cart 10 with the shopping list to determine which products on the list are present in the shopping cart 10.

In an embodiment, the shopping list component is operably coupled to the ECM 200, the locationing component and the video display 75 for displaying an advertisement on the video display 75 for a product on the shopping list when the cart 10 is located proximate to the product. In such an exemplary embodiment, the locationing component determines where the cart is located in the store, the shopping list component determines which products on the consumer shopping list are located nearby the cart based on its location, and the ECM 200 displays in the video display 75 at least one advertisement based on the cart 10 being located near to products on the shopping list.

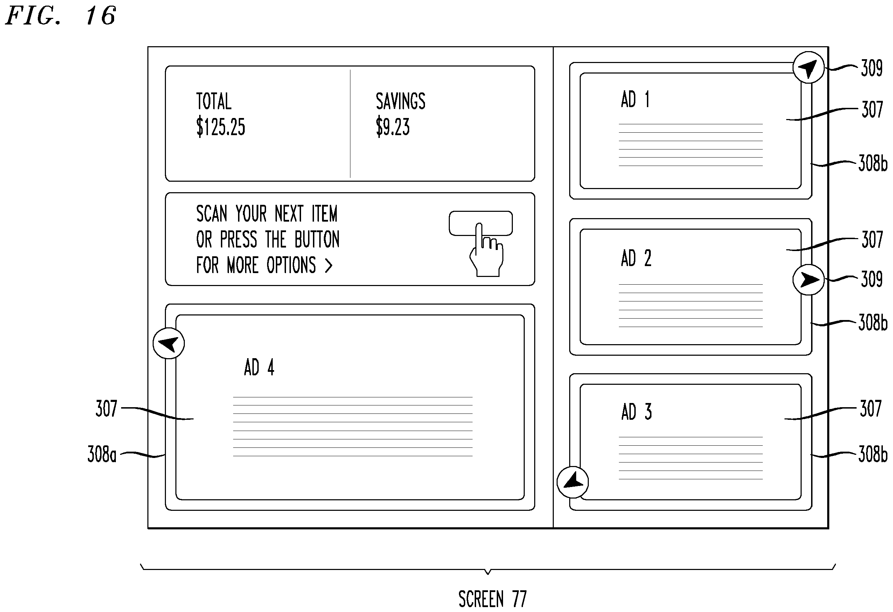

In use, in an embodiment, the consumer shopping list may be displayed in the video display 75 as a less prominent display with advertisements, or as a prominent display when selected by a consumer. By prominence, it is meant that the shopping list may be displayed as a larger, primary display on the video display 75 while advertisements are displayed in smaller, secondary display(s) on the video display 75 adjacent to the shopping list. As will be described further below, and as shown in Fig. 16, in an embodiment, the screen 77 of the video display 75 may be divided into a plurality of screen segments 308, such that one of the plurality of stored advertisements 307 may be displayed in various screen segment 308 while a shopping list may be displayed in a screen segment 308. In an embodiment, one of the plurality of screen segments 308 may be designated for display of consumer specific information, such as the consumer shopping list.

The shopping list component may organize the products on the consumer shopping list with locations in the store for each product on the list, and display the consumer shopping list according to location. For example, the shopping list component may organize all the products on the consumer shopping list according to a department of the store, or according to which aisle the products are located on, in order to facilitate shopping by the consumer.

In use, in an embodiment, the shopping list component, coupled to the correlation component, correlates the consumer shopping list to the inventory of the cart 10, such that when a RFID tagged product from the consumer shopping list is scanned by the basket RFID reader 227 or scanned by the scanner 215, the product is checked off the consumer shopping list. In an embodiment, the consumer may check off a product from the consumer shopping list. In the video display, the product may appear as checked off, or may be removed from the shopping list once added to the inventory of the cart.

In use, in an embodiment, the selection of advertisements displayed to the consumer may be correlated to the consumer shopping list by the shopping list component, the correlation component (as discussed herein) and the ECM 200 or other networked component.

In an embodiment, the shopping list component is further operable, in conjunction with the ECM 200 or other networked component, for a consumer to select a recipe, and generate a consumer shopping list based on the ingredients used for preparing the recipe. In such an embodiment, the consumer may select a recipe (either stored in the ECM 200, or streamed to the cart 10), and the ingredients necessary for preparing the recipe (also either stored in the ECM 200, or streamed to the cart 10) are added by the shopping list component to the consumer shopping list.

In embodiment, the shopping cart system further comprises a voice activated interface 120. In an embodiment, a voice activated interface 120 comprising a microphone array 121 and a voice activation button 122 may be inset in the handle 22 of the cart 10 and/or in pod 150. In an embodiment, the microphone array 120 may comprise any number of microphones, including as few as a single microphone, for example integrated with pod 150. In an embodiment, the microphone array 121 comprises from 2 to 4 embedded microphones inset at intervals along the length of the handle 22. In an embodiment, a voice activation button 122 may activate the microphone array 120. In an embodiment, the voice activation button 122 may comprise a button of a five-way navigation device 123 or other navigation device and the microphone(s) may be housed in the pod 150. By pressing the voice activation button 122, the consumer 85 may activate a voice command option, enabling the consumer 85 to request the cart 10 to display the location of a particular product or other detailed information from a list of options on the video display 75. In an embodiment, the microphone array 120 has built-in noise cancellation capabilities.

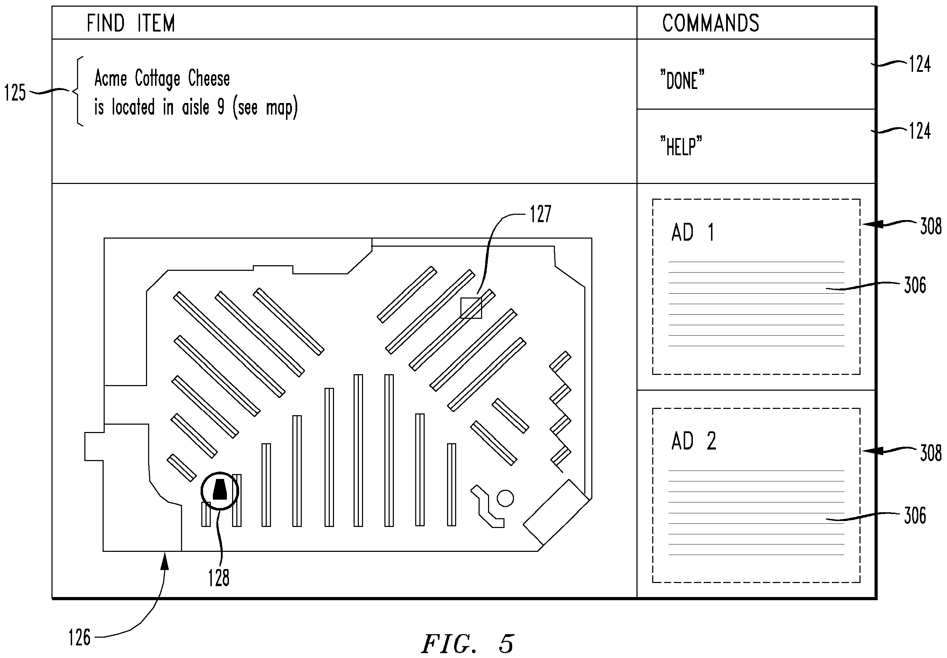

In an embodiment, the voice activated interface 120, microphone array 121 and voice activation button 122 are operably coupled to the ECM 200. In an embodiment, the ECM 200 may store voice recognition software operable to process a spoken input from the consumer 85 through the microphone array 121 upon activation of the voice command option. The ECM 200 may determine an answer to the spoken question (which may involve reference to a database of product information) and display the answer on the video display 75. The answer may be provided graphically or in written description form, and may include a location (e.g., map) or a menu of options 124. For example, referring to Fig. 5, an exemplary response to a spoken input is shown. Upon a request by a consumer 85 being picked up by the microphone array 121, the video display 75 may identify the product requested (i.e. "ACME cottage cheese"), and display a written description 125 of the location of the product requested, as well as a graphical display 126 of a map of the store indicating the location 127 of the product requested with indication of the current location 128 of the cart. The video display 75 may simultaneously display a list of other options 124, e.g., a list of available voice commands, as well as one or more advertisements 306 in the plurality of screen segments 308, wherein the advertisements 306 are selected from a plurality of stored advertisements, as will be described in greater detail herein.

In an embodiment, the voice recognition software may comprise VoCon 3200^{™} software, commercially available from SCANSOFT^{™} or an equivalent software having similar voice recognition capabilities. In an embodiment, the voice activated interface 120, operably coupled to the ECM 200, may be re-activated from hibernation along with the ECM 200 when the motion sensor(s) 36 detects that the cart 10 is in motion.

In embodiment, the shopping cart system further comprises a speaker or other audio output device such as wired or wireless headphones operably coupled to the ECM 200. In an embodiment, a speaker or array of speakers may be inset in the handle 22 of the cart 10 and/or in pod 150. In an embodiment, the array of speakers may comprise any number and/or size of speakers, including as few as a single speaker, for example integrated with pod 150. In an embodiment, the speaker is a one inch audio speaker.

In an embodiment, the speaker may be operable to play audio portions of advertising corresponding to advertisements displayed on the video display 75. In an embodiment, the speaker may be operable to make announcements, such as a store announcement, or annunciate a successful scan, by audibly alerting the consumer when a product is scanned by the scanner 215 or when a RFID tagged product is added to the cart 10. In an embodiment, the speaker enables a customer service representative to speak with a consumer using the cart, resulting in saving the consumer from having to go stand in line at a customer service counter. In an embodiment, the speaker enables a store employee to speak with a consumer using the cart to alert the consumer to the status of their order at an in-store service such as a deli, pharmacy or automotive center.

The shopping cart system further comprises an inventory component for determining an inventory contained by the cart 10. The inventory component is operable to take an inventory of products placed in the basket 20 or products placed on the base tray 50. The inventory component may, in an embodiment, be operable to determine the inventory automatically without any action on the part of the consumer beyond placing a product in the cart 10. Alternatively, the inventory component may, in an embodiment, rely on some action by the consumer in order to determine the inventory of the cart 10, such as determining the inventory of the cart 10 when the consumer scans a product and places the product in the cart 10.

In an embodiment, the inventory component comprises hardware and software operable to carry out the inventorying function. In an embodiment, the hardware and software are co-housed and affixed to the cart 10, while in another embodiment, the hardware may comprise a unit affixed to the cart 10 (as will be discussed below) and the software may be stored and/or executed from a separate unit, such as the ECM 200, the POS computer 326 at the Point of Sale 300 or other networked system component, in conjunction with the hardware affixed to the cart. Various computing and communication components may use any suitable wired or wireless communications protocol such as those described herein.

In use, in an embodiment, the inventory component, in conjunction with the ECM 200 and the correlation component, is operable (as discussed above) to determine the inventory contained by a shopping cart, correlate the inventory to the unique identity of the shopping cart, convey the unique identity of the shopping cart to a Point of Sale 300 (or other retailer system), and convey the inventory of the shopping cart to a Point of Sale 300 (or other retailer system).

In use, in an embodiment, the inventory component is operably coupled to the ECM 200 and the identification component (discussed in greater detail herein). The identification component associates a unique identity with a shopping cart and the inventory component determines an inventory of the shopping cart. The correlation component (discussed in greater detail herein) correlates the inventory to the unique identity of the shopping cart, and the ECM 200 conveys the inventory of the shopping cart, or the correlation of the inventory to the unique identity to a retailer system, or the identification component conveys the unique identity of the shopping cart, or any combination thereof.

In use, in an embodiment, the inventory component determines an inventory contained by the cart 10. The inventory component is operable coupled to the shopping list component, the correlation component (both discussed in greater detail herein), the ECM 200 and the video display 75. The inventory component determines the inventory contained by a shopping cart, the shopping list component displays on the video display 75 a consumer shopping list, the shopping list comprising one or more products for purchase. The correlation component correlates the inventory contained by the shopping cart with the shopping list to determine which products on the list are present in the shopping cart; and convey the inventory and the shopping list to a Point of Sale 300 at the time of purchase. Preferably, conveying the inventory and shopping list to the Point of Sale 300 is done wirelessly by the ECM 200, for example via any suitable wireless protocol such as those described herein.

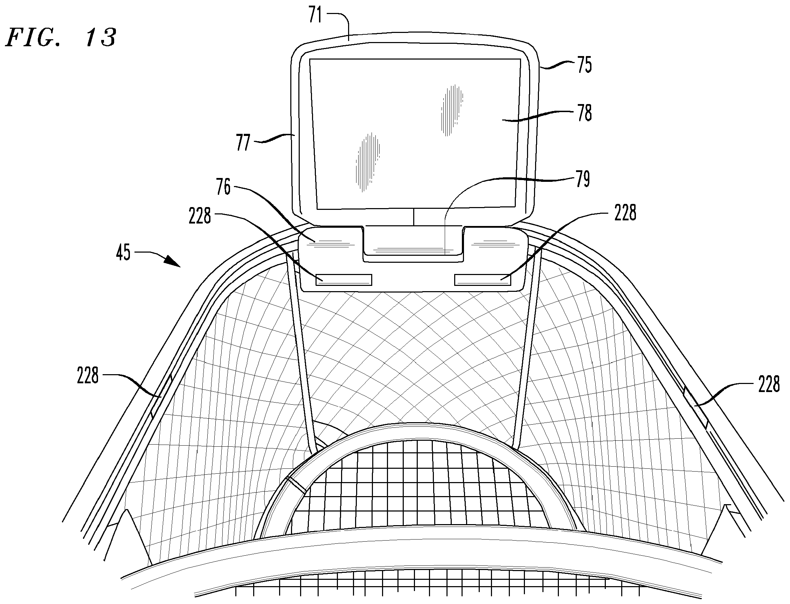

In an exemplary embodiment, the inventory component may comprise at least one basket RFID reader 227 with one or more RFID antennas 228 in conjunction with the ECM 200 and software operating thereon. The number and position of the antennas 228 may be selected as functionally needed, as would be apparent to one of skill in the art. In an embodiment, the basket RFID reader 227 with RFID antennas 228 may be located anywhere on the basket 20 and/or base tray 20 such products having RFID tags (either passive or active RFID tags) may be scanned as they are placed in the basket and/or base tray 20. Each RFID tag on a product is associated with an industry standard Electronic Product Code ("EPC"), giving the individual product a unique identity. In an embodiment, the basket RFID reader 227 may be integrated with the ECM, for example located within housing 199. Alternatively, the basket RFID reader 227 or may be located at other positions on the cart, for example located on the underside of the cart 10, secured by means of attachment to, for example, the bottom 21 of the basket 20, or to the base tray 50. In an embodiment, the basket RFID reader 227 and/or the antennas 228 may be integrated with the video display 75, for example as part of the base 76 as shown in Fig. 13. Alternatively, the RFID antennas 228 may be located along the edges 26, 27 or 29 as shown in Fig. 13; the side walls 23, 24; front side wall 28; rear side wall 31, or combinations thereof on basket 20 and/or base tray 50.

As products are placed in the basket 20 and/or base tray 50, and identification information (including, in an embodiment, the product EPC described above) is provided to the ECM 200, which may be further correlated with additional information such as price, product information, advertising, etc. In an embodiment, information may further be displayed on the video display 75, for example information pertaining to the product placed in the basket, added to a running total of the products in the cart 10, etc. The basket RFID reader 227 with RFID antennas 228 may automatically detect when an product has been removed from the cart 10 and placed back on a shelf, and will convey to the ECM 200 that the product has been removed, thus deducting the removed product from the running total displayed on the video display 75. The network transceiver 204 may additionally convey information about a product placed in or removed from the cart 10 to various network components as will be described in greater detail herein. In an embodiment, the cart 10 is a plastic cart as described herein which lessens or eliminates interference associated with basket RFID reader 227 and RFID antennas 228. In an embodiment, the cart 10 is a cart comprising metal, plastic, or a combination of plastic and metal that is retrofitted with the media enhancements described here.

In another exemplary embodiment, the inventory component alternatively or additionally comprises a scanner 215, for example a bar code scanner. In an embodiment, the scanner 215 is inset in the handle 22 and/or in pod 150 of the cart 10. In an embodiment, the scanner 215 may be attached to or incorporated with any portion of the basket 20, such as the side wall 23 or 24, the front side wall 28 or the rear side wall 31, in a manner that is accessible to the consumer 85 who is using the cart 10. Various attachment devices and means for attaching as described herein may be used with the scanner 215. The scanner 215 enables optional self-scanning of products for purchase, coupons, loyalty cards, and any other object having a bar code or Universal Product Code ("UPC") by the consumer 85. In an embodiment, the scanner 215 may be activated by the consumer 85 by bringing any product with a barcode symbol within a set proximity of the scanner 215. In an embodiment, the scanner 215 may be activated by a proximity sensor 216, which may comprise a portion of the scanner 215 or may be operably coupled to the scanner 215. Like the scanner 215, the proximity sensor 216 may likewise be integrated with pod 150. The scanner 215 may be any suitable scanner such as a laser scanner, CCD scanner, 2D imager, and the like. In an embodiment, the scanner 215 may comprise a linear imager scanner commercially available from HAND HELD PRODUCTS^{™} or an equivalent or improvement thereof. The scanner 215 may, in an embodiment, scan symbols, such as a UPC or European Article Numbering ("EAN") System codes, in an omnidirectional manner.

In an embodiment, the inventory component may comprise the scanner 215, in conjunction with the ECM 200 and software operating thereon. In an embodiment, the inventory component is operable to determine the contents of the shopping cart based on what products the consumer 85 has scanned and placed in the shopping cart. In an embodiment, the scanner 215 is operably coupled to the ECM 200, such that as products are scanned and placed in the cart 10, the ECM 200 stores in local memory 202 a running total of the products in the cart 10 for purchase. Upon arriving at the checkout counter, known as the Point of Sale 300, the ECM 200 may communicate information regarding the products that were scanned by the consumer 85 to a POS computer 326 at the Point of Sale 300 or other networked system component, to be discussed in greater detail herein.

In an embodiment, the scanner 215, operably coupled to the ECM 200, may be hibernated or re-activated from hibernation along with the ECM 200 when the motion sensor(s) 36 detects that the cart 10 is in motion or stopped. Specifically, in an embodiment, the scanner 215 may be hibernated, or powered down, for power conservation purposes, when the cart 10 is in motion. When the consumer 85 stops pushing the cart 10 and the cart 10 becomes still while the consumer 85 is selecting products to purchase, the scanner 215 is re-activated such that the consumer 85 may scan products for purchase and place them in the cart 10. The motion sensor(s) 36 alone or in combination with other locator or positioning systems/ data (for example, RFID scans and/or other locator/positioning means) enable this hibernation/reactivation function of the scanner 215. In alternative embodiments, other cart systems may be activated or deactivated based upon detection of motion or stoppage of the cart in order to conserve power and maximize battery life. For example, the bar code reader may be turned off when the cart is moving, the RFID reader/antennae may be turned off when the cart is stopped, the video display may be turned off when the cart is nested or is immobile for an extended time, or combinations thereof. Again, motion of the cart may be detected for example via a motion sensor such as a reed switch and/or mercury switch alone or in combination with other sensing means such interpreting read data from the RFID tags.

In an embodiment, the shopping cart system may further comprise a navigation device, for example a five-way navigation device 123. In alternative embodiments, other navigation devices may be used in addition to or in lieu of the five-way navigation device 123, for example hard or soft hot buttons, a joystick, touch panel/screen, or combinations thereof. As an additional user interface to the ECM 200 and other features of the cart 10, in an embodiment, a five-way navigation device 123 may be inset in the handle 22 or in the pod 150. The five-way navigation device 123 typically allows for input (e.g., navigation of a menu) via up, down, left, right, and enter functions. In an embodiment, the five-way navigation device 123 may be used to activate the microphone array 121 for voice recognition features, or may be used to navigate through a menu of options 124 shown on the video display 75. In an embodiment, the menu of options 124 may comprise such selections as: 1) a "Help" option, enabling the consumer 85 to request the location of a particular product, 2) an interface with an in-store pharmacy for the consumer 85 to request the status of their prescription or receive notification of prescription availability, 3) an interface with an in-store deli for the consumer 85 to make a deli order or receive notification of order availability, 3) an interface for notification to the consumer 85 of completion of in-store auto servicing, 4) an interface for interaction between the consumer 85 and customer service personnel for services such as rain checks, and other functions for in-store services.

In an embodiment, the shopping cart system may further comprise theft and tamper deterrence design features. The shopping cart, due to the nature of the electronic components used as well as the programming in the computer, may be targeted for theft and tampering. To this end, the various electronics assemblies for the components discussed herein are designed such that if a given cart is disassembled without customized tools and/or in an improper sequence of disassembly, the electronics assemblies are rendered non-functional by virtue of damage incurred by improper disassembly.

For example, the main logic board of the ECM 200 may be designed having the printed circuit board traces laid out with critical circuit traces residing in close proximity to mounting holes, such as within a few thousands of an inch from the mounting hole. The logic board then would be mounted to the casing and ECM 200 frame using a screw with a customized head, thereby requiring a customized tool for putting in or removing the screw. If the board is subsequently forced from the casing by someone lacking the customized tool, the critical traces would be damaged, and the board would be non-functional to a degree beyond repair without design schematics for the printed circuit board.

In another example, the LCD video display includes theft deterrence and tampering design features. The video display may include two primary physical elements, namely the LCD display screen and the LCD controller board that interfaces the LCD display screen via a flex circuit. The flex circuit connections to the LCD display screen are fragile and will not withstand flexing or pulling. A thin, insulating metal retaining bar may be added that runs the length of the flex circuit between the LCD display screen and the LCD controller board, and secured in place by a screw or screws with a customized head, thereby requiring a customized tool for removal. If the metal retaining bar is not removed using the appropriate customized tool and in a particular sequence that avoids flexing or pulling the flex circuit connections, the LCD assembly would be rendered non-functional to a degree beyond repair.

In an embodiment, the cart further comprises a battery 135 operably coupled to the ECM 200, the video display 75, voice activated interface 120, the bar code scanner 215, and any other component of the cart requiring power. In an embodiment, the battery 135 is a standard Lithium-Ion battery or other similar battery. In an embodiment, the battery 135 may be attached to the underside of the cart 10, by means of attachment to, for example, the bottom 21 of the basket 20, or to the base tray 50. Various attachment devices and means for attaching as described herein may be used with the battery 135. In an embodiment, the battery 135 may be integrated with the ECM 200. For example, a battery housing or compartment may be integrally molded from plastic with the ECM 200 housing 199 such that the battery is part of the ECM 200. In an embodiment, the battery 135 is rechargeable.

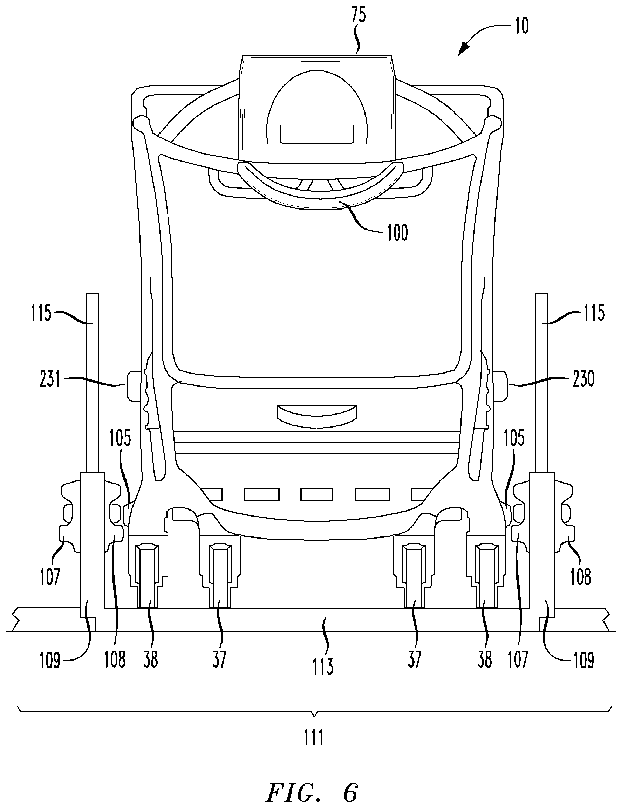

Referring to Figs. 6, 7, and 8, in an embodiment, the cart 10 may further comprise one or more battery charger contact plates 105. Fig. 6 is a front view of a cart 10 recharging in a recharge stall 111. In an embodiment, the battery charger contact plate 105 may be located on the base side member 32 and/or 33, the side member 16 and/or 17, or the side wall 23 and/or 24. For example, as shown in Figs. 1 and 6, a single battery charger contact plate 105 may be disposed on each side of cart 10, thereby providing a pair of battery charger contact plates for each cart. In an embodiment, the battery charger contact plates may be positioned adjacent the rear wheels 38, for example on the base side members 32, 33 slightly above the real wheel mount. Given that the rear wheel span is typically about the widest part of the cart, as can be seen in Fig. 6, positioning of the battery charger contact plates near the rear wheels places them in a low, outboard position on the cart that is useful in engaging a charge rail system 106 for recharging the battery. In an embodiment, the battery charger contact plate 105 may be spring-loaded to aid in contacting the contact plate with a charge rail.

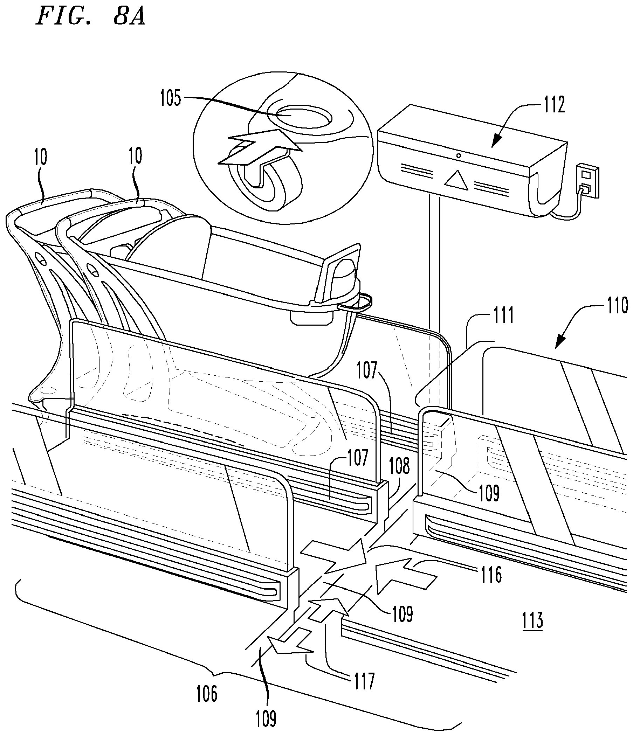

Fig. 8A is a side view of charge rail system 106 for recharging the battery 135 of one or more carts 10. The charge rail system 106 comprises a cart corral 110 having a plurality of recharge stalls or lanes 111, with each recharge lane having charge rails 107 and 108. In an embodiment, the recharge stalls 111 comprise a plurality of charge rail segments 109. In a store, the plurality of charge rail segments 109 comprised of charge rails 107 and 108 may be arranged in a cart corral 110. The plurality of charge rail segments 109 may be arranged in one or more rows of recharge stalls 111.

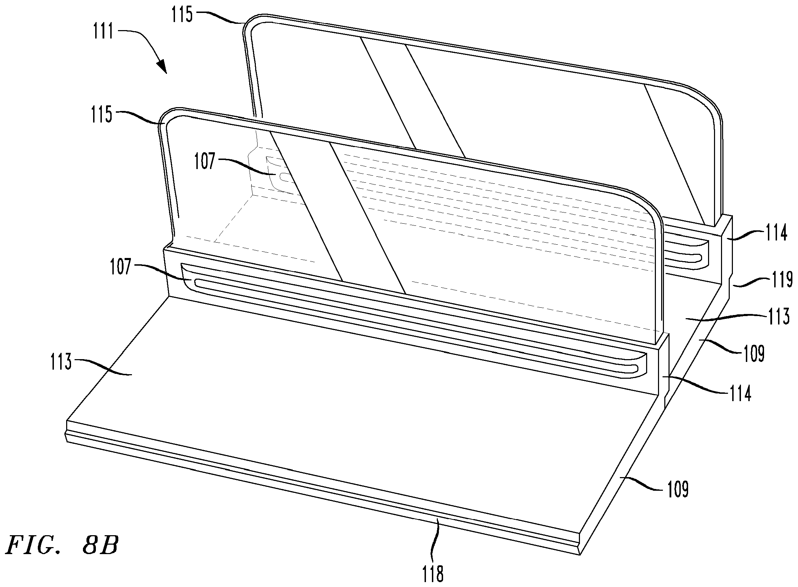

Fig. 8B is a side view of two charge rail segments 109 forming a single recharge stall 111. Each charge rail segment 109 comprises a floor section 113, a charge rail wall 114, and optionally a stall wall 115, which may be transparent as shown in the Figures or may be non-transparent. Charge rails 107, 108 are disposed on either side of charge rail wall 114, as is shown more clearly in Fig. 6. In an embodiment, a plurality of charge rail segments 109 may attach together in an end-to-end fashion (as indicated by reference arrows 116) or in a side-to-side fashion (as indicated by reference arrows 117) to form the recharge stalls 111 and cart corral 110. As shown in Fig. 8B, the side edge 118 of the floor section 113 may be configured to mate or interlock with the side edge 119 of charge rail wall 114 of an adjacent charge rail segment 109. Likewise, front and rear edges 129, 130 of the floor section 113 may configured to mate or interlock with corresponding front and rear edges from adjacent charge rail segments 109.

In an embodiment, the charge rail system 106 further comprises a power supply 112 which may be mounted on a wall or other permanent fixture for providing power to the carts 10. The power supply 112 may be plugged in and operably connected to the charge rails 107 and 108. Likewise, the plurality of charge rail segments further comprise connections such that power is supplied to the entire cart corral grid via the connection of adjacent charge rail segments 109.

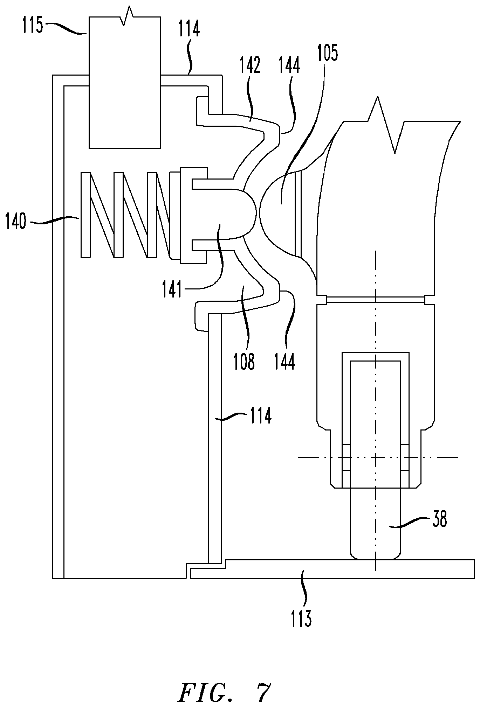

In operation, a cart 10 may be fed into a cart corral 110 by a consumer 85 or store employee placing it in a recharge stall 111. In an embodiment, the recharge stall 111 may be sized such that the charge rail segments 109 are spaced apart adequately (e.g., about equal to the rear wheel span of the cart 10) such that the cart 10 fits between the charge rail segments 109 securely enough for the battery charger contact plate 105 to come into contact with the charge rails 107 and 108, as shown in Fig. 7. Contact between a battery charger contact plates and charge rails 107 and 108 forms a flow path for electrical current between power source 112 and the battery 135 such that the battery is charged. Rechargeable batteries are well known in the art, as are methods of charging such rechargeable batteries from a power source. In an embodiment, a first contact plate 105 and a first charge rail (e.g., 107 or 108) form a positive terminal of the electrical connection and a second contact plate 105 and a second charge rail (e.g., 107 or 108) form a negative terminal of the electrical connection. While dual contact plates and charge rails are shown, the charge rail system may be configured to operate using a single contact plate 105 on the cart and/or a single charge rail 107 or 108.

In an embodiment, each charge rail 107 or 108 may be spring loaded, each battery charger contact plate 105 may be spring loaded, or both may be spring loaded. In an embodiment shown in Fig. 7, the charge rail 107 further comprises a spring 140 biasing a rail plate 141 outward for contact with the battery charger contact plate 105 located on the cart. The rail plate 141 may be surrounded by rail guard 142. The rail guard 142 may be configured to allow contact between the contract plate 105 and the rail plate 141 while preventing unwanted contact with rail plate 141 which might lead to electrical shock. In an embodiment shown in Fig. 7, the rail guard 142 has a concave shape with the rail plate 141 extending outward a portion of depth of the concave cavity, but not beyond the outer edges 144 of the rail guard 142. The contact plate 105 may have a corresponding convex shape, thereby allowing contact between the contact plate 105 and the rail plate 141. When a cart 10 is fed into a recharge stall 111, the cooperative shapes and spring loaded nature of the battery charger contact plate 105 and/or the charge rail 107 or 108 cause them to be in contact with each other, creating an electrical conductor between the battery 135 and the power source 112. While Fig. 7 is shown with a single charge rail 108 (for example, for use as an end rail assembly for attachment on end 118 of Fig. 8B to form a complete stall 111), it should be understood that typically two charge rails 107 and 108 will be used in a back-to-back or mirror configuration, as is shown in Fig. 6. The components of the two charge rails 107 and 108 will be similar to the components shown in Fig. 7 for charge rail 108.

In an embodiment, the plurality of charge rail segments 109 are further configured to form a cart corral 110 such that a plurality of carts may be nested and stored therein, and each of the plurality of carts may be charged at the same time by the contact between each battery charge contact plate 105 of each cart with the charge rails 107 and 108. For example, some or all of the carts in a store may be placed in the recharge stalls 111 of the cart corral 110 during off-hours or hours when the store is closed in order for the battery 135 of each cart 10 to be recharged for the next day or busy period of time.

In alternative embodiments, the contact plates 105 may be positioned at other locations on the cart 10 and the charge rail system 106 may be modified accordingly to provide contact with such plates as described previously. In an embodiment, contact plates 230, 231 are positioned adjacent to and/or integral with ECM 200 as shown in Figs. 6 and 12, which may be advantageous in simplifying and shortening the flow path between the charge plates and the battery 135, especially when the battery 135 in integrated in ECM 200. Contact plates 230, 231 would typically be used in lieu of contact plates 105, as shown in Fig. 12, provided however that dual sets of contact plates 105 and 230, 231 could be used if desired as shown in Fig. 6. The location of charge rails 107 and 108 would be modified, for example raised and/or extended, to engage with contact plates 230, 231 positioned adjacent to and/or integral with ECM 200. Likewise, the contact plates 230, 231 could be mounted in a position extending outward from the ECM 200 as needed to facilitate engagement with the charge rails 107 and 108. For example, contact plates 230, 231 may be mounted on protruding or bulbous ECM 200 side plates 235, as shown in Fig. 12.

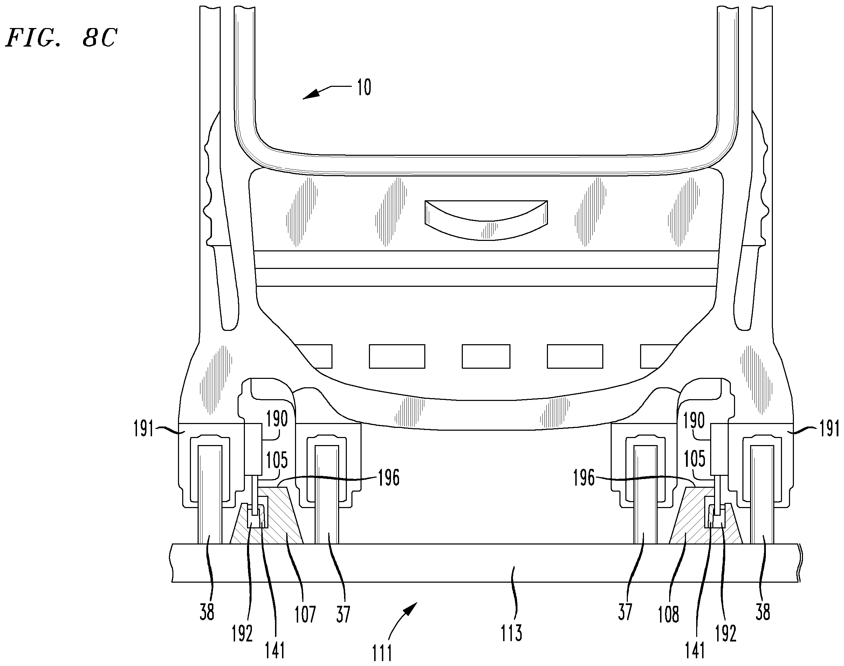

An alternative charge rail configuration is shown in Figs. 8C-E. The recharge stall embodiment shown in Figs. 8C-E may likewise be modular in nature as described herein. Fig. 8C is a partial front view of cart 10 recharging in a recharge stall 111. A charging module 190 is mounted to the wheel yoke 191 of rear wheels 138, for example via one or more bolts or other connectors. In an alternative embodiment, the charging module 190 may be mounted to the frame 30 or the underside of base tray 50. Preferably, the charging module 190 is mounted inboard of the rear wheels 38 and outboard of the front wheels 37, and more preferably on the interior side of rear wheel yoke 191. A battery charger contact plate 105 extends downward from the charging module 190. The battery charger contact plate 105 may be spring loaded to aid in contacting the contact plate with a charge rail.

Charge rails 107 and 108 extend upward from the floor section 113 of recharge stall 111. As shown in Fig. 8C, when a cart 10 is positioned in a recharge stall 111, the charge rails 107, 108 are positioned inboard of the rear wheels 38 and outboard of the front wheels 37 and serve to guide the cart into the proper position for recharging. While positioned in recharge stall 111, the battery charger contact plates 111 enter slots 192 on charge rails 107, 108 and make contact with rail plate 141 such that electricity may pass from the recharge stall 111 and charge battery 135. Rail plate 141 may be spring loaded in addition to or in lieu of spring-loading the battery charger contact plate 105 to aid in contact there between. The slots 192 in charge rails 107, 108 may be fully or partially covered by a flexible material such as plastic or a nylon brush to prevent debris from entering the slots 192. Such flexible material may be pushed aside by the battery charge plate 105 as it enters the slots 192.

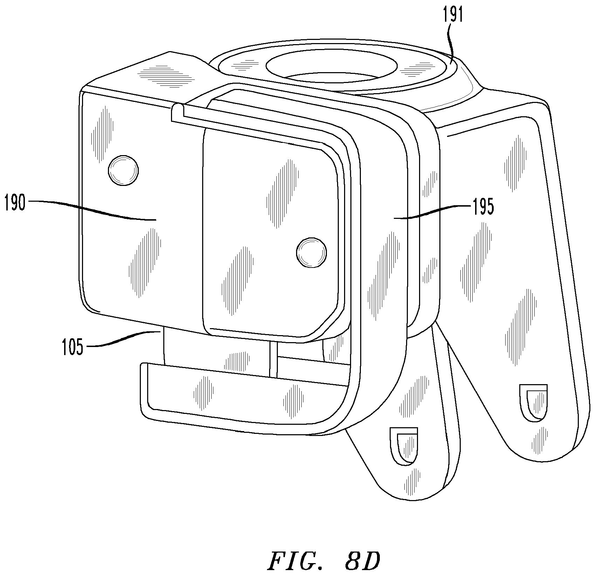

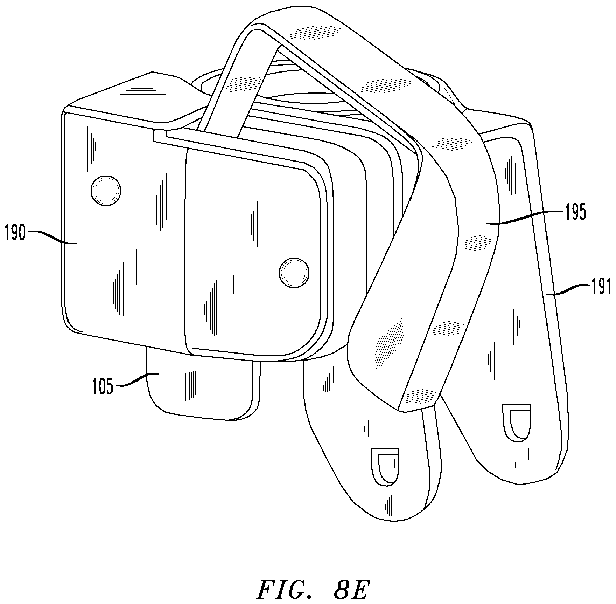

As shown in Figs. 8D and 8E, the charging module 190 may further comprises a contact plate cover 195. As shown in Fig. 8D, when the cart is not in a charge stall 111, the contact plate cover 195 extends downward to cover and protect the battery charge plate 105. As shown in Figs. 8D and 8E, the contact plate cover 195 may comprise a generally U-shaped member having a gap or protective arm extending there from for receipt of the battery charge plate 105 in a closed position. The contact plate cover 195 may be biased in a closed position, for example with a spring. When a cart is positioned inside a recharge stall 111, the contact plate cover 195 is pushed upward via contact with an upper portion 196 of charge rails 107, 108, thereby placing the contact plate cover 195 in an open position as is shown in Fig. 8E.

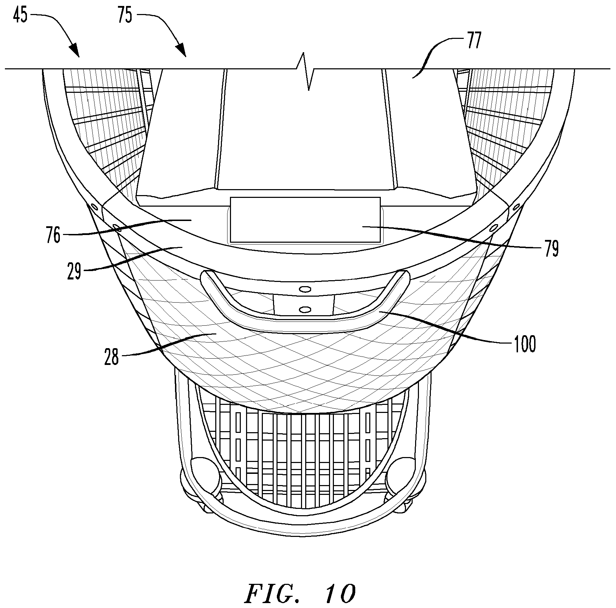

As shown in the Figures, a video display 75 is attached or mounted (referred to collectively hereinafter as attached) to the basket 20 of the shopping cart 10. Attachment of the video display 75 to the basket 20 is in contrast to attachment of the video display 75 to the handle 22. In other words, the video display 75 is not attached or mounted to the handle 22. As shown in Fig. 10, the video display 75 may comprise a base 76 and a screen 77 having a viewable area 78. In an embodiment, the video display 75 is attached to the basket 20 such that the viewable area 78 is above the interior 54 of the basket as previously defined. Unless otherwise specified, attaching the video display such that the viewable area is above the interior 54 of the cart includes, in various alternative embodiments, having the viewable area 78 entirely above the interior 54; having the viewable area 78 substantially above the interior 54; or having greater than 50, 60, 70, 75, 80, 85, 90, 95, or 99 percent of the viewable area 78 above the interior 54.

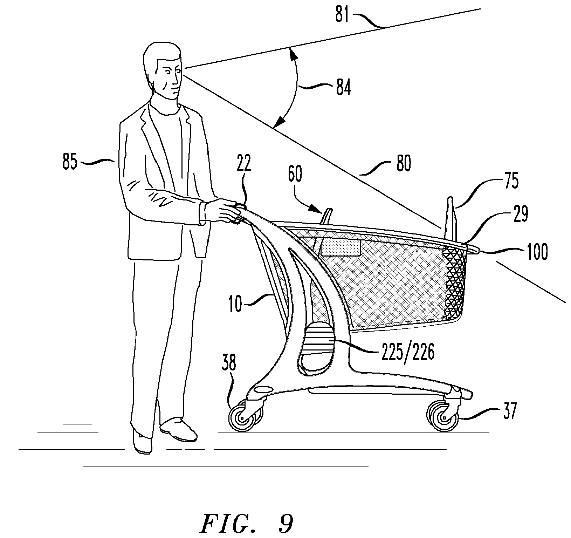

In another embodiment, the video display 75 is attached to the basket 20 such that the viewable area 78 is in a field of vision 84 of a consumer 85 pushing the cart 10 via the handle 22. Referring to Fig. 9, field of vision 84 refers to the area having a lower boundary 80 defined by an unobstructed line of sight from the eyes of consumer 85 to the an upper edge of the basket (e.g., front edge 29) and an upper boundary 81 defined by a line of sight from the eyes of the consumer 85 to an upper periphery of the consumer's vision. Unless otherwise specified, attaching the video display such that the viewable area is in consumer's field of vision 84 includes, in various alternative embodiments, having the viewable area 78 entirely in the field of vision 84; having the viewable area 78 substantially in the field of vision 84; or having greater than 50, 60, 70, 75, 80, 85, 90, 95, or 99 percent of the viewable area 78 in the field of vision 84. The field of vision 84 may vary based upon the height of the consumer 85, and in an embodiment the shopping cart 10 is configured and the video display 75 is attached to the basket 20 such that the viewable area 78 is in a field of vision 84 of a consumer 85 having a height of equal to or greater than 5 feet and 0 inches. The field of vision 84 may also vary based upon the position of the child seat 60 or the presence of a child seated therein, and in an embodiment the shopping cart 10 is configured and the video display 75 is attached to the basket 20 such that the viewable area 78 is in a field of vision 84 of a consumer 85 having a height of equal to or greater than 5 feet and 0 inches when the child seat 60 is empty and folded in a closed position. The field of vision 84 may also vary based upon the position of products in the basket, and in an embodiment the shopping cart 10 is configured and the video display 75 is attached to the basket 20 such that the viewable area 78 is in a field of vision 84 of a consumer 85 having placed products in the basket, wherein said products do not extend outside or above the interior 54 of the basket as previously defined.

In another embodiment, the video display 75 is attached to an upper edge 26 or 27, or front edge 29 of the basket 20. For example, the base 76 of the video display 75 may be attached to an upper edge 26 or 27, or front edge 29 of the basket 20. Various attachment devices and means for attaching as described herein may be used with the video display. In an embodiment, the base 76 of the video display may be attached to an upper edge 26 or 27, or front edge 29 of the basket 20 such that the viewable area 78 is above the interior 54 of the basket as discussed previously. In an embodiment, the base 76 of the video display may be attached to an upper edge 26 or 27, or front edge 29 of the basket 20 such that the viewable area 78 is in a field of vision 84 of a consumer 85 pushing the cart 10 via the handle 22 as discussed previously.

In another embodiment, the base 76 of the video display may be attached to walls 23 or 24, front side wall 28, and rear side wall 31 on the interior or the exterior of the basket 20. In an embodiment, the base 76 of the video display may be attached to a wall 23 or 24, front side wall 28, and rear side wall 31 on the interior or the exterior of the basket 20 such that the viewable area 78 is above the interior 54 of the basket as discussed previously. In an embodiment, the base 76 of the video display may be attached to a wall 23 or 24, front side wall 28, and rear side wall 31 on the interior or the exterior of the basket 20 such that the viewable area 78 is in a field of vision 84 of a consumer 85 pushing the cart 10 via the handle 22 as discussed previously.

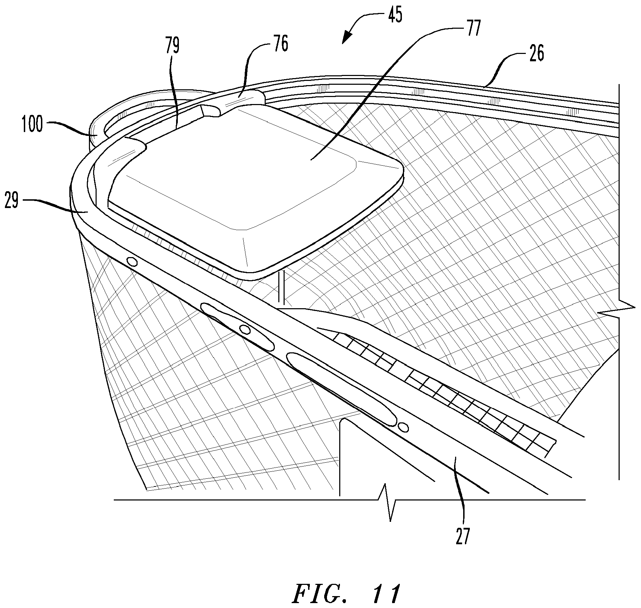

In another embodiment, the video display 75 is attached to the nose 45 of the cart 10. The nose of the cart 45 is a well known area to those skilled in the art. In various embodiments, nose of the cart 45 refers to the frontward most 1/3 of the basket 20, alternatively the frontward most ¼ of the basket, alternatively the frontward most 1/5 of the basket, alternatively the frontward most 1/10 of the basket, alternatively the front wall 28, alternatively front edge 29. In an embodiment, the nose of the cart is shown in Fig. 10 or Fig. 11. In various embodiments, the video display may be attached to the nose of the cart via a wall or an upper edge as described previously and the viewable area 78 may be above the interior 54 of the basket and/or in a field of vision 84 of a consumer 85 as described previously. In an embodiment, the base 77 of the video display 75 is shaped to conform to or about match the contour or shape of the nose 45 of the cart 10, as is shown in Figs. 10 and 11.

The video display may be any suitable electronic display for receiving and displaying visual images to the consumer 85. The visual images may be transmitted to the video display by any suitable means known in the art such as via a wireless transmission. In an embodiment, the video display is of a type commonly referred to as a flat screen display, for example a liquid crystal display (LCD). The video monitor may be powered by a rechargeable battery 135 attached to the cart 10 and operatively coupled to the video display 75.

In another embodiment, the video display 75 is attached to the basket 20 and is foldable or retractable for storage. For example, the video display may fold or retract into the interior 54 of the basket for storage when the cart is not in use. In an embodiment, the video display is configured to fold or retract such that a plurality of carts 10 may be nested for storage as shown in Fig. 12 without damaging the video display 75. For clarity, the outer cart in Fig. 12 is shown without rear side wall 31, with the understanding that rear side wall 31 would typically be present in carts used by a consumer.

In an embodiment, the base 76 of video display 75 forms a housing in which screen 77 may retract. Such housing receives screen 77 in a retracted position and protects the screen 77 from damage. The screen 77 may be retracted into such a base housing (comprising a front base housing 96 and a rear base housing 97) by known means such as rails, slides, rollers, telescoping members, and the like, which may be further biased, for example by springs, as needed. The screen 77 may be retracted to a closed position by pushing on the top 71 of screen 77 where the screen 77 is biased up, or by releasing a latch or lock where the screen 77 is biased in a retracted position. In an embodiment, the screen 77 is folded down by contact with another cart when nested therewith as shown in Fig. 12 and is biased up such that the screen flips up upon unnesting of the carts.

In another embodiment as shown in Fig. 13, the video display 75 comprises a hinge 79 between the base 76 and the screen 77, which allows the screen 77 to fold downward toward the interior 54 of the basket into a folded position as shown in Figs. 10 and 11. In an embodiment, the screen 77 folds at about a 90 degree angle with respect to the base 76 (or alternatively folds such that the screen 77 is about within the plane defining the upper edges of the cart), which clears the nose 45 and exterior of the cart for nesting with a second cart while also keeping the interior of the cart 10 clear such that the rear side wall 31 may swing upward into the interior 54 of the basket to receive the front side wall 28 of a third cart.

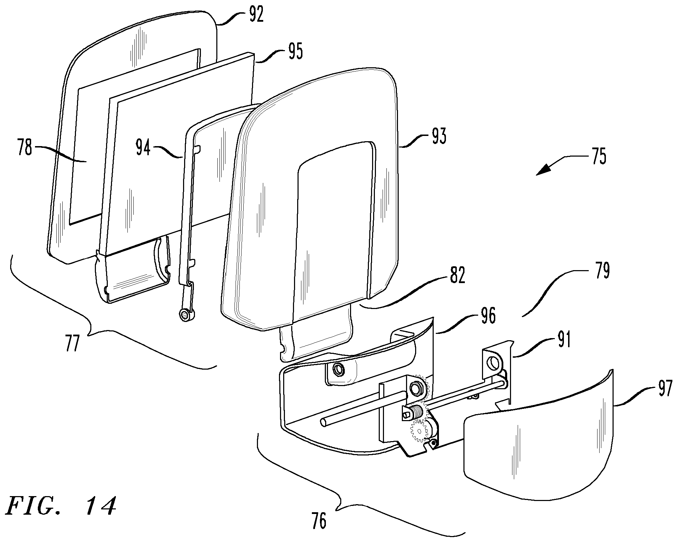

With reference to Fig. 14, the screen 77 of video display 75 may further comprise a shock absorber 94 protecting an electronic display 95 such as an LCD screen, each of which are disposed between front and rear screen housings 92, 93. The base 76 of video display 75 may further comprise a hinge 79 disposed between front and rear base housings 96, 97. The hinge 79 may further comprise a gear assembly 91 comprising gears, springs, dampeners, or combinations thereof for biasing the hinge in a folded or unfolded position. The gear assembly 91 may be used to control the force required to fold the screen 77 into a folded position, as shown in Figs. 10 and 11, in response to a force applied to a rear screen housing 93 of the video display 75. Likewise, the gears assembly 91 may be used to control the speed with which the screen 77 unfolds into an unfolded position such as shown in Figs. 1-3. In an embodiment, the screen 77 unfolds in a slow, controlled manner to avoid damaging the screen 77. In an embodiment, the unfolding of the screen is dampened via dampeners in the hinge 79 and/or gear assembly 91.

In another embodiment, the video display 75 is attached to the basket 20 and may be swiveled such that the viewable area 78 may be viewed from various locations relative to the cart 10. A swivel may be positioned between the base 76 and the screen 77 such that the screen 77 may rotate or swivel about the base. The swivel may be integrated with the hinge 79, or alternatively may be a separate component, for example positioned between the hinge 79 and the screen 77. In embodiments where the video display is mounted on a side edge 26, 27, the video display 75 may further comprise a swivel such that the viewable area 78 may rotated to face rearward toward the consumer 85 while the consumer 85 is pushing the cart using handle 22. Alternatively, in embodiments where the video display 75 is mounted on the nose 45 of the cart, the video display 75 may swivel such that the consumer 85 may see the viewable area 78 from locations other than at the rear of the cart. For example, a consumer 85 may wish to swivel a nose-mounted screen 77 sideways such that the viewable area 78 is readily viewable while standing at the side or front of the cart 10. In an embodiment, the video display 75 may swivel about 180 degrees such that the viewable area 78 faces forward rather than facing rearward toward a consumer 85 pushing the cart 10 via handle 22. From a forward facing position, the video display 75 may further fold into a folded position such that the screen 77 is on the exterior of the basket 20 in a folded position, wherein the viewable area 78 is protected via mating with the base 76.

In another embodiment, the video display 75 is attached to the basket 20 and may be heated such that the screen 77 is readily operable in cold environments. For example, the video display of Fig. 9 may further comprise a heating element, which may be positioned internal or external to the screen housing 92, 93. Alternatively, the base housing 96 and 97, as described previously, may be heated such that the screen 77 is kept warm while in a retracted position. Any suitable heating element that is compatible with the screen components and operation thereof may be used, for example a resistive electrical heating element. The heating element may be powered during storage and/or charging of other components of the cart 10, for example during charging of the battery 135 for video monitor 75.

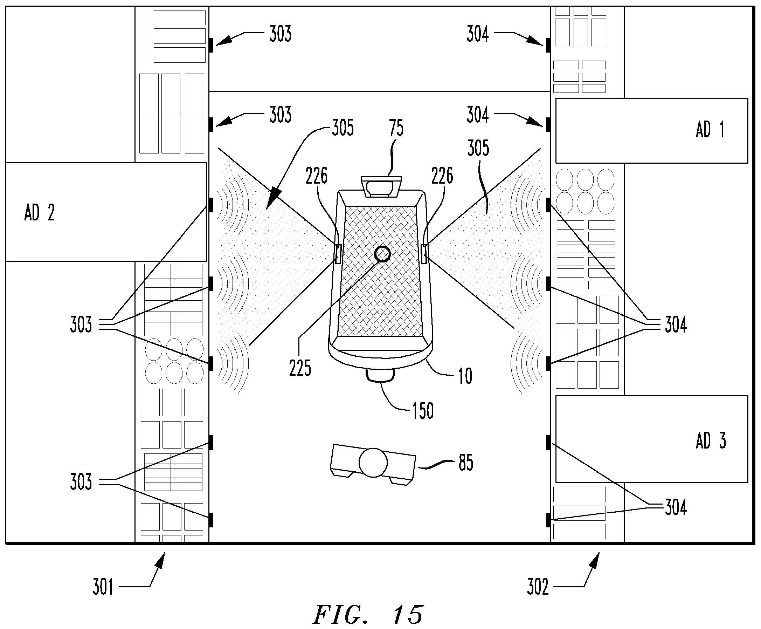

Referring to Fig. 15, in an embodiment, the cart 10 further comprises a read component comprising at least one aisle Radio Frequency Identification ("RFID") reader 225 with RFID antennas 226, in conjunction with the ECM 200 and software operating thereon. The read component performs a proximity scan of the cart 10 that reads the area surrounding the cart 10. The number and position of the antennas 226 may be selected as functionally needed, as would be apparent to one of skill in the art. The aisle RFID reader 225 and the antennas 226 may be an integrated component or may be separate components. In an embodiment, the aisle RFID reader 225 may be integrated with the ECM 200, for example located within housing 199. Alternatively, the aisle RFID reader 225 or may be located at other positions on the cart, for example integrated into the video display 75 or base/housing 76 or alternatively located on the underside of the cart 10, secured by means of attachment to, for example, the bottom 21 of the basket 20, or to the base tray 50. In an embodiment, the RFID antennas 226 are located on either side of the housing 199 of the ECM 200. Alternatively, the RFID antennas 226 may located at other positions on the cart, for example on side walls 23, 24; on edges 26, 27; on base side members 32, 33; on the sides of the video display 75; or any other position suitable for carrying out their intended function.

In an embodiment, the aisle RFID reader 225 and/or RFID antennas 226 may be integrated with the video display, for example one or both located on the side edges of the video display 75. In such a placement, the aisle RFID reader 225 and/or RFID antennas 226 are in a location to maximize the effectiveness of the reader distribution pattern and encompass RFID tags located at various heights and locations along the shelves, when the video display is not retracted and the cart 10 is not nested. Placement on the video display is advantageous as the RFID reader/antenna are positioned at approximately the middle of the shelf height, thereby allowing an about equidistant scan pattern above and below the position of the RFID reader/antenna to cover the complete height of the shelf.

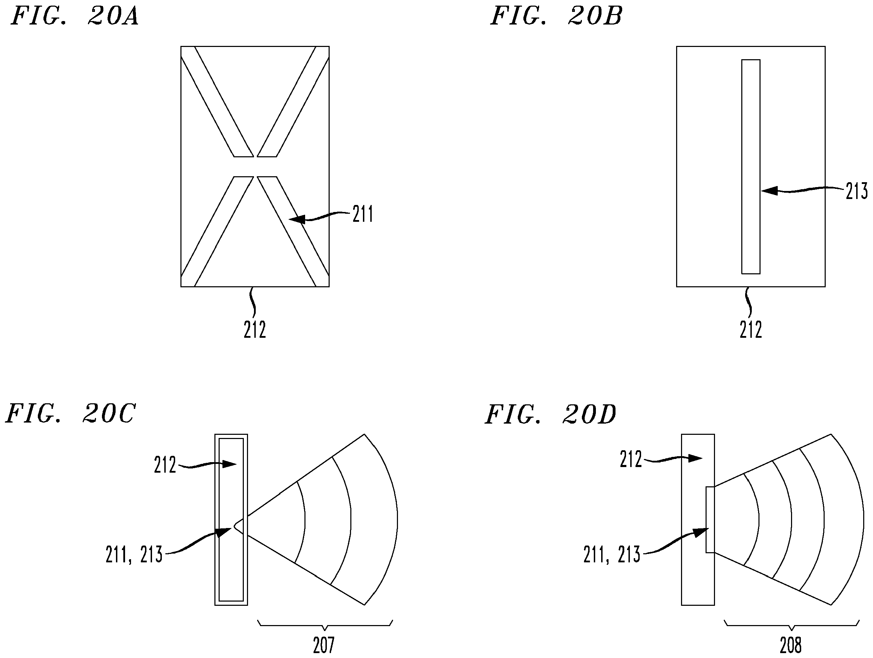

In an embodiment, RFID antennas 226 are placed on the side edges of the video display 75. In some embodiments, patch antennas may be used for the RFID antennas 226. In alternative embodiments, the RFID antennas 226 comprise bowtie and/or slot antennas, which narrow the field of broadcast for the antenna and have a more focused radiative pattern. As illustrated for a bowtie-shaped aperture 211 of antenna 212 in Figure 20A and for a slot-shaped aperture 213 of antenna212 in Figure 20B having an approximate radiative patterns 207 and 208 of Figures 20C and 20D, respectively. In an embodiment, a bowtie or slot antenna having a beam approximately eighteen (18) inches wide and approximately six (6) to eight (8) feet high is used for the RFID antennas 226, and are placed in vertical alignment parallel with the LCD video display (and/or at other suitable mounting locations on the cart) such that the radiative pattern of the antennas provides a narrow slice of broadcast in the direction perpendicular to each side of the cart for reading RFID tags located on the shelves or on items on the shelves on each side of an aisle. In an alternative embodiment, a bowtie or slot antenna having a radiative pattern of plus/minus 45 degrees (90 degrees total) in a vertical plane covering shelf height and plus/minus 15 to 22.5 degrees (30 to 45 degrees total) in a horizontal plane covering shelf width is positioned on each side of the cart, for example mounted on or integrated with the video display 75. The use of slot and/or bowtie antennas provides a more focused field of view for the RFID reader to acquire specific tags, and thus may assist in eliminating unwanted interference, echos, reflections, and the like. Thus, the more focused field of view may also aid in more accurately determining position/location of the cart, and in particular in combination with other positioning/locating techniques described herein.

Various means for attaching and attachment devices may be used as described herein. In an embodiment, the aisle RFID reader 225 with RFID antennas 226 may comprise a standard or customized RFID configuration commercially available from for example ThingMagic, Alien Technology^{™} or an improvement or equivalent thereof. The aisle RFID reader 225 and RFID antennas function to read a plurality of active or passive RFID tags positioned throughout a retail establishment (e.g., along shelves), as will be discussed in more detail. In an embodiment, the cart 10 is a plastic cart as described herein which lessens or eliminates interference associated with the aisle RFID reader 225 and RFID antennas 226. In an embodiment, the cart 10 is a traditional cart comprising metal, plastic, or a combination of metal and plastic, retrofitted with the aisle RFID reader 225 and RFID antennas 226 and other media enhancements.

In or about a store, a consumer 85 may select a cart 10 from the cart corral 110 upon entering the store. The motion sensor(s) 36 detect that the cart 10 is moving when the consumer 85 begins to push the cart 10, and will activate the ECM 200, video display 75, and the aisle RFID reader 225. As previously noted, various components of the cart 10 may be hibernated or re-activated based on motion by the cart to preserve power. In an embodiment, the video display 75 may initially show the consumer 85 a welcome display that includes information about the store, explains the media enhancements to the cart 10, and/or announces in-store promotions. As shown in Fig. 15, as the consumer 85 pushes the cart 10 through the store, such as between two shelves 301 and 302, a plurality of RFID tags 303 and 304 (which may be active or passive RFID tags) located on or near the shelves 301 and 302 respectively, will communicate with the aisle reader 225 via the antennas 226.

In an embodiment, the RFID tags 303 and 304 may be distributed and affixed to objects throughout the store premises. For example, RFID tags 303 and 304 may be attached (i) at a shelf or fixture level, which refers to placement of tags at about regularly spaced intervals along a shelf or other product display areas such as kiosks, pillars, freezers, refrigeration units, walls, bins, and counters; (ii) at a SKU level, which refers to placement and/or incorporation of the tags with or near the standard SKU label, with a given product typically having one corresponding SKU tag positioned on the shelf adjacent the product; (iii) at a product level, which refers to having a tag on each individual product or package of products, or (iv) combinations thereof. The aisle reader 225, operably connected to the ECM 200, will convey a signal comprising informational data to the ECM 200, causing the video display 75 to present location-based content to the screen 77. The RFID enablement of the cart permits advertisers and retail stores to interact with the consumer 85 as she navigates the store.

The location-based content is determined as follows. In an embodiment, the aisle reader 225 with antennas 226 reads any RFID tag 303 or 304 that comes within a cone-shaped pattern defining an electromagnetic zone 305 (of the aisle RFID reader 225) on either side of the cart 10. As noted previously, the shape of the electromagnetic zone or radiative pattern may be adjusted based upon the type and positioning of the RFID components on the cart, for example use of bowtie and/or slot antennas. The shape of the electromagnetic zone 305 read by the aisle RFID reader 225 may be another shape, other than a cone, according to the particular aisle RFID reader 225 employed, and the range (i.e. proximity within which tags may be read by the reader) is likewise determined by the particular aisle RFID reader 225 and antenna 226 array employed.

When an RFID tag 303 or 304 passes through the electromagnetic zone 305, the tag is activated and communicates with the aisle RFID reader 225 according to known RFID techniques. A locationing component (which in an embodiment comprises the aisle RFID reader 225, in conjunction with the ECM 200 and software operating thereon) determines the location of the cart 10 in the store by processing signals from any number of RFID tags 303 or 304 that are within range of the aisle RFID reader 225. The location of the cart 10 relative to specific RFID tags 303 or 304 is determined according to well known RFID positioning techniques. In an embodiment, location may be determined based on the strength of the signals coming from the RFID tags 303 and 304 (i.e. highest number of scans read by the aisle RFID reader 225 indicates which tag or tags 303 and 304 are closest).

In an embodiment, the process of locating the cart 10 begins by creating an electronic representation of the store configuration including fixtures, aisles, and other relevant data using the location of a number of reference or anchor RFID tags (e.g., shelf or fixture level tags) placed around the store in known locations. This electronic representation provides a base map of the store. The base store map may be built using the cart 10 by placing the anchor RFID tags in the known locations around the store, taking the cart 10 through various routes throughout the store to read each of the anchor RFID tags, and correlating the read data with the known data. The base store map is materialized as either database entries or an xml document generated from the correlated data. The base store map provides reference data for determining the location of other goods or items in the store. As fixtures, items, and/or anchor tags are moved within the store, the base store map may be updated by taking the cart 10 through the store again to obtain fresh data and correlate it with the updated known anchor RFID locations.

Against the backdrop of the anchor RFID tags, a series of virtual locations are created and positioned within the defined framework of the store, i.e., the base store map. Each location, such as for example a shelf, freezer fixture, aisle, or produce bin, can then be defined as associated with one or more anchor RFID tags, which may be active or passive tags, as previously noted. Such known locations may be used to determine the location of the cart, for example using the RFID locator service software routine described below. Furthermore, the known locations may be correlated to specific products, for example via use of additional SKU level and/or product level RFID tags. For example, a given product such milk may be correlated to a specific refrigerator having a known location within the base store map. Via such correlation, the location of specific products can be provided relative to the known location of the cart within the store, and the consumer may be provided directions to such products.

As discussed herein, the aisle RFID reader 225 is located upon the cart with the RFID antennae 226 oriented facing outward from the cart. Given that the cart and associated RFID reader is mobile within the store whereas the RFID tags are typically stationary within the store, various RFID data along with other positioning information (for example, motion sensor data) may be gathered and analyzed using software algorithms, for example operating on ECM 200 or a remote location such as a store server and provided to the cart. The antennae configuration (position, orientation, type) is made known in inputs to the software processes involved in locating the cart in the store, as well as performing useful tasks such as shelf management for tasks including inventory, price changes, and the like. The RFID are evaluated using the known antenna orientation and configuration in order to determine cart orientation.

For instance, at a recurring interval, the aisle RFID reader 225 may perform an inventory by recording RFID information for products located on the shelves and correlating the recorded information with the store's system. The results of the inventory may then be analyzed and used in decisions regarding orders for additional products and product placement in the store.

In locating the cart (which may then be used for determining the placement of advertisements in the video display 75, store purposes, or data mining for external or internal uses), for each antenna, the RFID tags "in view," or located within the radiative pattern of the antenna 226, are evaluated. The evaluation process uses several pieces of information to determine the location of the cart within the store, and specifically within the electronic base store map defined above.

The RFID locator service software routine that encompasses these functions performs location inventory and store mapping that is used to determine what any given cart is doing within the store, and provides an added level of accuracy in addition to the RFID location determination. The intelligence involved in the RFID locator service intelligently links what is read by the aisle RFID reader 225 with information known about the store based on the base store map and the known locations of anchor RFID tags. In an embodiment, the anchor RFID tags may be located at regular intervals, such as every 2 feet along the shelves, or on each side of fixtures such as produce bins, and the like. The RFID locator service additionally incorporates knowledge about RFID dead zones, such as foyers or the locations surrounding large metal fixtures that may interfere with RFID signals, so that locating the cart 10 is smooth and continuous regardless of where the cart is located in the store. For example, metal refrigerators tend to generate a lot of reflections such that RFID readings in the vicinity of a refrigerator are full of noise. The RFID locator service can account for known reflections in such an area, and adjust what the RFID reader 225 reads in such an area.

In an embodiment, location is determined via a scan to determine what products and items are in proximity to the cart (i.e., an inventory of tags read by the scanner) and correlating same to the cart's determined position to check the accuracy of the determined position and correct same as needed. The ECM 200 issues a read command to the aisle RFID reader 225. The locator software process then evaluates the read RFID tags (e.g., SKU and/or product level tags) to eliminate tags generating spurious reads, i.e., those included in the read that are not RFID tags associated with a location as established via the anchor RFID tags (e.g., shelf level tags). The remaining tags are then converted to locations indicated in the map. All of the locations (e.g., all RFID tag data) may then be evaluated to determine the cart location and orientation relative to the locations defined in the base store map. Such RFID data may be further correlated with other locationing means and data such as motion sensors such as the reed switch described herein. In this process, the software assumes and takes into account the anticipated read zone of the two antennae. If evaluated individually, each tag indicates the orientation of the cart. The overall orientation is determined by evaluating the orientation differential of each tag location from the orientation indicated by the complete location inventory. The "outlying" locations providing an orientation that is substantially out of correlation in comparison with the others within the inventory are removed, given that they represent spurious locations derived from spurious tag reads.

In some cases, RFID reads during inventory will be non-deterministic. Inconsistencies in the RF environmental (e.g., reflections, nulls, false reads, signal collisions, etc.), physical obstructions, technology failure and other factors may cause unpredictable inventory responses. Spurious reads are defined as those that are inconsistent with the results expected for the cart in a given position and orientation. For example, one spurious read would occur for a tag that shows up in the inventory that is outside the maximum expected read range of the aisle RFID reader 225. Furthermore, transient reads are defined as those that are consistent with the expected results for a given cart position and orientation, but that do not consistently appear in a set of inventory reports collected over an arbitrary period of time.

With the inventory of locations in the system, locations may then be evaluated to determine cart position as a relative x,y coordinate within store map. The system employs a location buffer to smooth out errors introduced by transient tag reads. The remaining locations are evaluated, and an average x,y position is calculated. The nearest location (among the inventory locations) to the calculated location is determined and the cart position is adjusted according to which location is nearest. This adjusted position is then compared to the map and further adjusted as necessary to position the cart accurately within the map. Such positions and data may be further compared to known/mapped routes or paths within the store to further assist in determining the location of the cart. For example, if may be know that a consumer will likely travel a certain path based upon the position within the store and same may be used to help track and position the cart as it traverses the anticipated path.

A number of rules may be applied in the evaluation of the inventory location to improve the accuracy of locating the cart, and therefore also the efficacy of the cart 10 as a shelf management tool. For example, a temporal rule may be applied such that recent tags reads are prioritized above older reads into determining cart position. Additionally, recent location reports may be used in determining if a particular tag represents a spurious read.

Similarly, a volume rule may be applied, such that a large volume of tag reads occurring during a given time frame are prioritized above smaller volumes of tag reads for determining cart position. For example, a RFID tag "seen" by the aisle RFID reader 225 twenty times during the last second is prioritized above a RFID tag "seen" only one time during the last second. Likewise, a proximity rule may be applied, wherein RFID tags in the inventory that are proximate to one another are prioritized above RFID tags in the inventory that are not proximate. In such a case, proximity is based upon the base store map and business rules.

In various embodiments, the accuracy of the determination of cart location is improved by the addition of the magnetic reed switch, discussed previously as an embodiment for the motion sensor(s) 36. The rotational speed of each wheel may be determined based on the "heartbeat" signal generated each time the magnet opens or closes the magnetic reed switch, preferably without physical contact thereof, when the wheel turns. By placing a magnet and reed switch assembly on two wheels, such as, for example, on both back wheels, the ECM 200 may determine when the cart 10 is turning as an added factor in accurately determining the location and orientation of the cart 10. Specifically, when the cart 10 is turning, such as around a corner or to enter a next aisle in the store, the wheel to the inside of the turn will not rotate as much as the wheel to the outside of the turn, and by comparing the difference in rotational speed of each wheel, the ECM 200 locationing component may incorporate the knowledge that the cart 10 is turning a corner or turning around to supplement the locationing performed by the aisle RFID reader 225 and antenna 226.

In various embodiments, the accuracy of the determination of cart location is improved by the addition of an Automatic Gain Control ("AGC") module. The use of an AGC module to control the transmit power and/or antenna attenuation of the aisle RFID reader 225 provides still another means of improving the accurate determine of cart location and, therefore, product awareness. In operation, the AGC module, which may be implemented in a software routine and executed from the ECM 200, automatically controls each antenna 226. Specifically, the AGC may be used, as understood by one of ordinary skill in the art, to either increase the transmit power or adjust attenuation. By doing so, sensitivity to tags may be controlled so that tags that are "unexpectedly" read, in that they are not located within the expected radiation pattern of the antenna 226 and aisle RFID reader 225 yet still are read, may be avoided. For example, the cart 10 may be located on aisle 4, but unexpectedly is reading tags from adjacent aisles 3 and 5. Tags from the adjacent aisle are "unexpected" based on the presently determined cart location. To correct for the unexpected tags, the AGC adjusts the attenuation or power of the read signal, such that the tags from the adjacent aisles are no longer read. In another example, the cart 10 may be located on aisle 4, but is not reading all of the "expected" tags for aisle 4. In order to correct for the missing, but expected tags, the AGC adjusts the transmitted power until the expected tags, based on the cart's presently determined location, are read by the aisle RFID reader 225. The AGC module may particularly be useful for improving accuracy of cart location in areas with higher interference or when many carts are in close proximity. By adjusting transmit power and/or attenuation (i.e., providing automated, real-time, dynamic power control from the RFID reader/antennae), the AGC module provides the additional advantage of conserving power by adjusting the power such that an appropriate and efficient amount of power is used in reading the RFID tags.

In an embodiment, the locationing component is similarly operable to determine the location of a given product relative to the shopping cart 10 based on signals from the read component. The locationing component then displays on the video display 75 the location of the given product in relation to the cart 10. In an embodiment, the locationing component may comprise software, hardware or a combination of hardware and software operable to determine the location of the shopping cart or a product in the store. The locationing component may, in an embodiment comprise hardware affixed to the cart with software incorporated therein, or may, in an embodiment, comprise hardware affixed to the cart operably coupled with software stored in and/or executed from the ECM 200 or another networked component. In an embodiment, the locationing component may be integrated within the ECM 200.

In an embodiment, the location of the given product in relation to the location of the cart 10 may be graphically displayed on the video display 75 on a floor plan of the store, using an indicator to show the location of the cart 10 on the floor plan of the store and another indicator to show the location of the given product on the floor plan of the store. In an embodiment, the indicators may comprise directional arrows 309, as will be discussed further below. In an embodiment, the location of the given product in relation to the location of the cart 10 may be described using words relative to a floor plan of the store. For example, such a written direction may be provided in the video display 75 by indicating "You are on Aisle 2, the Product you are looking for is on Aisle 9 to your left."

In an embodiment, the locationing component is operable so as to locate a given product being displayed in an advertisement on the video display 75 relative to the shopping cart 10. In an embodiment, the locationing component then displays on the video display 75 the location of the product being advertised in relation to the cart 10. In an embodiment, the location of the product being advertised in relation to the location of the cart 10 may be graphically displayed on the video display, using an indicator, such as an arrow, displayed adjacent to or as part of the advertisement to point towards the location of the product being advertised. In an embodiment, the location of the product being advertised in relation to the location of the cart 10 may be described using words to indicate to the consumer where she may find the product being advertised. For example, in or adjacent to an advertisement for laundry detergent, an indicator reading "Laundry Detergent ahead on the right" may be displayed based on the location of the cart.

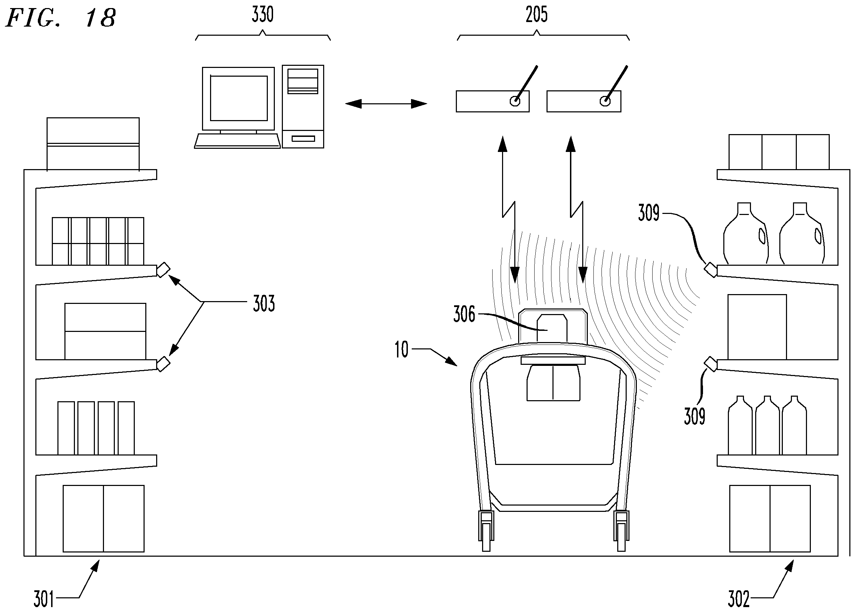

Referring now to Figs. 16, 17 and 18, upon determining the proximity of the cart 10 to any particular tag or tags 303 or 304, the ECM 200 causes at least one advertisement 306 to be displayed to the consumer 85 on the video display 75. The advertisement 306 displayed may be selected from a plurality of stored advertisements 307, and the advertisement 306 may be selected based on the proximity of the cart 10 to a particular tag or tags 303 or 304. In an embodiment, the plurality of stored advertisements 307 may be stored in an in-store server 330, streamed to the ECM 200 via a wireless LAN (e.g., transceivers 205 mounted in the store communicating with the network transceiver 204 in ECM 200), and displayed on the video display 75 according to the location of the cart 10. In an embodiment, the plurality of stored advertisements 307 may be stored in local memory 202 in the MOD, accessed, and displayed on the video display 75. When the cart 10 enters a different area of the store and the aisle RFID reader 225 detects different RFID tags 303 or 304, the location of the cart 10 is updated, and the advertisement 306 is changed to reflect a different one of the plurality of the stored advertisements 307 based on the updated location of the cart 10.

As shown in Fig. 16, in an embodiment, the screen 77 of the video display 75 may be divided into a plurality of screen segments 308, such that one of the plurality of stored advertisements 307 may be displayed in each screen segment 308. In an embodiment, one of the plurality of screen segments 308 may be designated for display of consumer specific information, such as the running total of the products in the cart 10, loyalty card or other consumer identifying information, product information pertaining to a specific product recently placed in the cart 10, and the like.

Referring again to Fig. 16, an exemplary display of advertising is shown. In an embodiment, a selected number of the plurality of stored advertisements 307 (equal to the number of screen segments 308) are displayed in the screen segments 308. Directional arrows 309 may be provided as an indication to point in the general direction of the advertised product on adjacent shelves. In an embodiment, one screen segment 308a may be more prominently sized than the other screen segments 308b, such that one of the plurality of stored advertisement 307 is displayed in the more prominently sized screen segment 308a, while others of the plurality of stored advertisements 307 are displayed in the less prominently sized screen segments 308b. This division of the screen 77 into screen segments 308 may be analogized to advertisements in a newspaper, wherein various of the advertisements may use one half, one quarter, one third of a page, etc. to fill a page with advertisements, and the cost of running an advertisement in each portion of a page may relate to the size of the advertisement relative to the rest of the page, the prominence of the advertisement on the page, the duration of time the advertisement is on the page, or combinations thereof. In an embodiment, the selected plurality of stored advertisements 307 may rotate being displayed on each screen segment 308, such that the most prominent screen segment 308 displays each of the selected ones of the plurality of stored advertisements 307, one after another, based on the time each one of the plurality of stored advertisements 307 has been displayed, or based on the location of the cart 10 between the shelves 301 and 302 in proximity to tags 303 and 304, which may be further correlated to the proximity of the cart to the advertised product on the shelf.

Rather than showing multiple advertisements in various screen segments, a single advertisement at a time may be displayed in a screen segment generally reserved for advertising. A multi-tier approach may be used to determine pricing of advertisements when a single screen segment is devoted to advertising, given that the newspaper analogy may not apply. For example, advertising may instead be sold for zones of the store, whether based on what types of products will be shelved there, or based on consumer traffic patterns in the store. For example, pricing may be different and the types of advertisements that will be effective will vary based on whether the advertisement segment is purchased for advertisements to be displayed along high traffic routes such as the front aisle of the store, or the lower traffic areas, such as the pharmacy or deli. Selling advertising based on when and where it will be displayed may permit advertising companies to make decisions to effectively market products even while only one advertisement is displayed at a time in the video display 75.

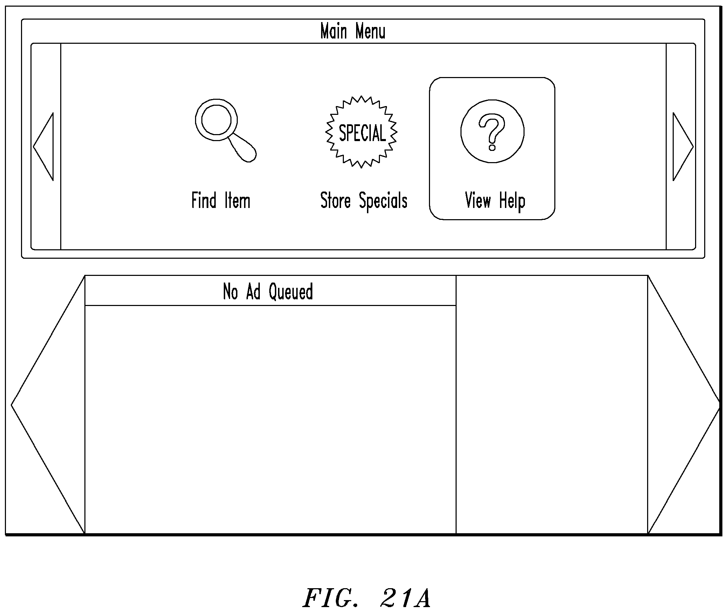

In an alternative embodiment, no one screen segment is sized more prominently than the other, but rather, a simplified, unique split screen Graphical User Interface is shown, as is illustrated in Figure 21A. The unique attributes of the Graphical User Interface are associated with cart operation and LCD display position. The Graphical User Interface provides the consumer with user-friendly easy access to cart functionality while maintaining readability and utility as viewed from the nose-mounted position at the opposite end of the cart from the consumer.

The Graphical User Interface may be adjusting to one of a plurality of user levels, providing basic, intermediate, or advanced functionalities of the enhanced cart 10 based on how the consumer prefers to use the cart 10. The Graphical User Interface shown in Figure 21A enables the consumer to access the basic level of functionality, and does not require the use of any identifying information associated with the consumer to carry out the functions. In an embodiment, the video display defaults to the basic level of functionality when the cart 10 is powered on. The basic level of functionality displayed in the menu includes "Find Item," "Store Specials," and "View Help," each of which may be displayed in the form of a button, textual link or the like for selection by the consumer. In the segment below the menu, space is reserved for display of an advertisement that is placed there when so indicated by the ECM 200, as discussed herein. Upon selection of a menu item, the Graphical User Interface changes for each functional menu item.

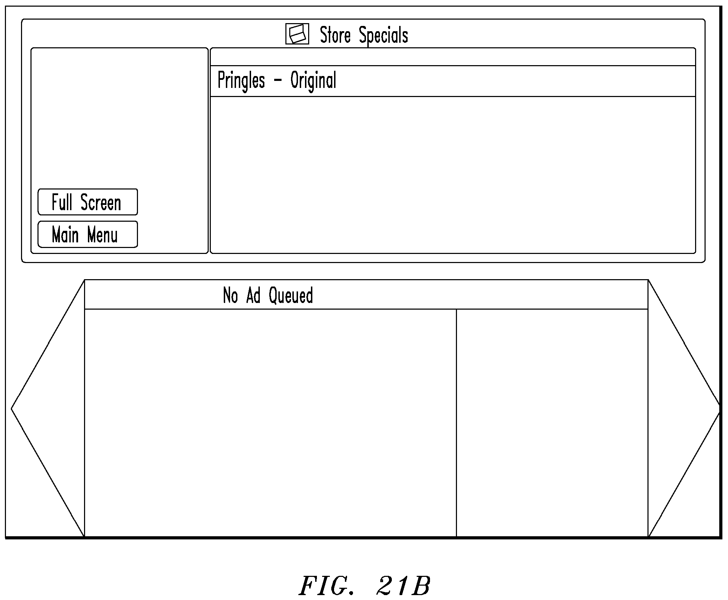

Upon selecting "Store Specials," the Graphical Interface reflects the view of Figure 21B. In Figure 21B, the Store Specials are shown, along with a button or link to show a full screen view of the store specials (which eliminates the space below reserved for display of advertisements), or return to the main menu. If the "Full Screen" is not selected, the space for display of advertisements remains displayed.

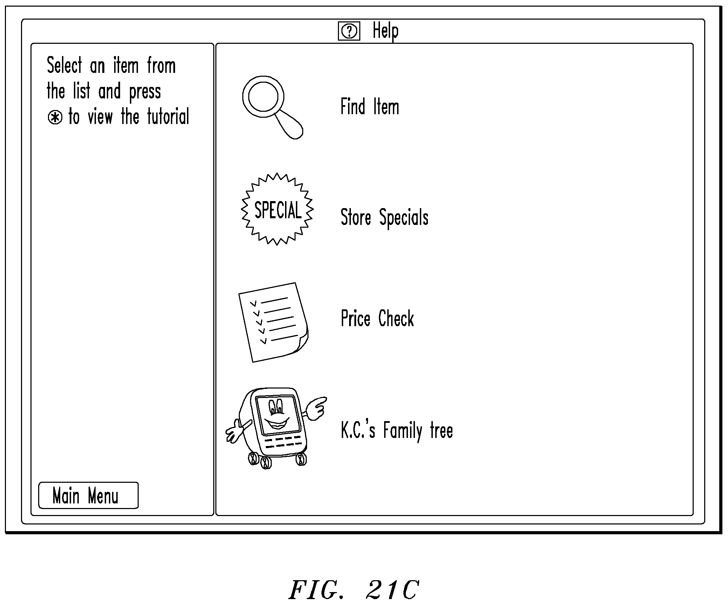

Upon selecting "View Help," the Graphical Interface reflects the view of Figure 21C. In Figure 21C, a menu appears that presents to the consumer the choices of "find item," "store specials," "price check," and more, according to the desires of the store for which the cart is configured. A link for a tutorial on the use of the cart 10 may be provided, along with a button or link to return to the main menu.

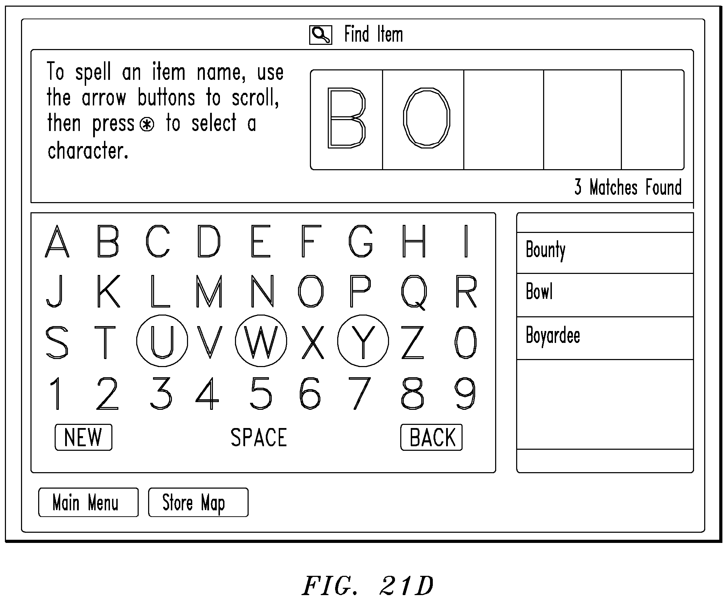

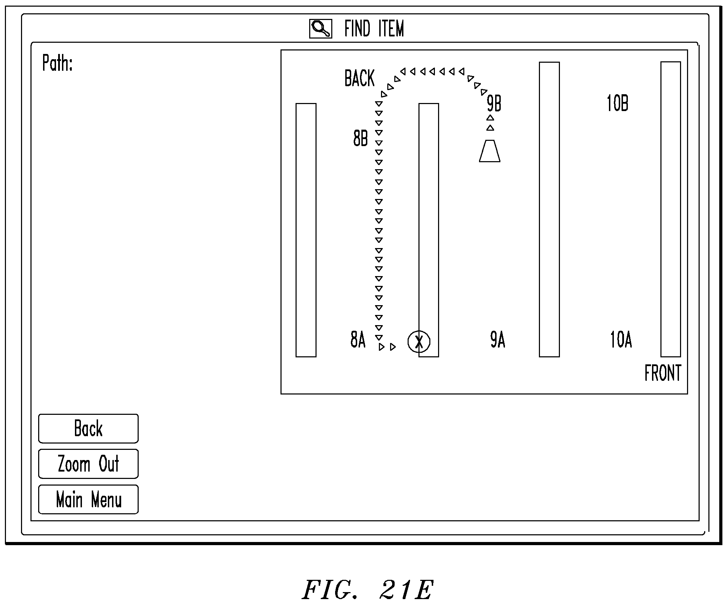

From the "View Help" view of the Graphical Interface, when "Find Item" is selected, the Graphical User Interface provides the view of Figure 21D, wherein the user may scroll and select letter or number characters using the five-way navigation device 123. Additional links for returning to the main menu or viewing a store map may also be provided. The store map provided by the link, as shown in Figure 21E, may graphically indicate where in the store the cart is located as well as the location of an item for which the consumer is searching using the "Find Item" feature.

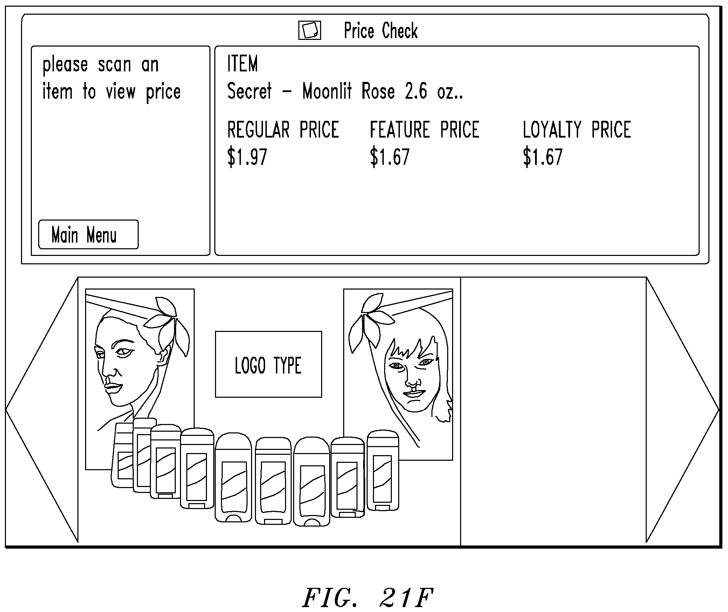

From the "View Help" view of the Graphical Interface, when "Price Check" is selected, the Graphical User Interface provides the view of Figure 21F, which displays a price (or prices, if a sale price is additionally available, or if a discount price is available for loyalty customers). In the price check view, the consumer may scan a product using the scanner 215, and the price is displayed. Also, as seen in Figure 21F, an advertisement may be displayed in the space reserved for advertisements. The price check feature may be activated via a price check button as described herein.

Each of these functions may be included in the basic level of functionality. In addition to these functions, additional functionality of the cart 10 is available to users who desire to additionally enhance their shopping experience at an intermediate level of functionality and at an advanced level of functionality. At the intermediate level of functionality, the consumer may scan products at the cart 10 using the scanner 215, view the scanned cart contents and a running total, and remove an item from the cart by scanning an item that has already been placed in the cart 10. The intermediate level of functionality may be accessed by a consumer by simply starting to use the scanner 215. To use the intermediate level of functionality, the consumer is not required to identify himself or herself, but may do so using a loyalty card associated with his or her identity, or by simply using a PIN. The consumer has the option to use a consumer created Personal Identification Number (PIN) which is unique to the consumer, but may or may not be associated with any customer information such as name, address, and the like, in the same manner as a loyalty card identifier. Using a PIN, the consumer may retrieve saved electronic shopping lists, favorite recipes, and nutritional information in some advanced features, but does not have to identify him or herself with a name and address.

In an embodiment, the level of functionality selected and the resultant display screens and features made available to a customer is based upon existing data entered by the user or gathered from previous use of the cart by the customer. For example, upon scanning of a loyalty card or entry of a PIN, a database may be consulted to determine what level of functionality the customer as selected or previously used, and then the appropriate functionality and display screens are presented to the user. Such data can be tracked over time and functionality adjusted to correspond to preferences and usage by the customer. For example, as the customer becomes experienced in using the system, more detailed information and functionality may be provided to the customer. Alternatively, tutorials or other help functions may be provided for inexperienced users.

At the advanced level of functionality, the consumer may additionally perform a cart level express check out, when products for purchase have already been scanned, view nutritional information and recipes, and view lists according to store departments. The consumer may also create, save, and retrieve electronic shopping lists, and obtain loyalty card prices and promotions.

In various embodiments, when the consumer identifies himself or herself to the cart 10 by way of a loyalty card, a consumer privacy notice may be displayed. The privacy notice may be displayed upon the first use of the cart 10 by a particular user who has identified himself or herself by way of a loyalty card, and thereafter, when the consumer identifies himself or herself via a loyalty card, the privacy notice will not be displayed since it has been displayed and accepted by the consumer before.

In an embodiment, the aisle RFID reader 225 with antennas 226 may also scan individual products on the shelves 301 and 302 that are labeled with individual RFID tags. In this embodiment, the aisle RFID reader 225 with antennas 226 may scan, identify, and count each individual product by means of the individual RFID tag, and convey this information via the ECM 200/network transceiver 204 to other network components to be discussed herein in greater detail below, enabling retailers to manage the store inventory to an exacting degree of accuracy on a continuous basis. Furthermore, all or a portion of the aisle tags 303 and 304 may be replaced via products labeled with individual RFID tags, and the system may otherwise function as described herein.

The aisle RFID reader 225 and antennas 226 may assist the store management with store planograms and inventory. A planogram is a diagram of fixtures and products that illustrates how and where retail products should be displayed, usually on a store shelf, bin or counter in order to influence consumer selection. Consumer packaged goods manafacturers often release a suggested planogram with their new product, to show how it relates to existing products in the same category, though stores also develop planograms of their own. Because a planogram involves the location of products within the store, the aisle RFID reader 225 and antennas 226 can detect the location of products at the Stock Keeping Unit ("SKU") level. Many inventory management systems assign a unique SKU for each product and also for its variants, and SKUs are assigned and serialized at the merchant level.

In use, when a cart 10 is moved through the store, the aisle RFID reader 225 and antennas 226 scan the SKU assigned to product lines or product bundles on the shelves 301 and 302 that are labeled with individual RFID tags, each RFID tag being associated with a SKU. In this embodiment, the aisle RFID reader 225 with antennas 226 may scan, identify, and locate each product line or bundle by means of the RFID tag, and convey this information via the ECM 200/network transceiver 204 to other network components to be discussed herein in greater detail below, enabling retailers to locate products throughout the store to manage, update and design the store planogram in an efficient and consistent manner.

In an embodiment, the cart 10 is additionally operable for various Shelf Management activities, such as, but not limited to, taking inventory, enabling price changes, product reorganization, restocking, returning misplaced products to the proper shelf location, and the like. The shelf management features enabled by use of the cart 10 are used by the retailer to electronically manage product location and pricing in the store.

The cart 10 enables re-mapping of the store. As discussed above, taking the cart 10 through various paths in the store following rearrangement of products will result in the cart 10 reading the RFID tags (e.g., SKU and/or product level tags) marking the new locations of each moved product relative to the anchor RFID tags (e.g., shelf level tags that have not moved), and convey the new locations to the system, such that the location of products in the store readily updated in relationship to the base store map.

Additionally, the cart 10 enables inventory that may be performed on an on-going basis with real-time updates for stores that sell products identified at the product level by an RFID tag. When any cart 10 reads no product level RFID tags at a location (marked by an anchor) where products are expected to be, the cart 10 may convey this information to the store system to update the inventory for the products that are no longer filling the shelves where expected. This allows real-time product inventory and restocking.

An employee is enabled by the cart 10 to quickly reshelve products that are misplaced, such as when a consumer decides not to purchase a product and leaves it at the Point of Purchase or in a location other than where the product is shelved. By using the shelf management system of the cart 10, the employee may scan the misplaced product, and according the map, be directed to the location in the store where the scanned product is supposed to be shelved. The employee may even confirm that he or she is putting the product back in the appropriate location by scanning the sticker located on the shelf, because the sticker, usually with a price indicated, is associated with a specific location for a specific product.

When the store implements price changes for a list of products, an employee or group of employees usually must go around the store, find all the products with changed prices, and swap out signs and labels, which can be a time consuming task that occurs at regular intervals (e.g., weekly specials). The cart 10 enables an efficient process for dynamically changing prices for products accurately and quickly.

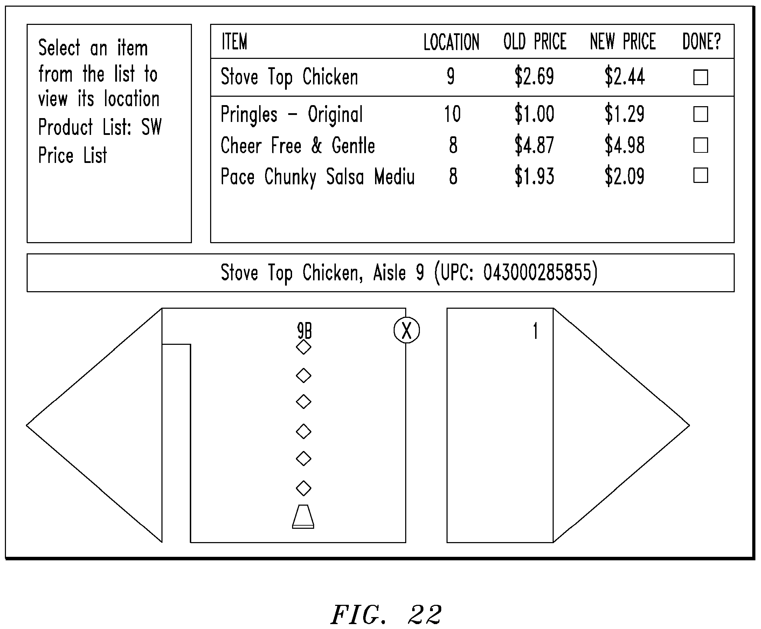

Specifically, for the price change process enabled by the cart 10, price changes, such as for weekly specials and the like, are entered in a database of prices in the store system. An employee may then use a cart in shelf management mode to go throughout the store to change labels. A battery powered, wireless printer may be placed in the cart 10, such as in the child seat 60, and operably coupled (e.g., wired or wireless, such as Bluetooth, wi-fi, or infra red) to the ECM 200 for printing new price labels when the cart is located in the right location for a given product. The employee identifies himself or herself to the cart 10 by scanning an employee badge, much like scanning a loyalty card, that enables access to the shelf management features unavailable to consumers. The price changes entered into the database are conveyed to the cart's ECM 200 from the store system. Based on known locations of the products listed, the cart 10 displays to the employee a map, as shown in the view of Figure 22. The view of Figure 22 shows the list of products for which a price change is being implemented, a location of each product on the list, the old price, the new price, and permits the employee to check a product off the list once the price has been changed.

The employee moves the cart to the location of a product on the list, and when the employee has found the location of the product, he or she may scan one item of the product to confirm that the shelf location is actually the right shelf location for the product on the list. Once the location is confirmed as correct for the product, the employee prints a new label on the wireless printer placed in the cart, and places the new label with the new price over the old label with the old price on the shelf. Once the new label is in place, the employee checks the product off the list, and the cart 10 conveys to the store system that the price change has been implemented at the shelf level. The store system may then charge the new price at the Point of Purchase, thereby allow real-time pricing updates.

In a large store, or in a store holding many specials such as for a holiday weekend, the process of updating for price changes is greatly sped up using one or more carts 10 as discussed herein. Additionally, the price changes are dynamic, in that they take effect as soon as a new price label is in place on the shelf. With the scanning ability of the cart 10 to confirm that the new price label is being placed in the proper location, price changes are also more accurate than relying on any given employee's knowledge of product placement within the store.

As the consumer checks out (i.e. renders payment) at the Point of Sale 300, the POS computer 326 (e.g., computerized register) or POS server 325 may record the purchases made by that consumer 85 using that particular cart 10. The POS computer 326, the POS server 325, and other systems such as security systems or consumer loyalty systems may be referred to generically as retailer systems. Retailer systems provide automated, computerized services with respect to consumer or store needs. In an embodiment, retailer systems may comprise components of the overall store network. In an embodiment, retailer systems may be standalone functional units operating separately from the store network. In an embodiment, a retailer system may comprise a point of sale system to interact with individual carts or consumers for processing payment at the conclusion of a shopping trip. In an embodiment, a retailer system may comprise a consumer loyalty system for rewarding consumer loyalty with discounts and other advantages, while tracking shopping history for advertising purpose. In an embodiment, a retailer system may comprise a security system for tracking the location of carts within the store or areas outside the store, such as, for example, alerting the store management to the location of carts when abandoned or broken, whether carts have left the store premises or when carts remain in the parking lot to be returned to the store.

In an embodiment, the cart 10 includes a cart RFID tag that may be read by a POS RFID reader coupled to the POS server computer 326 or POS server 325. The cart RFID tag may be located anywhere on the cart, and in an embodiment is located on or in video display 75, for example in the screen housing 92, 93. In an embodiment, the cart RFID tag is located on or in the video display 75 along with the network transceiver 204. The POS RFID reader may read the cart RFID tag, thereby identifying a specific cart, for example via the cart RFID tag associated with a serial or identification number. Alternatively, the POS system may use a bar code scanner to scan a bar code on the particular cart that uniquely identifies the cart and correlate the bar code with the serial or identification number. Alternatively, the particular cart may be identified and correlated manually at the POS, for example via entry of the serial or identification number labeled on the cart into the POS computer 326. The information obtained, both by checkout (e.g., via bar code and/or basket RFID scanning) and/or by the cart 10 during shopping (e.g., via bar code and/or basket RFID scanning), may be correlated to a particular cart (based on the cart's unique identity) and/or transferred to the In-store Server ("ISS") 330 and the Host Central Server 340. Such correlation may occur anonymously, for example, without reference to the identity of the consumer. Such information may further be correlated with a specific consumer, for example via scan or entry of a loyalty card, a pin code, a telephone number, or other consumer identifier. Such information may further be correlated with specific advertising displayed during the particular use of the shopping cart.

The basket RFID reader 227 in conjunction with the ECM 200 may have identified and stored the identity of each product placed in the cart 10 during shopping, such that upon approaching the Point of Sale 300, the POS computer 326 may initiate checkout services based on the products for purchase known to be in the cart 10 by the ECM 200, as communicated to the POS computer 326 via the network transceiver 204. Thus, the RFID enablement of the shopping cart and the application of RFID tags at the individual product level will facilitate the shopper's Point of Sale checkout efficiency. Alternatively, the consumer 85 may use the scanner 215 to scan each product placed in the basket, such that upon approaching the Point of Sale 300, the POS computer 326 may initiate checkout services based on the products for purchase known the be in the cart 10 by the ECM 200, as communicated to the POS computer 326 via the network transceiver 204.

In use, the consumer 85 may also use the cart for services that in the related art would require the consumer to find a store employee. Via voice commands delivered to the voice activated interface 120 operably coupled to the ECM 200 and the in-store network, the consumer 85 may request the location of a specific product or request information pertaining to a particular product such as nutritional information, whether any specials for that product are available, and recipes that may incorporate a product. By activating the voice activated interface 120 by way of the five way navigation device 123, the consumer 85 may also contact various in-store services, such as a pharmacy, deli counter, or automotive service station to initiate an order or check on the status of their order. The consumer 85 may additionally contact customer services within the store without waiting in line at a counter, by calling the customer service desk from the voice activated interface, enabling activities such as requesting a rain check or reporting a safety hazard in the store. In other embodiments, the consumer 85 may use the voice activated interface as a means of calling a person or service outside of the store, by using the ECM 200's communication abilities to connect to the Internet, enabling Voice Over IP ("VOIP") technology. For example, a consumer 85 may wish to check with their spouse regarding which product to buy or for shopping list products, and may use the VOIP enablement and voice activated interface 120 to call home.

Another in-store use is the bar-code scanning. A consumer 85 may choose to scan their own products with the scanner 215 inset into the handle 22 or pod 150, enabling him to view a running total for the products in the cart 10 for purchase. By scanning the products during the shopping trip using the scanner 215, the scanner 215 enables the consumer 85 to avoid waiting in the checkout lanes, as the ECM 200 may communicate the products being purchased, the price of each product, and the running total, as well as the value of any coupons used and scanned by the consumer 85 to the POS computer 326 upon arriving at the Point of Sale 300. Bar-code scanning during shopping, in conjunction with the cart 10 communicating the scanned inventory to the Point of Sale 300, facilitates more efficient check out services for consumers.

In addition to the voice activated interface 120, the consumer 85 may use a number of the media enhancements of the cart 10 via the five way navigation device inset in the handle 22 or pod 150. The consumer may press the voice activation button 122 (which preferably is a center button of the five way navigation device 123) to activate the voice recognition system as well as to navigate other applications to access certain functions and information on the cart 10 such as product location and other product information. The five way navigation device 123 may be used to maneuver through the menu of options 124 displayed on the video display 75.

With the media enhancements, a consumer 85 will have the capability to formulate a shopping list at home on the Internet, forward the list to the store via email, and upon registering with a cart 10 with a loyalty card or other consumer identifier in the store, have their shopping list displayed on the video display 75 and be guided through the store in aisle and product order, showing specials, promotions, and product location for products on their shopping list.

The cart 10, by way of the media enhancements discussed above captures real-time purchasing behavior at the individual consumer level and provides back end data mining and analytical reporting. The cart 10 captures information that is specific down to the second about the cart 10 and a consumer's movement and interactions with the cart, and records it for use by retailers and advertisers. For example, consumer shopping patterns may be collected, anonymously if preferred by the consumer, for analysis and use by advertisers, consumer goods manufacturers, and retailers. Retailers may use the cart information for store operations, as discussed herein with respect to shelf management. Additionally, service and maintenance information provides timely information to cart maintenance personnel regarding cart usage and problems.

In an embodiment, when the consumer 85 brings the cart 10 to the Point of Sale 300 at the conclusion of the shopping trip, the ECM 200 may communicate data to an In-Store Server ("ISS") 330, a POS server 325, a POS computer 326, or combinations thereof. In an embodiment, the ECM 200 communicates with ISS 330, which in turn communicates with POS server 325, which in turn communicates with POS computer 326, and vice-versa. Typically, the POS server 325 and the POS computer 326 are part of an existing local area network in a given store, and the ISS 330 typically would be added as a new component to the existing local area network upon implementation of the media enabled shopping cart at a particular location. While not required, communication with the ECM 200 may be facilitated by directing such communication through the ISS 330, rather than directly with ECM 200.

In an embodiment, the cart 10 communicates the identity of the products being purchased to the POS computer 326 or POS server 325 via the ISS 330, as the identity of each product was obtained during shopping when the consumer 85 scanned the product with the scanner 215 or the basket RFID reader 227 identified the product when it was placed in the cart 10. Alternatively, the POS computer 326 or POS server 325 may obtain the identity of the products being purchased by the consumer 85 or a store employee scanning the bar code on each product at the Point of Sale 300.

As the consumer checks out (i.e. renders payment) at the Point of Sale 300, the POS computer 326 or POS server 325 may record the purchases made by that consumer 85 using that particular cart 10 as described herein. The information obtained, both by checkout and by the cart 10 during shopping, may be transferred to/from the ISS 330 and/or the Host Central Server 340. Using data mining advances enabled by the cart 10 and its media enhancements, advertisers can individually track the effectiveness of advertising and pricing campaigns without compromising the personal identity of the consumer, alleviating privacy concerns of consumer groups. Alternatively, the information can be correlated to a specific consumer, for example via a loyalty card program, where the consumer is agreeable to such.

The data communicated by the ECM 200 may include data programmed to its memory, or data collected and stored in the memory over the course of the consumer's 85 shopping trips (initiated when the consumer 85 first moved the cart 10). In an embodiment, such data may include any of the following: 1) the identity of the cart, 2) where in the store the cart has been, 3) which advertisements have been displayed to the consumer using the cart, 4) the length of time spent with each advertisement displayed and the length of time spent in specific areas or aisles of the store, 5) what products are in the cart 10 for purchase, 6) if known (such as from a loyalty card), consumer statistical or demographic data (gender, age, spending and purchasing habits), 7) store traffic patterns such as time, day, period, duration, etc., and 8) cart usage patterns (e.g., number used, typical user, functions accessed, etc.). Such data may be correlated to determine the effectiveness of advertising presented via the media enable cart to the consumer at the point of purchase (i.e., proximate the point in time when the consumer is selecting a particular product to be placed in the basket and purchased).

In another embodiment, data includes (I) information captured by the media cart system such as (1) cart specific data such as (a) cart identification, (b) date and time of shopping episode and each activity therein, (c) media cart/retailer user card UPC scanned by a greeter at the time the cart is handed to the shopper and scanned again by the shopper at checkout, at which time the card is returned to the store for use by another customer, which helps to link information captured by the media cart system with POS data, (d) cart tracking such as location and duration, and (e) cart activities such as product locator, price checks, shopping lists, basket views such as totals, UPC, number of items, etc; and (2) consumer campaigns, ads, promostions such as description of ad/promo, ad/promo reference number, campaign name and reference number, ad/promo start/stop time, ad/promo trigger variables (e.g., location, time, loyalty, non-loyalty), and location in store; (2) Point of Sale (POS) data such as (a) media cart/retailer user card UPC scanned by a greeter at the time the cart is handed to the shopper and scanned again by the shopper at checkout, at which time the card is returned to the store for use by another customer, which helps to link information captured by the media cart system with POS data, (b) product description including UPC code and manufacturer code, (c) regular product price, (d) purchased product price, (e) basket total, (f) number of items in basket, and (g) check-out lane number with time and date of check-out and transaction log number; (3) Loyalty club data such as (a) loyalty card number, (b) zip code, (c) loyalty shopper purchasing data such as items in basket and size of basket in dollars; and (4) store data such as (a) store address, (b) TDLinx code, (c) latitude and longitude coordinates, and (d) store demographic data such as number of adults/children in household, income bracket, age bracket, ethnic group, home owner or renter, education level, etc.

Such data may be used to product a variety of reports such as (1) shopper segmentation data such as (a) trip size, (b) trip duration, (c) day of week, and (d) time of day; (2) consumer campaign studies such as (a) item purchased, including display location and shelf location, (b) cross-purchase studies, including whether usage idea resulted in brand purchased or other brand purchased, (c) recipe ideas, including whether same resulted in brand purchased or other brand purchased, (d) basket analysis, including trip size impact, category linkage of basket, categories absent from basket, (e) cart tracking of anonymous shopper including types of shopping patterns (day of week, time of day, and duration of shopping episode), perimeter areas visited (duration at perimeter department and items scanned), aisles shopped (duration within aisle and items scanned), displays shopped (duration at display and items scanned), location data inquiries by shopper, nutrition information inquiries by shopper, product pricing inquires made by shopper, replacement of product entries, out of store coupons used, in store coupons used; and (f) loyalty card shopper tracking including types of shopping patterns (day of week, time of day, and duration of shopping episode), perimeter areas visited (duration at perimeter department and items scanned), aisles shopped (duration within aisle and items scanned), displays shopped (duration at display and items scanned), location data inquiries by shopper, nutrition information inquiries by shopper, product pricing inquires made by shopper, replacement of product entries, out of store coupons used, in store coupons used.

Such data may also be used for analytical analysis such as (1) location of cart including (a) verification of scanned items, (b) verification of cart after ad stimulus such as whether the cart moved after the ad, whether the shopper purchased the product, and if so when, whether shopper purchased a competing product, and if so comparative data such as price, brand quality, etc., (2) ad viewed in product display location, including verification of scanned item, quantity purchased, and duration of time at display prior to cart moving, (3) ad viewed in cross-usage category including (a) verification of scanned complimentary usage item and (b) verification of promoted brand in ad with usage occasion, for example whether cart moved to featured product location, and (4) whether shopper used product locator feature to find a product in the store, for example a complimentary or featured item.

In particular advertising data may be correlated or integrated with sales data to determine the effectiveness of the ad on an anonymous purchaser, or alternatively on an identifiable consumer such as via further correlation of data provided via a loyalty program. Where the consumer is identified, purchasing data may be tracked over time to determine the effectiveness of advertising and to determine whether additional and/or modified advertising is desired. Such correlations may further provide a wealth of useful data such purchasing patterns based upon consumer demographics; geographic or regional preferences or variations; product placement; ad content, style, timing, etc. For example, reports could be generated indicating store traffic patterns; ad impact; product volume, market share by customer/household/group/store/region, repeat purchases, etc.; consumer purchasing trends (products, dollar amounts, etc.); average size and content of total purchase per time, day, season, etc.; purchases by product category or segment, household, store, region, etc.; consumer survey results; etc.

The data mining capabilities of the media enhanced cart 10 described herein enable access to metrics unique to advertising as used in conjunction with the media enhanced cart 10. The communications features of the cart 10 enable advertisers to remotely download to the ISS 330 (and subsequently to each cart 10, in some embodiments) changes in advertising. Changes in advertising may be made in response to information obtained through data mining, as discussed herein. The media enhancements described herein enable advertisers to test advertisements in various demographic or geographic groups, and see the effectiveness in an immediate fashion, in that new statistical data is continuously being generated and reported. Such advertising may then be modified as needed and/or rolled out on in a large scale campaign.

The media enabled shopping cart system described herein provides a number of advantageous features including the ability to (a) target anonymous consumers with specific product promotions and information at the exact point of purchase and product selection in a retail store aisle; (b) provide specific promotions to loyalty card customers who have opted into the program; (c) provide shopping enhancement tools to the shopper such as store specials, electronic shopping lists, in-store product locator, recipes, nutritional information, and the ability to self scan products to speed checkout; (d) capture cart traffic patterns, cart purchases, interactions with the cart, (e) capture loyalty card consumer shopping and purchasing behavior who have opted into the program, (f) provide precise data mining and analytical reporting, (g) provide retailers with shelf management system to electronically manage product location and pricing in the store, and (h) modify shopper traffic patterns, for example redirecting consumers to low traffic aisles and/or to high margin products.

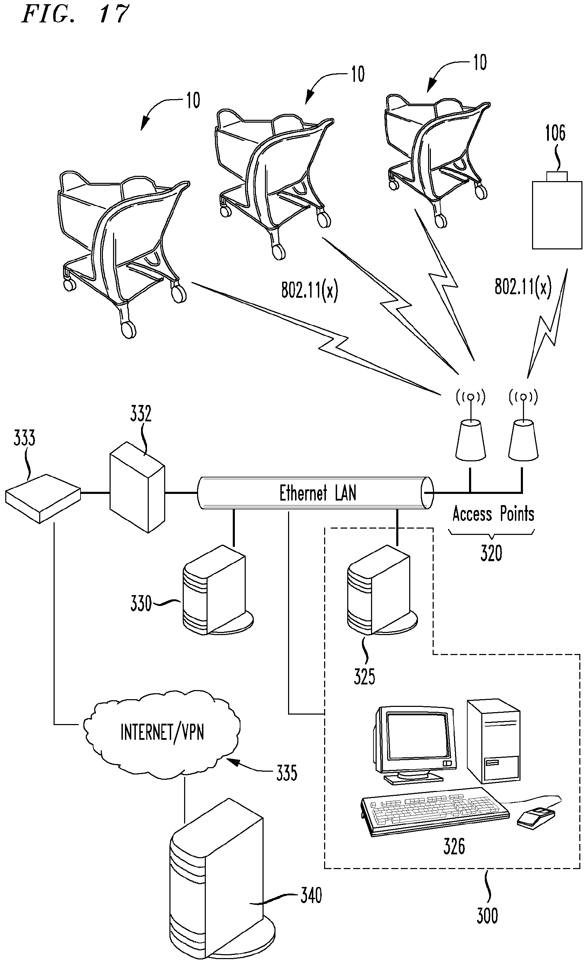

Referring to Figs. 4 and 17, the cart 10 may receive Wireless Local Area Network ("WLAN") signals including video streams in 802.11x format. In an embodiment, a plurality of wireless access points 320 may be located throughout the store to provide network coverage to each cart 10 located in the store, communicating by way of the network transceiver 204 (e.g., a wireless modem) in ECM 200. The network transceiver 204 may be located anywhere on cart 10 and is operably coupled to ECM 200. In an embodiment, the network transceiver is integrated with display 75, or alternatively is integrated with ECM 200. Data may be transferred to and from the cart 10 via the wireless link between the network transceiver 204 and the POS Server 325. Data may be transferred to and from the cart 10 via the wireless link between the network transceiver 204 and the In-Store Server ("ISS") 330. The ISS 330 may store cart 10 data and act as an intermediary between the retailer's store systems and each cart 10. The ISS 330 may also connect over a firewall 332 through a broadband modem/router 333 via a network (in an embodiment, the Internet or VPN 335) to a Host Central Server ("HCS") 340 located at a host company's hosting facility. Advertising data and media may be transferred at regular intervals, such as daily, between each store's ISS 330 and the HCS 340. Data transferred from each store's ISS 330 may be processed by the host company. In an embodiment, both the ISS 330 and HCS 340 utilize standard Microsoft server configurations or equivalents thereof along with supporting database management tools.

In an embodiment, the host company is a parent company for a plurality of retail merchant stores which are networked as described herein. An advertising company or product manufacturer may be granted access to the HCS such that product advertising may be remotely and centrally downloaded to the host company for further dissemination to the various individual stores. Likewise, information such as product information, inventory, advertising effectiveness, etc. may be accessed from the HSC and uploaded by the advertising company or product manufacturer. In this way, an advertising company or product manufacturer may have a centralized access point for the upload and download of advertising or other product data, thereby allowing real-time access and adjustment to business activities based upon the effectiveness of a particular activity. For example, a new advertising campaign can be downloaded remotely to the HCS, disseminated on a large scale or small scale (e.g., a pilot run), and the results of the advertising campaign can be closely monitored in real or about real-time to determine if any adjustments need to be made.

In an embodiment, the operating system software of the ISS 330 may be based primarily on the Windows Server 2003 Operating System, IIS 6.0 utilizing the .NET Compact Framework, COM+. In an embodiment, the operating system software of the POS Server 325 may be based primarily on the Windows Server 2003 Operating System, IIS 6.0 utilizing the .NET Compact Framework, COM+. It should be understood that specific computing equipment and software are disclosed herein as non-limiting examples, and that equivalent or improved components may be substituted as such become available.

In an embodiment, the HCS 340 may comprise one or more of each of the following: a media server, a web server, and a database server. In an embodiment, the one or more media servers may operate on operating system software based primarily on Windows Server 2003 with a DivX Encoder, Media Windows Server, Flash Communications Server, and FTP Service. In an embodiment, the one or more web servers may operate on the operating system software based primarily on the Windows Server 2003 Operating System, IIS 6.0 utilizing the .NET Compact Framework, COM+. In an embodiment, the one or more database servers may operate on the operating system software based primarily on the Windows Server 2003, IIS 6.0 .NET Framework, COM+, SQL Server 2003 (cluster), MS SQLServer 2003, and MS SQLServer 2005. It should be understood that specific computing equipment and software are disclosed herein as non-limiting examples, and that equivalent or improved components may be substituted as such become available.

In an embodiment, various components of the system described herein may be located commonly, for example affixed to or integrated with the cart 10. In an embodiment, various components of the system described herein may be distributed or dispersed over the system as a whole while operably coupled to one another to achieve the functions described herein, for example with one or more components located on the cart and one or more components located on a computing system such as a retailer's POS system, a LAN, a WAN, etc. Likewise, various components, subsystems, and the like as described herein may be implemented in software, hardware, or both and operable coupled within the system as a whole to perform their intended function as will be readily apparent to those skilled in the art.

Methods enabled by the present disclosure include mounting a display on a shopping cart basket as well as performing steps to make or carry out all other attachments, configurations, and embodiments described herein. Further, methods of use of a shopping cart having a basket mounted video display will be readily apparent from the present disclosure. Methods enabled by the present disclosure further include adding or retrofitting media enhancing hardware and software to a shopping cart (e.g., plastic and/or metal), as well as performing steps to make or carry out all other attachments, configurations, and embodiments described herein. Further, methods of use of a media enhanced shopping cart, including data mining, will be readily apparent from the present disclosure.

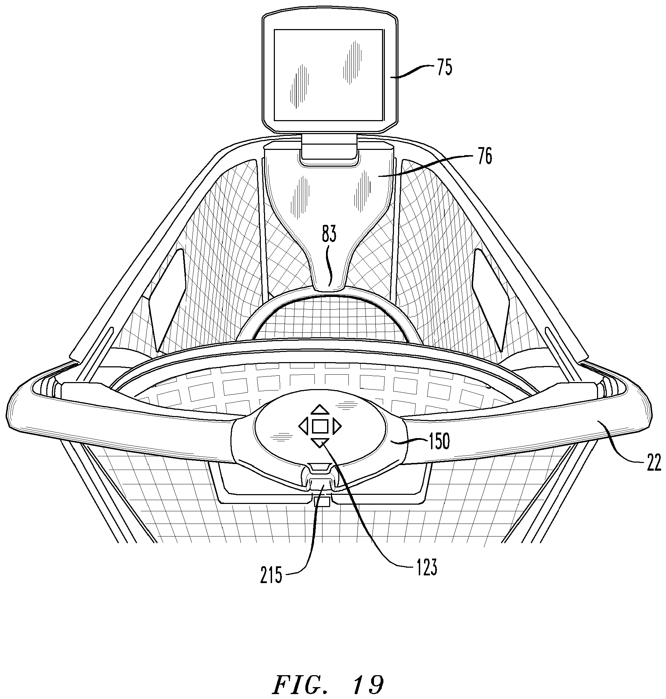

In embodiment as shown in the Figures, a cart 10 is provided having a video display 75 mounted on the nose 45 of the cart 10. The cart 10 is further enhanced by the addition of a ECM 200, a voice activated interface 120, a scanner 215, a five-way navigation device, 123, a nose bumper handle 100, an aisle RFID reader 225 with antennas 226 (looking outward from the cart 10), optionally a basket RFID reader 227 with antennas 228 (looking inward on the contents of the basket 20), and battery charger contact plates 105 or 230, 231. The voice activated interface 120, the five-way navigation device 123, and the scanner 215 are grouped in a pod 150 near the center of the handle 22, as shown in Fig. 19. In an embodiment, the voice activated interface 120 further comprises a push to talk voice activated interface having a hard or soft button on the pod 150 or handle 22 to push to activate the voice recognition feature. The push to talk button may be a dedicated button or may be one or a combination/sequence of buttons, for example on the five-way navigation device 123. The pod 150 and/or handle 22 may further comprise a price check button, which may be a hard or soft button. Likewise, the price check button may be a dedicated button or may be one or a combination/sequence of buttons, for example on the five-way navigation device 123. Pushing the price check button allows a customer to scan an item to determine its price, whereby the item is not added to the basket inventory or shopping total for the customer. It should be understood that any components described herein as residing in or on the handle 22 can likewise be integrated into the pod 150, and in an embodiment all functional components positioned on the handle 22 are incorporated into the pod 150. The aisle RFID reader 225 is integrated with the ECM 200 and antennas 226 are located on either side of the housing 199 of the ECM 200. The basket RFID reader 227 may be part of ECM 200 with antennas 228 located in the base 76. The battery charger contact plates are positioned and configured as shown in Figs. 6, 7, and/or 12.

More specifically, the base 76 is mounted to the inside of front side wall 28 and conforms to the shape of the nose, for example slightly curved as shown. As shown in Fig. 19, the base 76 may extend downward from the front edge 29 along the inside of front side wall 28 and taper downward with the lower edge 83 of the base contacting or about contacting the upper portion of the bottom 21 of basket 20. A base 76 as shown in Fig. 19 forms a conduit for communication cables, power cords, etc. from the ECM 200 and/or battery. Such conduit may further extend under the lower edge of the bottom 21 of basket 20, and may connect with the ECM 200 housing 199. In an embodiment the conduit and/or base 76 may be integral with the basket 20, for example molded in plastic.

The video display 75 is attached to the basket 20 such that the viewable area 78 is above the interior 54 of the basket. Likewise, the video display 75 is attached to the basket 20 such that the viewable area 78 is in a field of vision 84 of a consumer 85 pushing the cart 10 via the handle 22. The video display 75 is foldable, and the hinge 79 is positioned about equal to the front edge 29 of the basket 20. The bottom edge 82 of the screen 77 is positioned about equal to the front edge 29, and in some embodiments may rest upon the front edge 29 to provide additional support to the screen 77. For example, the outer bottom edges 98, 99 may rest on the front or side upper edges for additional support. As shown in Fig. 2, the nose 45 and upper edges may be slightly curved and the bottom edge 82 of screen 77 may be less curved such that the outer bottom edges 98, 99 engage one or more of the upper edges in an unfolded position. In a folded position as shown in Figs. 5 and 6, the screen extends at about a 90 degree angle with respect to the base 76 (or alternatively extends within the plane defining the upper edges of the cart), which clears the nose and exterior of the cart for nesting with a second cart while also keeping the interior 54 of the cart clear such that the rear side wall 31 may swing upward into the interior 54 of the basket to receive the front side wall 28 of a third cart.

While preferred embodiments of the invention have been shown and described, modifications thereof can be made by one skilled in the art. The embodiments described herein are exemplary only, and are not intended to be limiting. Many variations and modifications of the invention disclosed herein are possible and are within the scope of the invention. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). Use of the term "optionally" with respect to any element of a claim is intended to mean that the subject element is required, or alternatively, is not required. Both alternatives are intended to be within the scope of the claim. Use of broader terms such as comprises, includes, having, etc. should be understood to provide support for narrower terms such as consisting of, consisting essentially of, comprised substantially of, etc.

Accordingly, the scope of protection is not limited by the description set out above but is only limited by the claims. The discussion of a reference herein is not an admission that it is prior art to the present invention, especially any reference that may have a publication date after the priority date of this application.

## Claims

1. A media enhanced shopping cart system, comprising:
a shopping cart (10) comprising a frame (30), a handle (22), a base tray (35), a plurality of wheels (37, 38), and a basket (20) comprising a bottom (21), two side walls (23, 24), a nose comprising a front wall (28), and a rear comprising a rear wall (31);
a computing device comprising a central processing unit (201), a memory (202, 203), and a network transceiver (204) configured for wireless communication, wherein the computing device is attached to the shopping cart;
a display component operably coupled to the computing device and having a screen (77) comprising a viewable area (78),
an inventory component for determining an inventory contained by the shopping cart;
a shopping list component for listing one or more products of a consumer shopping list for purchase by a consumer; and
a correlation component for correlating data from the inventory component with the shopping list component, **characterized in that** the system comprises:
a read component for performing a proximity scan; and
a locationing component for determining a location and an orientation of the cart within a store based on the proximity scan.

2. The media enhanced shopping cart system of claim 1, wherein at least one of the inventory contained by the shopping cart determined by the inventory component and the one or more products for purchase listed by the shopping list component is displayed on the display component.

3. The media enhanced shopping cart system of claim 2, further comprising:
an advertising component for displaying one or more advertisements in the display component;
wherein the correlation component is operable to correlate data from the advertising component with the inventory component, the shopping list component, or both to determine what advertisement is displayed.

4. The media enhanced shopping cart system of claims 1, 2, or 3 wherein the correlation component is operable to correlate data from the advertising component with the inventory component, the shopping list component, or both, to capture real-time purchasing behavior of the consumer and provide back end data mining and analytical reporting to advertisers, consumer goods manufacturers, retailers, or a combination thereof.

5. The media enhanced shopping cart system of claim 4 wherein the real-time purchasing behavior of the consumer is collected anonymously.

6. The media enhanced shopping cart system of claim 4 wherein the provision of data mining and analytical reporting comprises providing data concerning an identity of the shopping cart, where in a store the shopping cart has been, length of time the shopping cart spends in specific areas or aisles of the store, products present in the shopping cart for purchase, or a combination thereof.

7. The media enhanced shopping cart system of claim 4 wherein the provision of data mining and analytical reporting comprises providing data concerning consumer statistical data, consumer demographic data, advertisements displayed, length of time the consumer spends with each advertisement displayed, or a combination thereof.

8. The media enhanced shopping cart system of claim 7 wherein the advertisements displayed data comprise consumer campaign name; consumer campaign reference number; advertisements; promotions; description of advertisement; description of promotion; advertisement reference number; promotion reference number; advertisement start time; promotion start/stop time; advertisement trigger variables; promotion trigger variables such as location, time, loyalty, and non-loyalty factors; or a combination thereof.

9. The media enhanced shopping cart system of claim 4 wherein the provision of data mining and analytical reporting comprises providing data concerning store traffic patterns wherein traffic pattern data comprises time, day, period, and duration; and cart usage patterns such as number of carts used, typical user, and functions accessed; or a combination thereof.

10. The media enhanced shopping cart system of claim 9 wherein the functions accessed comprise product locator, price check, shopping list, basket view total, UPC check, and number of basket items, or a combination thereof.

11. The media enhanced shopping cart system of claim 4 wherein the provision of data mining and analytical reporting is used to facilitate the provision of a variety of reports such as shopper segmentation data, consumer campaign studies, or a combination thereof.

12. The media enhanced shopping cart system of claim 11 wherein the shopper segmentation data reports comprise trip size, trip duration, day of week, time of day, or a combination thereof.

13. The media enhanced shopping cart system of claim 11 wherein the consumer campaign studies data reports comprise information concerning products purchased, cross-purchase studies, recipe ideas, basket analysis, cart tracking of shopper, perimeter areas visited, aisles shopped, location data inquiries by shopper, nutrition information inquiries by shopper, product pricing inquires made by shopper, replacement of product entries, out of store coupons used, in store coupons used, or a combination thereof.

14. The media enhanced shopping cart system of claim 4 wherein the data mining and analytical reporting is used to determine an effectiveness of advertising presented via the shopping cart to the consumer at a point of purchase.

15. The media enhanced shopping cart system of claim 14 wherein the determination of the effectiveness of advertising comprises identifying a proximate the point in time when the consumer places a product in the shopping cart is relation to a displayed advertisement.

16. The media enhanced shopping cart system of claim 1 further comprising a voice activated user interface (120) enabling a consumer to issue a voice command to the media enhanced shopping cart, and wherein the display component is mounted to the nose of the cart such that the viewable area is substantially in a field of vision of the consumer pushing the cart.

## Patentansprüche

1. Medienunterstütztes Einkaufswagensystem, aufweisend:
einen Einkaufswagen (10), der einen Rahmen (30), einen Griff (22), eine Bodenschale (35), eine Mehrzahl von Rädern (37, 38) und einen Korb (20) aufweist, der einen Boden (21), zwei Seitenwände (23, 24), eine Vorderseite mit einer vorderen Wand (28) und eine Rückseite mit einer hinteren Wand (31) besitzt;
eine Rechenvorrichtung mit einer zentralen Verarbeitungseinheit (201), einem Speicher (202, 203) und einem Netzwerk-Transceiver (204), der für eine drahtlose Kommunikation ausgebildet ist, wobei die Rechenvorrichtung an dem Einkaufswagen angebracht ist;
eine Anzeigekomponente, die mit der Rechenvorrichtung betriebsmäßig gekoppelt ist und einen Bildschirm (77) mit einem sichtbaren Bereich (78) aufweist,
eine Warenbestandskomponente zum Bestimmen eines in dem Einkaufswagen enthaltenen Warenbestands;
eine Einkaufslistenkomponente zum Auflisten von einem oder mehreren Produkten einer Verbraucher-Einkaufsliste zum Kauf durch einen Verbraucher; und
eine Korrelationskomponente zum Korrelieren von Daten von der Warenbestandskomponente mit der Einkaufslistenkomponente,
**dadurch gekennzeichnet, dass** das System aufweist:
eine Lesekomponente zum Ausführen eines Nahbereich-Scans; und
eine Positionsbestimmungskomponente zum Bestimmen einer Position und einer Orientierung des Wagens in einem Geschäft auf der Basis des Nahbereich-Scans.

2. Medienunterstütztes Einkaufswagensystem nach Anspruch 1,
wobei mindestens eines von dem Warenbestand, der in dem Einkaufswagen enthalten ist und durch die Warenbestandskomponente bestimmt wird,
und dem einen oder mehreren Produkten zum Kauf, die von der Einkaufslistenkomponente aufgelistet sind, auf der Anzeigekomponente angezeigt wird.

3. Medienunterstütztes Einkaufswagensystem nach Anspruch 2, weiterhin aufweisend:
eine Werbekomponente zum Anzeigen einer oder mehrerer Werbungen in der Anzeigekomponente;
wobei die Korrelationskomponente betriebsmäßig dazu ausgebildet ist, Daten von der Werbekomponente mit der Warenbestandskomponente, der Einkaufslistenkomponente oder beiden zu korrelieren, um zu bestimmen, was für Werbung angezeigt wird.

4. Medienunterstütztes Einkaufswagensystem nach Anspruch 1, 2 oder 3, wobei die Korrelationskomponente betriebsmäßig dazu ausgebildet ist, Daten von der Werbekomponente mit der Warenbestandskomponente, der Einkaufslistenkomponente oder beiden zu korrelieren, um das Echtzeit-Einkaufsverhalten des Verbrauchers zu erfassen sowie zur Back-End-Datengewinnung und Analyseberichterstattung für Werbetreibende, Konsumgüterhersteller, Einzelhändler oder eine Kombination davon.

5. Medienunterstütztes Einkaufswagensystem nach Anspruch 4,
wobei das Echtzeit-Einkaufsverhalten des Verbrauchers anonym erfasst wird.

6. Medienunterstütztes Einkaufswagensystem nach Anspruch 4,
wobei die Datengewinnung und Analyseberichterstattung das Bereitstellen von Daten bezüglich einer Identität des Einkaufswagens, wo sich der Einkaufswagen in einem Geschäft befunden hat, der Zeitdauer, die sich der Einkaufswagen in bestimmten Bereichen oder Gängen des Geschäfts befindet, in dem Einkaufswagen für den Einkauf befindlichen Produkten oder eine Kombination davon umfassen.

7. Medienunterstütztes Einkaufswagensystem nach Anspruch 4,
wobei die Datengewinnung und Analyseberichterstattung das Bereitstellen von Daten bezüglich statistischer Verbraucherdaten, demographischer Verbraucherdaten, angezeigter Werbung, der Zeitdauer, die der Verbraucher mit jeder angezeigten Werbung verbringt, oder eine Kombination davon umfassen.

8. Medienunterstütztes Einkaufswagensystem nach Anspruch 7,
wobei die angezeigten Werbungen umfassen: den Namen einer Verbraucherkampagne; Referenznummer der Verbraucherkampagne; Werbungen; Werbeaktionen; Beschreibung der Werbung; Beschreibung der Werbeaktion; Werbungs-Referenznummer; Werbeaktions-Referenznummer; Startzeit der Werbung; Start-/Endzeit der Werbeaktion; Werbungs-Auslöservariablen; Werbeaktions-Auslöservariablen wie Standort, Zeit, Loyalitäts- und Nicht-Loyalitätsfaktoren; oder eine Kombination davon.

9. Medienunterstütztes Einkaufswagensystem nach Anspruch 4,
wobei die Datengewinnung und Analyseberichterstattung das Bereitstellen von Daten bezüglich Ladenverkehrsmustern, wobei Verkehrsmusterdaten Uhrzeit, Tag, Zeitraum und Dauer umfassen; und Einkaufswagen-Nutzungsmustern wie Anzahl der verwendeten Einkaufswagen, typischer Benutzer und aufgerufene Funktionen; oder eine Kombination davon umfassen.

10. Medienunterstütztes Einkaufswagensystem nach Anspruch 9,
wobei die aufgerufenen Funktionen eine Produktlokalisierung, eine Preisprüfung, eine Einkaufsliste, eine Einkaufswagen-Gesamtansicht, eine UPC-Prüfung und eine Anzahl von Einkaufswagen-Artikeln oder eine Kombination davon umfassen.

11. Medienunterstütztes Einkaufswagensystem nach Anspruch 4,
wobei die Datengewinnung und Analyseberichterstattung verwendet werden, um die Bereitstellung von verschiedenen Berichten zu erleichtern, wie z.B. Käufer-Segmentierungsdaten, Verbraucherkampagnenstudien oder eine Kombination davon.

12. Medienunterstütztes Einkaufswagensystem nach Anspruch 11,
wobei die Käufer-Segmentierungsdatenberichte einen Besuchsumfang, eine Besuchsdauer, einen Wochentag, eine Tageszeit oder eine Kombination davon umfassen.

13. Medienunterstütztes Einkaufswagensystem nach Anspruch 11,
wobei die Verbraucherkampagnenstudien-Datenberichte Information über gekaufte Produkte, Quereinkaufsstudien, Rezeptideen, Einkaufskorbanalyse, Einkaufswagenverfolgung des Käufers, besuchte Umgebungsbereiche, besuchte Gänge, Standortdatenabfragen durch den Käufer, Nährwertinformationsabfragen durch den Käufer, Produktpreisabfragen durch den Käufer, Nachfüllung von Produkteingängen, verwendete geschäftsexterne Coupons, verwendete geschäftsinterne Coupons oder eine Kombination davon umfassen.

14. Medienunterstütztes Einkaufswagensystem nach Anspruch 4,
wobei die Datengewinnung und Analyseberichterstattung verwendet werden, um die Wirksamkeit von Werbung zu bestimmen, die dem Verbraucher an einem Einkaufsort über den Einkaufswagen präsentiert wird.

15. Medienunterstütztes Einkaufswagensystem nach Anspruch 14,
wobei die Bestimmung der Wirksamkeit von Werbung das Identifizieren eines ungefähren Zeitpunkts, zu dem der Verbraucher ein Produkt in den Einkaufswagen legt, in Relation zu einer angezeigten Werbung umfasst.

16. Medienunterstütztes Einkaufswagensystem nach Anspruch 1,
weiterhin aufweisend eine sprachaktivierte Benutzerschnittstelle (120), die es einem Verbraucher ermöglicht, einen Sprachbefehl an den medienunterstützten Einkaufswagen zu erteilen, und wobei die Anzeigekomponente derart an der Vorderseite des Wagens angebracht ist, dass der sichtbare Bereich im Wesentlichen im Blickfeld des Verbrauchers angeordnet ist, der den Einkaufswagen schiebt.

## Revendications

1. Un système de chariot de supermarché amélioré par les médias, qui comprend :
un chariot de supermarché (10) qui comprend une structure (30), une poignée (22), un plateau de base (35), un certain nombre de roues (37, 38) et un panier (20) qui comprend une base (21), deux parois latérales (23, 24), un nez qui comprend une paroi avant (28) et un côté arrière qui comprend une paroi arrière (31) ;
un dispositif de calcul qui comprend une unité de traitement centrale (201), une mémoire (202, 203) et un émetteur-récepteur de réseau (204) configuré pour une mise en communication sans fil, dans lequel le dispositif de calcul est fixé au chariot de supermarché ;
un composant faisant office d'affichage qui est couplé de manière opérationnelle au dispositif de calcul et qui possède un écran (77) qui comprend une zone visible (78) ;
un composant faisant office d'inventaire destiné à déterminer un inventaire que contient le chariot de supermarché ;
un composant faisant office de liste de courses pour établir la liste d'un ou de plusieurs produits d'une liste de courses d'un consommateur à des fins d'achat par un consommateur ; et
un composant qui établit une corrélation pour établir une corrélation entre des données émanant du composant faisant office d'inventaire et le composant faisant office de liste de courses, **caractérisé en ce que** le système comprend :
un composant qui fournit une lecture pour la mise en oeuvre d'un balayage de proximité ; et
un composant qui fournit une localisation pour la détermination d'un endroit et d'une orientation du chariot au sein d'un magasin en se basant sur le balayage de proximité.

2. Le système de chariot de supermarché amélioré par les médias selon la revendication 1, dans lequel au moins un élément parmi l'inventaire du contenu du chariot de supermarché déterminé par le composant faisant office d'inventaire et lesdits un ou plusieurs produits à acheter qui sont répertoriés dans la liste par le composant faisant office de liste de courses est affiché sur le composant faisant office d'affichage.

3. Le système de chariot de supermarché amélioré par les médias selon la revendication 2, qui comprend en outre :
un composant qui fournit une annonce publicitaire destiné à afficher une ou plusieurs annonce publicitaires dans le composant faisant office d'affichage ;
dans lequel le composant qui établit une corrélation peut être activé pour établir une corrélation entre des données qui émanent du composant faisant office d'annonce publicitaire et le composant faisant office d'inventaire, le composant faisant office de liste de courses ou les deux pour déterminer quelle annonce publicitaire doit être affichée.

4. Le système de chariot de supermarché amélioré par les médias selon la revendication 1, 2 ou 3, dans lequel le composant qui établit une corrélation peut être activée pour établir une corrélation entre des données qui émanent du composant faisant office d'annonce publicitaire et le composant faisant office d'inventaire, le composant faisant office de liste d'achat ou les deux dans le but de capter le comportement d'achat du consommateur en temps réel et de fournir une extraction des données finales en retour et un compte rendu analytique à des annonceurs publicitaires, à des fabricants de produits de consommation, à des détaillants, ou une de leurs combinaisons.

5. Le système de chariot de supermarché amélioré par les médias selon la revendication 4, dans lequel le comportement d'achat du consommateur en temps réel est recueilli d'une manière anonyme.

6. Le système de chariot de supermarché amélioré par les médias selon la revendication 4, dans lequel le fait de fournir une extraction des données et un compte rendu analytique comprend le fait de fournir des données qui concernent une identité du chariot de supermarché, à quel endroit le chariot de supermarché s'est rendu à l'intérieur du magasin, le temps passé par le chariot de supermarché dans des zones ou des ailes spécifiques du magasin, les produits présents dans le chariot de supermarché destinés à l'achat, ou une de leurs combinaisons.

7. Le système de chariot de supermarché amélioré par les médias selon la revendication 4, dans lequel le fait de fournir une extraction des données et un compte rendu analytique comprend le fait de fournir des données qui concernent des données statistiques en lien avec le consommateur, des données démographiques en lien avec le consommateur, des annonces publicitaires affichées, le temps que passe le consommateur en lien avec chaque annonce publicitaire affichée, ou une de leurs combinaisons.

8. Le système de chariot de supermarché amélioré par les médias selon la revendication 7, dans lequel les données les données affichées en lien avec les annonces publicitaires comprennent le nom d'une campagne grand public ; le numéro de référence d'une campagne grand public ; des annonces publicitaires ; des promotions ; une description de l'annonce publicitaire; une description de la promotion ; un numéro de référence de l'annonce publicitaire ; un numéro de référence de la promotion ; le début de l'annonce publicitaire ; le début/la fin de la promotion ; des variables qui constituent un incitant pour la promotion, telles des facteurs spatiaux, temporels, de la fidélité et de non fidélité ; ou une de leurs combinaisons.

9. Le système de chariot de supermarché amélioré par les médias selon la revendication 4, dans lequel le fait de fournir une extraction des données et un compte rendu analytique comprend le fait de fournir des données qui concernent des modèles de circulation dans le magasin ; dans lequel les données liées au modèle de circulation comprennent : le moment, le jour, l'heure et la durée ; et les modèles d'utilisation du chariot tel que le nombre de chariots utilisés, l'utilisateur typique et les fonctions choisies ; ou une de leurs combinaisons.

10. Le système de chariot de supermarché amélioré par les médias selon la revendication 9, dans lequel les fonctions choisies comprennent le localisateur de produit, la vérification du prix, la liste de courses, la vue du panier dans son ensemble, la vérification du code universel des produits, ainsi que le nombre de pièces du panier, ou une de leurs combinaisons.

11. Le système de chariot de supermarché amélioré par les médias selon la revendication 4, dans lequel le fait de fournir une extraction des données et un compte rendu analytique est utilisé pour faciliter la fourniture de divers rapports tels que des données de segmentation d'acheteurs, des études qui concernent des campagnes qui s'adressent au consommateur, ou une de leurs combinaisons.

12. Le système de chariot de supermarché amélioré par les médias selon la revendication 11, dans lequel les rapports qui concernent les données de segmentation d'acheteurs comprennent la taille du déplacement, la durée du déplacement, le jour de la semaine, le moment de la journée, ou une de leurs combinaisons.

13. Le système de chariot de supermarché amélioré par les médias selon la revendication 11, dans lequel les rapports qui concernent les données d'études de campagnes comprennent des informations qui concernent des produits achetés, des études d'achats croisés, des idées de recettes, l'analyse du panier, le suivi du chariot de l'acheteur, les zones visitées dans le périmètre, les ailes dans lesquelles les achats ont lieu, des enquêtes réalisées par l'acheteur concernant des données de localisation, des enquêtes menées par l'acheteur concernant des informations d'alimentation, des enquêtes réalisées par l'acheteur concernant l'évaluation des produits, des entrées de remplacement de produits, des coupons externes au magasin qui ont été utilisés, des coupons internes au magasin qui ont été utilisés, ou une de leurs combinaisons.

14. Le système de chariot de supermarché amélioré par les médias selon la revendication 4, dans lequel le fait de fournir une extraction des données et un compte rendu analytique est utilisé pour déterminer une efficacité d'une annonce publicitaire présentée par l'intermédiaire du chariot de supermarché au consommateur à un point de vente.

15. Le système de chariot de supermarché amélioré par les médias selon la revendication 14, dans lequel la détermination de l'efficacité d'une annonce publicitaire comprend le fait d'identifier approximativement le moment qui correspond au placement d'un produit dans le chariot de supermarché par le consommateur par rapport à une annonce publicitaire affichée.

16. Le système de chariot de supermarché amélioré par les médias selon la revendication 1, qui comprend en outre une interface utilisateur (120) activée par la voie qui permet à un utilisateur d'émettre une commande vocale en direction du chariot de supermarché amélioré par les médias ; et dans lequel le composant faisant office d'affichage est monté sur le nez du chariot d'une manière telle que la zone visible se trouve essentiellement dans le champ de vision du consommateur qui pousse le chariot.
